(19) Europäisches Patentamt
European Patent Office
Office européen des brevets

(11) Veröffentlichungsnummer: **0 272 665 B1**

# (12) EUROPÄISCHE PATENTSCHRIFT

(45) Veröffentlichungstag der Patentschrift: **02.02.94**

(51) Int. Cl.$^5$: **C08G 71/04**, C09D 175/12, C09D 5/44

(21) Anmeldenummer: **87118925.4**

(22) Anmeldetag: **21.12.87**

Die Akte enthält technische Angaben, die nach dem Eingang der Anmeldung eingereicht wurden und die nicht in dieser Patentschrift enthalten sind.

## (54) Aminourethane, Verfahren zu ihrer Herstellung und ihre Verwendung.

(30) Priorität: **24.12.86 DE 3644370**

(43) Veröffentlichungstag der Anmeldung:
**29.06.88 Patentblatt 88/26**

(45) Bekanntmachung des Hinweises auf die Patenterteilung:
**02.02.94 Patentblatt 94/05**

(84) Benannte Vertragsstaaten:
**AT BE CH DE ES FR GB GR IT LI NL SE**

(56) Entgegenhaltungen:
**EP-A- 0 119 769**
**EP-A- 0 134 970**
**EP-A- 0 162 613**
**EP-A- 0 234 395**
**DE-A- 3 311 517**

**CHEMICAL ABSTRACTS, Vol. 98, no. 16, 18 April 1983. page 80, column 1, abstract no. 127745a, Columbus, Ohio, US**

(73) Patentinhaber: **HOECHST AKTIENGESELL-SCHAFT**

**D-65926 Frankfurt(DE)**

(72) Erfinder: **Hönel, Michael, Dr.**
**Wallstrasse 24**
**D-6500 Mainz(DE)**
Erfinder: **Ziegler, Peter, Dr.**
**Essenheimer Strasse 87**
**D-6500 Mainz(DE)**
Erfinder: **Walz, Gerd, Dr.**
**Pfingstbornstrasse 99**
**D-6200 Wiesbaden(DE)**
Erfinder: **Lenz, Rüdiger, Dr.**
**Geisenheimer Strasse 88**
**D-6000 Frankfurt am Main 71(DE)**
Erfinder: **Foedde, Hartmut**
**Adolfstrasse 12**
**D-6204 Taunusstein(DE)**
Erfinder: **Brindöpke, Gerhard, Dr.**
**Loreleistrasse 18**
**D-6230 Frankfurt am Main 80(DE)**

EP 0 272 665 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**INT. POLYMER SCIENCE & TECHNOLOGY, vol. 8, no. 5, 1981, pages 68-70, Shawbury, Shrewbury, GB ; L.A. RAPPOPORT et al. :"Polyurethane elastomers obtained without the use of diisocyanates"**

**CHEMICAL ABSTRACTS, vol. 84, no. 4, 26 January 1976, page 46, column 2, abstract no. 18323b, Columbus, Ohio, US**

## Beschreibung

Die Erfindung bezieht sich auf härtbare, wasserdispergierbare Bindemittel auf Basis von Umsetzungsprodukten aus modifizierten 2-Oxo-1,3-dioxolanen und neuen Polyaminen auf der Basis von mehrfach Aminogruppen enthaltenden Derivaten des 1,3-bissubstituierten 2-Propanols, die mindestens eine primäre Aminogruppe und zusätzlich weitere N-basische Gruppierungen enthalten, wobei die Bindemittel insbesondere aus wäßriger Phase bei der kathodischen Elektrotauchlackierung abgeschieden werden können, Verfahren zu ihrer Herstellung und ihre Verwendung für härtbare, kataphoretisch abscheidbare Beschichtungen und Lacke auf Oberflächen fester Substrate, insbesondere von metallischen Formkörpern, vorzugsweise von Stahlblech und von zinkphosphatiertem Stahl.

In der DE-PS 22 52 536 werden selbstvernetzende Bindemittel für die kathodische Elektrotauchlackierung beschrieben, die aus einem Polyurethanharz bestehen, das durch Umsetzung von Epoxid-Amin-Addukten (hergestellt aus einer epoxygruppenhaltigen organischen Verbindung mit einem sekundären Amin) mit einem teilweise blockierten Polyisocyanat erhalten worden ist. Als Verkappungsmittel werden vorzugsweise primäre aliphatische Alkohole eingesetzt. Die Bindemittel müssen jedoch im allgemeinen bei relative hohen Einbrenntemperaturen, z.B. 180 °C, gehärtet werden. Außerdem liegt nach dem Einbrennen in der Lackschicht immer mindestens eine tertiäre Aminogruppe pro Molekül vor, die die Filmeigenschaften negativ beeinflussen kann. Daher können derartige Produkte nicht generell bei allen gewünschten Lackformulierungen eingesetzt werden.

Kathodische Elektrotauchlacke werden auch in der DE-OS 33 11 517 und der DE-OS 33 11 518 beschrieben, bei denen Polyamine mit mindestens zwei primären Aminogruppen mit Epoxidharzen zu Epoxid-Amin-Addukten umgesetzt und die erhaltenen Reaktionsprodukte mit Alkylencarbonat unter Bildung von β-Hydroxyurethanen zur Reaktion gebracht werden. Die erhaltenen β-Hydroxyurethane benötigen im allgemeinen zwar niedrigere Härtungstemperaturen als die vorstehend beschriebenen Bindemittel, jedoch ist die Einführung der primären Aminogruppen umständlich und benötigt zusätzliche Verfahrensschritte.

In der europäischen Patentanmeldung 0 119 769 sind verschiedene Möglichkeiten angeführt, tertiäre Aminogruppen in das Grundgerüst eines Harzes einzuführen. Neben der Umsetzung von Epoxyverbindungen mit Aminkomponenten nach verschiedenen Verfahren werden auch solche von α,β-ungesättigte Carboxylgruppen enthaltenden Harzen oder Carboxylgruppen enthaltenden Harzen mit Aminokomponenten beschrieben. Die erhaltenen Verbindungen werden dann mit Alkylencarbonaten zu β-Hydroxyurethangruppen enthaltenden Bindemitteln umgesetzt. Bei der Härtung werden unter Abspaltung von Diolen, die physiologisch nicht unbedenklich sind, Urethan- oder Harnstoffbindungen gebildet. Ein Nachteil der Umsetzung von Epoxidverbindungen mit Ketiminen ist die Einhaltung von wasserfreien Bedingungen bei der Reaktion, um eine vorzeitige Hydrolyse zu vermeiden.

Es wurde nun überraschenderweise gefunden, daß mit Ausgangsverbindungen auf der Basis von mehrfach Aminogruppen enthaltenden Derivaten von 1,3-bissubstituiertem Propanol-2 durch Umsetzung mit modifizierten cyclischen Carbonaten härtbare, insbesondere wasserdispergierbare und kataphoretisch abscheidbare Bindemittel vom Typ der Aminourethane erhalten werden können, die unerwartet vorteilhafte Eigenschaften besitzen.

Die Erfindung betrifft daher Aminourethane, die erhalten werden durch Umsetzung von

(A) Polyaminen der allgemeinen Formel(I) und/oder (II)

$$H_2N-R-[NH-CH_2-\underset{OH}{\underset{|}{CH}}-CH_2-NH-R]_p-NH_2 \qquad (I)$$

$$D-CH_2-\underset{OH}{\underset{|}{CH}}-CH_2-NH-R-NH_2 \qquad (II)$$

in denen bedeuten:

R =

$$-\!\!\left[(CR^1R^2)_n Z^1 - (CR^3R^4)_m Z^2 - (CR^5R^6)_l\right]_k ,$$

$Z^1,Z^2$ = O, S, NH, N-Alkyl mit bis zu 8 C-Atomen, N-Phenyl, N-Mono-, -Di- oder -Trialkylphenyl mit 1 bis 4 C-Atomen pro Alkylgruppe, einen zweiwertigen Phenylenrest, der gegebenenfalls substituiert ist, und/oder eine chemische Bindung,

$R^1$ bis $R^6$ = H, $CH_3$, $C_2H_5$, Phenyl oder Mono-, Di- oder Trialkylphenyl mit 1 bis 4 C-Atomen pro Alkylgruppe,

n,m,l = Null bis 12, vorzugsweise Null bis 6, wobei die Summe aus n + m + l ≧2, vorzugsweis ≧4 ist,

k = 1 bis 6, vorzugsweise 1 bis 3;

p = 1 bis 5, vorzugsweise 1 oder 2;

D =

$$(HO)_j A-\underset{\displaystyle B}{\underset{|}{N}}- ,$$

worin A für einen aliphatischen Rest mit 2 bis 5 C-Atomen, j für 1 bis 5, vorzugsweise 1 bis 3, und B für H, $(C_1-C_4)$-Alkyl oder $(HO)_jA$- stehen,

$$=G-\underset{\displaystyle E}{\underset{|}{N}}- ,$$

worin G für $(C_1-C_{18})$-Alkyl, vorzugsweise $(C_1-C_6)$-Alkyl, linear oder verzweigt, $(C_5-C_9)$-Cycloalkyl, das durch $(C_1-C_3)$-Alkylgruppen substituiert sein kann und E für H oder G stehen,

oder D für $(C_2-C_8)$-Alkoxy, vorzugsweise $(C_2-C_6)$-Alkoxy, linear oder verzweigt, oder für $(C_5-C_{15})$-Acyloxy, vorzugsweise $(C_{10}-C_{15})$Acyloxy, steht,

(B) gegebenenfalls weiteren Polyaminen,

(C) mit Verbindungen, die im Mittel mindestens zwei endständige 2-Oxo-1,3-dioxolan-Gruppen pro Molekül enthalten, sowie

(D) gegebenenfalls monofunktionell reagierenden Verbindungen als Kettenstopper.

Im Vergleich zum Stand der Technik werden die erfindungsgemäßen Aminourethane, die vor allem als Bindemittel in Lacken einsetzbar sind, durch einen grundsätzlich anderen Aufbau ohne den Einsatz von Isocyanaten erhalten. Es werden dazu primäre Aminogruppen und weitere N-basische Gruppen enthaltende Ausgangsverbindungen über ihre primären Aminogruppen mit modifizierten, cyclischen Carbonaten umgesetzt, so daß stets basische Aminogruppen in den entstandenen Umsetzungsprodukten enthalten sind. Diese basischen Gruppen können unter Salzbildung zur Dispergierung der Produkte dienen. Die Härtung von in Wasser dispergierten und elektrisch abgeschiedenen erfindungsgemäßen Aminourethanen kann beispielsweise durch Bildung von Urethan- oder Harnstoffbindungen bewerkstelligt werden. Die erfindungsgemäßen Aminourethane können durch Einbau von verkappten Isocyanatgruppen selbsthärtend sein oder sie können mit zugesetzten bekannten Härtern über die in den Bindemitteln vorhandenen funktionellen Gruppen, wie beispielsweise primäre oder sekundäre Aminogruppen oder Hydroxylgruppen, gehärtet werden.

Die erfindungsgemäß eingesetzten Polyamine der Formel I werden hergestellt, indem man bis-primäre Amine der Formel

$H_2N-R-NH_2$

in der R die Bedeutung gemäß Anspruch 1 hat, mit einem Propanderivat der Formel

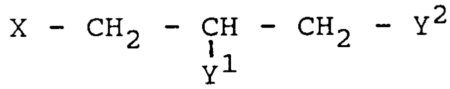

worin

- X = Halogen, vorzugsweise Cl, oder den p-Toluolsulfonatrest, und
- $Y^1$, $Y^2$ = gemeinsam eine Epoxyfunktion bilden, oder voneinander verschieden sind und $Y^1$ für OH und $Y^2$ für X stehen, bedeutet,

umsetzt. Die Verbindungen der Formel II können erhalten werden indem man Amine der Formel

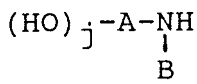 oder 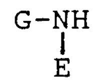

zunächst mit einem Propanderivat der Formel

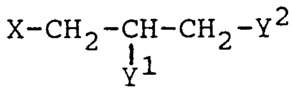

und anschließend mit einem bis-primären Amin der Formel

$H_2N\text{-}R\text{-}NH_2$

umsetzt.

Verbindungen der Formel II, worin D für Alkoxy oder Acyloxy steht, können erhalten werden durch Umsetzung von bis-primären Aminen der Formel

$H_2N\text{-}R\text{-}NH_2$

mit einem Propanderivat der Formel

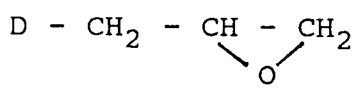

Bevorzugte Polyamine der obigen Formeln (I) und (II) sind solche, bei denen bezüglich R bedeuten:

- $Z^1$,$Z_2$ = O, NH, N-($C_1$-$C_6$)Alkyl, oder eine chemische Bindung;
- $R^1$ bis $R^6$ = H, $CH_3$ oder $C_2H_5$;
- n,m,l = Null bis 3;
- k = 1 bis 3, insbesondere 1
- p = 1 oder 2.

Insbesondere ist R ein zweiwertiger, vorzugsweise nichtaromatischer Kohlenwasserstoffrest mit 1 bis 18 C-Atomen, vorzugsweise ein verzweigter oder unverzweigter Alkylenrest mit 2 bis 10 C-Atomen, insbesondere mit 2 bis 6 C-Atomen, der durch NH-Gruppen unterbrochen sein kann, oder ein Cycloalkylenrest mit 5 bis 12 C-Atomen, vorzugsweise 6 bis 10 C-Atomen, oder ein Aralkylenrest mit 7 bis 12 C-Atomen, vorzugsweise 8 bis 10 C-Atomen.

Als gegebenenfalls mit einzusetzende Komponente (B) kommen Polyamine in Frage, die vorzugsweise diprimär sind und gegebenenfalls noch weitere basische Gruppen, wie tertiäre Aminogruppen oder zusätzlich auch Amidgruppen enthalten können. Beispiele für derartige Polyamine (B) sind solche der Formel (III)

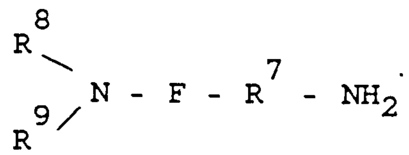

(III)

in der bedeuten:

$R^7$ = zweiwertiger Kohlenwasserstoffrest, vorzugsweise ein geradkettiger oder verzweigter Alkylenrest mit 2 bis 18 C-Atomen, der gegebenenfalls inerte Gruppen tragen kann,

$R^8$, $R^9$ = gleich oder verschieden, Wasserstoff, Alkyl mit 1 bis 8 C-Atomen oder Hydroxyalkyl mit 1 bis 8 C-Atomen im Alkylrest, wobei $R^8$ und $R^9$ auch eine cyclische Ringverbindung ergeben können,

F = chemische Bindung oder $-(R^7-NH)_r-R^7-NH-$ , worin r Null oder eine ganze Zahl von 1 bis 6 ist und $R^7$ die vorstehende Bedeutung hat.

Konkret seien als Vertreter hierfür genannt: Ethylendiamin, Propylendiamin, 2-Methylpentamethylendiamin, Hexamethylendiamin, Octamethylendiamin, Triacetondiamin, Dioxadecandiamin, Dioxadodecandiamin und höhere Homologe, cycloaliphatische Diamine wie 1,4-Cyclohexandiamin; 4,4'-Methylen-bis-cyclohexylamin, 4,4'-Iso-propylen-bis-cyclohexylamin,Isophorondiamin, m-Xylylendiamin, N-Methylethylendiamin, Hydroxyethylaminoethylamin, -propylamin, N-Aminoethylpiperazin, N,N-diethylethylendiamin, -propylendiamin, N,N-Dihydroxyethylethylendiamin, Diethylentriamin, Dipropylentriamin, Bishexamethylentriamin, Triethylentetramin, Tetraethylenpentamin, Pentaethylenhexamin, Heptaethylenoctamin und ähnliche.

Als Komponenten (C) kommen beliebige Materialien in Frage, sofern sie im Mittel mindestens zwei oder drei 2-Oxo-1,3-dioxolan-Gruppen pro Molekül enthalten und keine anderen funktionellen Gruppen aufweisen, welche die Reaktion mit den Komponenten (A) und gegebenenfalls (B) stören könnten. Das Molekulargewicht $M_n$ (Zahlenmittel, bestimmt mit der Gelchromatographie, PS-Standard) sollte im allgemeinen zwischen 100 und 10 000, vorzugsweise zwischen 150 und 3500 liegen und das 2-Oxo-1,3-dioxolan-Äquivalentgewicht zwischen 100 und 1250. Die 2-Oxo-1,3-dioxolan-Gruppen sind vorzugsweise endständig, jedoch können in manchen Fällen auch Verbindungen als Komponente (C) eingesetzt werden, welche diese Gruppen in statistischer Verteilung über die Molekülkette enthalten und die durch Copolymerisation unter Verwendung von olefinisch ungesättigten, diese 2-Oxo-1,3-dioxolan-Gruppe enthaltenden Verbindungen hergestellt werden können. Ein derartiges Herstellungsverfahren ist beispielsweise in der DE-Patentanmeldung P 36 44 373.5 beschrieben.

Vorzugsweise besitzt die Komponente (C) die allgemeine Formel (IV)

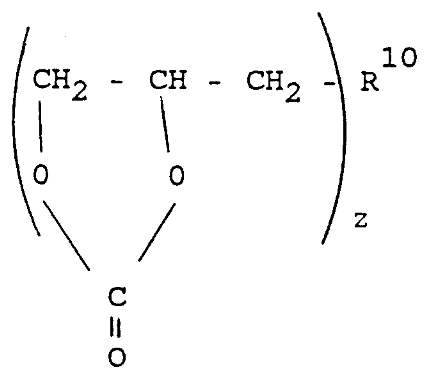

(IV)

in der bedeuten

$R^{10}$ = z-wertiger Rest eines Polyethers, Polyetherpolyols, Polyesters, Polyesterpolyols, der gegebenenfalls auch $(NR^2)$-Gruppen enthalten kann, wobei $R^2$ für Wasserstoff, Alkyl mit 1 bis 8 C-Atomen oder Hydroxyalkyl mit 1 bis 8 C-Atomen steht, oder
einen z-wertigen Kohlenwasserstoffrest, vorzugsweise Alkylenrest mit 2 bis 18 C-Atomen, der gegebenenfalls inerte Gruppen tragen kann, oder
einen z-wertigen Poly(sek.)aminrest oder
den z-wertigen Rest eines Umsetzungsproduktes einer Epoxy-Carbonat-Verbindung mit Polyaminen, Polyolen, Polycaprolactonpolyolen, OH-gruppenhaltigen Polyestern, Polyethern, Polyglykolen, hydroxy-, carboxyl- und aminofunktionellen Polymerölen mit mittleren Molekulargewichten von 800 bis 10 000, Polycarbonsäuren, hydroxy- oder aminofunktionellen Polytetrahydrofuranen und Reaktionsprodukten von Polyaminen mit Glycidylestern von $\alpha,\alpha$-Dialkylalkanmonocarbonsäuren der Summenformel $C_{12-14}H_{22-26}O_3$ oder mit ®Versaticsäureglycidylester,

z = 2 bis 5.

Der Index z steht in dieser Formel (VI) bevorzugt für 2 oder 3, insbesondere für 2.

Derartige Komponenten (C) sind beispielsweise in den DE-Patentanmeldungen P 36 24 454.6 und P 36 44 370.0 beschrieben, auf die hier Bezug genommen wird.

Die Verbindungen gemäß Formel (IV), wie auch die nachfolgend beschriebenen Verbindungen (V) und (VI), können durch Anlagerung von $CO_2$ an die entsprechenden epoxidgruppenhaltigen Verbindungen hergestellt werden. Derartige Verfahren sind beispielsweise in der PCT(WO)-Patentanmeldung 84/03 701 sowie in den DE-Patentanmeldungen P 35 29 263.6 und P 36 00 602.5 beschrieben. Auf deren Offenbarung, einschließlich der bevorzugten Ausführungsformen, wird hier Bezug genommen. Geeignete Ausgangspolyepoxide sind beispielsweise in Wagner/Sarx, "Lackkunstharze", Carl Hansa Verlag (1971), S. 174 ff sowie in der EP-Offenlegungsschrift 60 506 aufgeführt, auf die hier gleichfalls Bezug genommen werden.

Bevorzugte Ausgangsstoffe zur Herstellung der cyclischen Carbonate (IV) und der gemischten Epoxyd-Carbonat-Verbindungen (V) sind die Polyglycidylether von Polyphenolen z.B. Bisphenol A. Die Glycidyläther erhält man beispielsweise durch Umsetzung eines Polyphenols mit Epichlorhydrin. Polyphenole sind beispielsweise Bis-(4-hydroxyphenyl)-2,2-propan, Bis(4-hydroxyphenyl)-methan, 4,4'-Dihydroxybenzophenon, Bis(4-hydroxyphenyl)-1,1'-ether, Bis(4-hydroxyphenyl)-1,1'-isobutan, Bis(2-hydroxynaphthyl)-methan, 1,5-Dihydroxynaphthalin. Vorzugsweise sind zusätzlich freie Hydroxylgruppen zu den Epoxydgruppen im Polyglycidylether des Polyphenols enthalten.

In manchen Fällen kann es zweckmäßig sein, als Komponente (C) flexibilisierte Verbindungen einzusetzen. Hierbei geht man zur Herstellung der Komponente (C) beispielsweise von gemischten Epoxyd-Carbonaten aus, wie solchen der allgemeinen Formel (V)

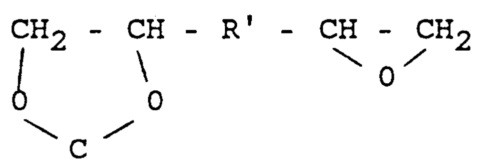

(V)

in der R' der Bedeutung von $R^{10}$ in Formel (IV) entspricht. Diese gemischten Epoxid-Carbonate werden mit Verbindungen umgesetzt, die einen flexibilisierenden Effekt auf das Molekül ausüben, beispielsweise die als Komponente (B), genannten Polyamine, aliphatische oder aromatische Polyole, wie Diole, Triole oder Tetraole, beispielsweise Ethylen- oder Propylenglykol, Polyalkylenglykole, Neopentylglykol, Glycerin, Trimethylolpropan, Pentaerythrit sowie Polycaprolactonpolyole, weiter OH-gruppenhaltige Polyester, Polyether, Polyglykole, hydroxy-, carboxyl- und aminofunktionelle Polymeröle, Polycarbonsäuren, hydroxy- und aminofunktionelle Polytetrahydrofurane, Umsetzungsprodukte von Polyaminen mit Glycidylethern bzw. ®Versaticsäureglycidylestern. Polyetherpolyester, die endständige Carboxylgruppen enthalten. Die Umsetzungen mit diesen flexibilisierenden Verbindungen werden unter Bedingungen vorgenommen, bei denen ganz bevorzugt die Epoxydgruppen reagieren und die cyclischen Carbonatgruppen im wesentlichen nicht angegriffen werden. Auf diese Weise erhält man auch wieder Verbindungen der Formel (IV), die endständige cyclische Carbonatgruppen tragen, die mit den Aminoverbindungen umgesetzt werden können.

Um das Molekulargewicht der erfindungsgemäßen härtbaren Verbindungen zu begrenzen, werden in einer bevorzugten Ausführungsform der Erfindung sogenannte Kettenstopper (D) verwendet. Bei endständigen Aminogruppen, d.h. wenn ein Überschuß an Amin-Äquivalenten aus (B)/(C) gegenüber 2-Oxo-1,3-dioxolan-Äquivalenten vorliegt, sind dies z.B. Monocarbonate, Monoepoxydverbindungen und teilverkappte Polyisocyanate, wobei die Umsetzungen gleichzeitig oder in mehreren getrennten Stufen durchgeführt werden können. Die Umsetzung mit diesen Kettenstoppern kann jedoch auch unterbleiben, so daß beispielsweise bei einem Überschuß an (A)/(B) die endständigen Gruppen des Aminourethans von diesen Komponenten gebildet werden.

Als Monocarbonatverbindungen eignen sich hierfür solche der Formel (VI)

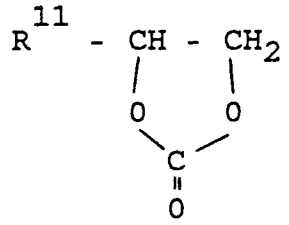

(VI)

in der $R^{11}$ Wasserstoff, Alkyl mit 1 bis 18, vorzugsweise 1 bis 10 C-Atomen, oder Reste des ®Versaticsäureglycidylesters, Glycidylester oder Glycidylether darstellt, bei denen die Epoxydgruppe in der weiter oben angegebenen Weise zu cyclischen Carbonaten umgesetzt worden ist.

Neben den Monocarbonaten und Monoepoxyden können auch teilverkappte Polyisocyanate eingesetzt werden, da diese Verbindungen zuerst mit einer freien $NH_2$-Gruppe reagieren. Prinzipiell kann jede Aminreaktion herangezogen werden, die bevorzugt an der primären Aminogruppe ansetzt, bevor die im Molekül enthaltenen sedundären Aminogruppen reagieren. Die zum Kettenabbruch eingesetzte Verbindung kann zusätzlich auch zur Flexibilisierung des resultierenden Lackfilmes dienen, indem entsprechende langkettige Verbindungen, die in der Praxis bekannt sind, eingebaut werden.

Bei endständigen 2-Oxo-1,3-dioxalan-Gruppen sind z.B. als Kettenstopper unter den Reaktionsbedingungen monofunktionelle Amine brauchbar. Als solche kommen etwa mono-primäre Amine in Betracht, wie Methylamin, Ethylamin, Propylamin, Butylamin, Octylamin, Laurylamin, Stearylamin, Ethanolamin, Isononyloxypropylamin, Aminoethylethanolamin, Neopentanolamin, 3-Aminopropanol, Amidamine aus di-primären Aminen und Monocarbonsäuren, Monoketimine von di-primären Aminen udgl.. Auch die Amine gemäß der obigen Formel (II) sind für diesen Zweck brauchbar.

Die Mengenverhältnisse der Komponenten (A), (C) und gegebenenfalls (B)/(D) können in weiten Grenzen schwanken. Im allgemeinen wird die Menge an Komponente (A) 5 bis 60 Mol-%, vorzugsweise 10 bis 50 Mol-%, die von Komponente (B) 0 bis 60 Mol-%; vorzugsweise 20 bis 40 Mol-%, die von Komponente (C) 20 bis 70 Mol-%, vorzugsweise 25 bis 60 Mol-% und die von Komponente (D) 0 bis 70 Mol-%, vorzugsweise 20 bis 40 Mol-% betragen. Bevorzugt werden diese Komponenten in solchen Mengen eingesetzt, daß das Verhältnis der 2-Oxo-1,3-dioxolan-Äquivalente zu den reaktiven Amin-Äquivalenten der Komponenten (A)/(B) zwischen 0,8 und 1,2 Mol-%, vorzugsweise 1,0 und 1,1 Mol-% liegt.

Bevorzugt besitzen die erfindungsgemäßen Aminourethane die Formel (VII)

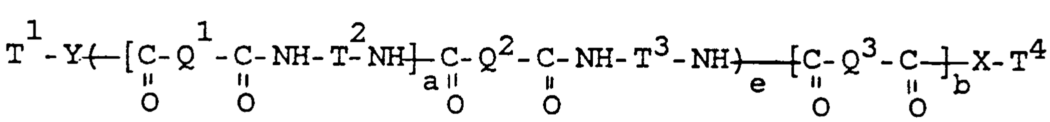

(VII)

in der bedeuten:

a, b, e = eine Zahl von Null bis 5, vorzugsweise 1 bis 3, wobei für e = Null gilt, daß b ≧ 1, und für e ≧ 1 gilt, daß Null ≦ a, b ≦ 5,

X = -HN-M-NH-, wenn b ≧ 1, oder eine chemische Bindung, wenn b = Null,

Y = -HN-M-NH-, oder eine chemische Bindung wenn $T^1$ die nachstehend unter $T^1$C) angegebene Bedeutung hat,

M =

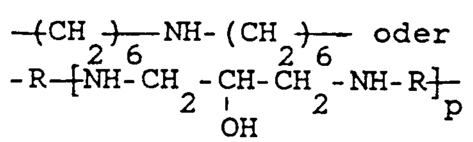

bedeutet,

wobei R und p die Bedeutungen wie in Formel (I) haben, $T^1$, $T^4$, die gleich oder verschieden sein können,

=

a)

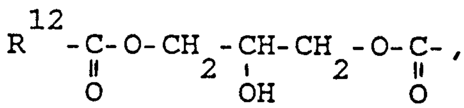

mit

$R^{12}$ = ($C_5$-$C_{15}$)-Alkyl, vorzugsweise verzweigt, oder

b) $V^2$ =

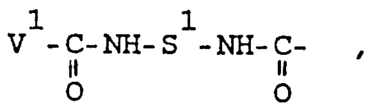

wobei, $V^1$ einen organischen Rest aus einer H-aktiven Verbindung der Formel H-$V^1$ aus der Gruppe der aliphatischen, cycloaliphatischen, alkylaromatischen, oder durch N-Heterocyclen substituierten einwertigen Alkohole, vorzugsweise mit 1-15 C-Atomen, oder durch Aminogruppen, ($C_1$-$C_6$)-Alkoxygruppen, Phenyloxygruppen oder substituierten Phenyloxygruppen substituierter ($C_2$-$C_5$)Alkohole, oder der Oxime aliphatischer ($C_3$-$C_8$)-Ketone, oder heterocyclischer N-H-azider Verbindungen mit bis zu 8 C-Atomen, oder C-H-azider Verbindungen mit bis zu 8 C-Atomen, bedeutet und $S^1$ für einen 2,4- und/oder 2,6-disubstituierten Toluylenrest oder den Methylen-trimethylcyclohexanylrest der Formel

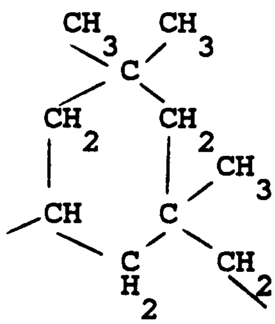

steht, oder

c) einen Rest der Formeln (Ia) oder (IIa) mit der Maßgabe, daß X bzw. Y in Formel (VII) jeweils für eine chemische Bindung stehen und b $\geqq$ 1 ist,

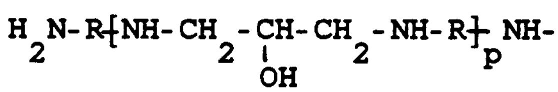 (Ia)

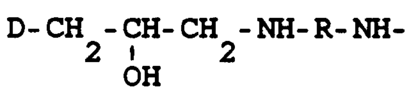 (IIa)

worin R, D und p die Bedeutungen wie in Formeln (I), und (II) haben, oder

d)

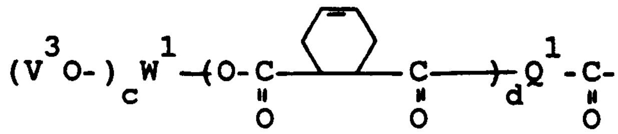

mit c = 1-3, d = Null oder 1, $V^3$ = Wasserstoff oder $V^2$, wobei $V^2$ die oben unter b) angegebene Bedeutung hat, $W^1$ = ein 2- bis 4-wertiger Rest aus der Gruppe lineare oder verzweigte aliphatische Polyesteralkohole mit mittleren Molgewichten bis zu 1000, Reste aus Trimethylolpropan, Pentaerythrit, Ethylenglykol, Propylenglykol, trihydroxyfunktionelles Polycaprolacton, oder

e) $T^1$ = Wasserstoff, wenn Y = -HN-M-NH-, $T^4$ = Wasserstoff, wenn b = Null und X für eine chemische Bindung steht,

$T^2$,$T^3$ = M oder einen linearen aliphatischen Polyetherrest mit einem mittleren Molgewicht bis zu 400, wobei $T^2$ und $T^3$ gleich oder verschieden sein können,

$Q^1$,$Q^3$ =

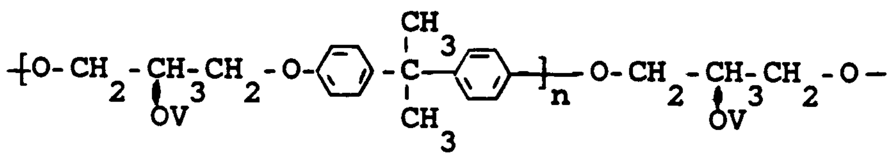

mit n = 1-3, wobei $Q^1$ und $Q^3$ gleich oder verschieden sein können, $V^3$ = Wasserstoff oder $V^2$, wobei $V^2$ die oben unter b) angegebene Bedeutung hat, und

$Q^2$ =

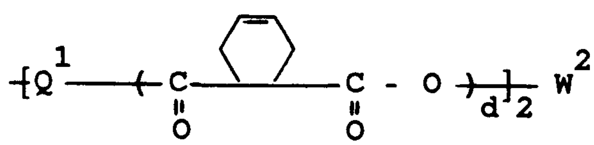

mit d = Null oder 1 und $W^2$ = ein zweibindiger Rest aus der Gruppe lineare aliphatische Polyesteralkohole mit mittleren Molgewichten bis zu 2000, lineare oder verzweigte aliphatische Polyether mit mittleren Molgewichten bis zu 2000.

In den erfindungsgemäßen Aminourethanen können ein Teil oder alle der vorhandenen Hydroxylgruppen und/oder ein Teil der Aminogruppen mit teilverkappten Polyisocyanaten umgesetzt sein.

Besonders interessant sind hierbei solche Aminourethane, bei denen zusätzlich primäre oder sekundäre Aminogruppen vorhanden sind, da bei diesen Produkten, wenn sie verkappte Polyisocyanatgruppen besitzen, der nach der Härtung verbleibende Anteil von basisch wirkenden Stickstoffgruppierungen im Molekül deutlich vermindert wird.

Das Molekulargewicht $\overline{M}_n$ (Zahlenmittel; bestimmt mittels Gelchromatographie, Polystyrolstandard) der erfindungsgemäßen härtbaren Verbindungen liegt im allgemeinen zwischen 500 und 20000, vorzugsweise zwischen 1000 und 10 000. Der Staudinger-Indes [$\eta$] weist zumeist Werte von 0,5 bis 2,0 [dl/g], bestimmt im Methoxypropanol, auf. Die Aminzahlen betragen zumeist 10 bis 300 mg KOH/g, vorzugsweise 20 bis 100 mg KOH/g.

Gegenstand der Erfindung ist auch ein Verfahren zur Herstellung der erfindungsgemäßen Aminourethane.

Gegenstand der Erfindung sind auch härtbare Mischungen (Beschichtungsmittel), enthaltend die erfindungsgemäßen Aminourethane, die gegebenenfalls zusätzlich Härter und Katalysatoren, gegebenenfalls weitere übliche Formulierungskomponenten, gegebenenfalls Pigmente und Farbstoffe, gegebenenfalls weitere Polymerisate, Bindemittelharze und Füllstoffe enthalten.

Gegenstand der Erfindung sind insbesondere auch wasserverdünnbare und kataphoretisch abscheidbare, härtbare Beschichtungsmittel, enthaltend die erfindungsgemäßen Aminourethane als Bindemittel, salzbildende Löslichkeitsvermittler, gegebenenfalls zusätzliche Härter und Katalysatoren, gegebenenfalls weitere

übliche Formulierungskomponenten, gegebenenfalls Pigmente, Farbstoffe, Korrosionsinhibitoren, gegebenenfalls weitere Bindemittelharze, gegebenenfalls weitere Polymerisate und gegebenenfalls Füllstoffe.

Zur Herstellung der härtbaren Verbindungen gemäß der Erfindung werden die Komponenten (A), (C) und vorzugsweise (D) sowie gegebenenfalls zusätzlich (B) umgesetzt.

Die Umsetzung der Komponenten (A) und (C) erfolgt dabei im allgemeinen in den erforderlichen stöchiometrischen Verhältnissen bzw. Mengen nach üblichen Methoden bei erhöhten Temperaturen, beispielsweise 20 bis 150 °C, vorzugsweise 50 bis 100 °C, gegebenenfalls unter Zusatz von geeigneten Katalysatoren, wie beispielsweise Aluminiumtrialkyle oder n-Butyllithium, und vorzugsweise unter Zusatz von inerten Lösungsmitteln. Bei der stöchiometrischen Bewertung der Ausgangsprodukte und auch der Umsetzungsprodukte bezüglich des Fortgangs der Umsetzung werden bei den Verbindungen der Komponenten (A)/(B) die Aminzahl, deren Ermittlung in üblicher Weise durch Perchlorsäuretitration erfolgen kann, und bei den Verbindungen der Komponente (C) die Cyclocarbonatäquivalenz-Zahl zugrunde gelegt, die in üblicher Weise durch KOH-Titration erfolgen kann. Die Umsetzung wird dabei im allgemeinen so lange vorgenommen, bis z.B. eine konstante Aminzahl des erfindungsgemäßen Umsetzungsproduktes erreicht ist und der Cyclocarbonatgehalt auf Null gesunken ist.

Bei der erfindungsgemäßen Umsetzung der Komponententen (A)/(B) und (C) können die erfindungsgemäßen Polyaminoverbindungen einzeln oder als Gemische oder auch zeitlich nacheinander der Reaktion zugeführt werden, gegebenenfalls gelöst in inerten organischen Lösungsmitteln. Es ist dabei zu beachten, daß die Polyaminoverbindungen der Formel (I) Amine mit zwei primären Aminogruppen im Molekül darstellen, während es sich bei den Polyaminoverbindungen der Formeln (II) um Amine mit nur einer primären Aminogruppe im Molekül handelt. In analoger Weise können auch einzelne oder verschiedene modifizierte cyclische Carbonate der Komponente (C) einzeln oder als Gemische oder auch zeitlich nacheinander, vorzugsweise im Gemisch mit inerten organischen Lösungsmitteln, der Reaktion zugeführt werden. Ein besonders bevorzugtes inertes organisches Lösungsmittel ist hierbei Diglykoldimethylether (= DMDG).

Es ist bei der erfindungsgemäßen Umsetzung von Bedeutung, daß stets solche Reaktions- und Verfahrensbedingungen eingehalten werden, unter denen die Cyclocarbonatgruppen der Komponente (C) nur mit den primären Aminogruppen der Komponenten (A)/(B) reagieren können, was nach bekannten Methoden erreichbar ist, ohne daß auch entsprechende Reaktionen mit den vorhandenen sekundären Aminogruppen in störendem Umfange stattfinden, die bekanntlich reaktionsträger sind.

Als inerte (d.h. die Reaktion nicht störende) Lösungsmittel für die obige Umsetzung seien hier beispielsweise genannt: halogenierte Kohlenwasserstoffe (weniger geeignet bei Einsatz als Tauchlack), Ether wie Diethylether, 1,2-Dimethoxyethan, DMDG, Tetrahydrofuran oder Dioxan; Ketone (falls eine Komponente (C) verwendet wird), wie beispielsweise Aceton, Methylethylketon, Methylisobutylketon, Cyclohexanon und ähnliche; Alkohole wie Methanol, Ethanol, 2-Butoxyethanol, Propanol, Isopropanol, 2-Methoxy-1-propanol, Butanol und Benzylalkohol, Butyldiglykol, Hexylglykol; Ester (weniger geeignet bei Einsatz als Tauchlack), wie Butylacetat, Ehylglykolacetat, Methoxypropylacetat; N-Methylpyrrolidon, (cyclo)-aliphatische und/oder aromatische Kohlenwasserstoffe, wie Hexan, Heptan, Cyclohexan, Benzol, Toluol, die verschiedenen Xylole sowie aromatische Lösemittel im Siedebereich von ca. 150 bis 180 °C (höhersiedende Mineralölfraktionen, wie ®Solvesso). Die Lösemittel können dabei einzeln oder im Gemisch eingesetzt werden.

Bei der Herstellung der erfindungsgemäß als Komponente (A) eingesetzten Polyaminoverbindungen der Formeln (I) und (II) werden bis-primäre Amine oder Gemische derselben mit Monoaminen mit Propanderivaten, vorzugsweise Epichlorhydrin, Versaticsäureglycidylester, 2-Ethylhexylglycidylether, umgesetzt. Besonders bevorzugt ist Epichlorhydrin. Bezüglich weiterer Enzelheiten sei hier auf die genannte DE-Patentanmeldung P 36 44 371.9 verwiesen.

Falls die erfindungsgemäßen Aminourethane selbsthärtende Eigenschaften haben sollen, wird ein Teil der vorhandenen Hydroxyl- und/oder primären bzw. sekundären Aminogruppen mit einem teilblockierten Polyisocyanat, das im Mittel noch ca. eine freie Isocyanatgruppe im Molekül enthält, umgesetzt. Eine andere Möglichkeit besteht z.B. in der Einführung von $\beta$-Hydroxyalkylcarbamatgruppen durch Umsatz eines Teils der Aminogruppen mit einem cyclischen Carbonat, wie Ethylencarbonat. diese Methode ist beispielsweise in der DE-Offenlegungsschrift 3 246 812 und der EP-Offenlegungsschrift 119.769 beschrieben.

Beispielsweise kann die Komponente (C) zunächst mit dem teilblockierten Isocyanat umgesetzt werden und danach der Harzaufbau durch Reaktion mit der Komponente (A) sowie gegebenenfalls (B) und (D) erfolgen. Die Komponente (C) kann hierfür in der unflexibilisierten oder flexibilisierten Form eingesetzt werden. Die Reaktion der im Komponente (C) vorhandenen Hydroxyl- und/oder sekundären Aminogruppen mit dem teilverkappten Isocyanat wird dabei unter solchen Bedingungen durchgeführt, daß die cyclischen Carbonatgruppen nicht angegriffen werden. Andererseits ist es aber auch möglich, zunächst die härtbare

Verbindung vollständig aufzubauen und in das fertige Produkt dann nachträglich die verkappten Isocyanatgruppen enzuführen.

Polyisocyanate, die für diese Verbindungen eingesetzt werden, können beliebige Polyisocyanate sein, beispielsweise ein aliphatisches, cycloaliphatisches oder aromatisches Polyisocyanat. Ein Teil der Isocyanatgruppen kann in bekannter Weise mit üblichen Verkappungsmitteln umgesetzt worden sein. Typische Beispiele für die verwendeten Polyisocyanate sind Xylylendiisocyanat, Diphenylmethan-4,4′-diisocyanat, Triphenylmethyl-4,4′-triisocyanat, Triphenylmethantriisocyanat, Polyphenyl-polymethyl-isocyanat, 2,2,4-(2,4,4)-Methylcyclohexyldiisocyanat, Dicyclohexylmethyldiisocyanat, Diäthylfumarhexylisocyanat, Bis-(3-methyl-4-isocyanatocyclohexyl-)methan, 2,2-Bis-(4-isocyanatocyclohexyl-)propan, der Methylester des Lysindiisocyanats, das Biuret des Hexamethylendiisocyanats, Diisocyanate dimerer Säuren, 1-Methyl-benzol-2,4,5-triisocyanat, Biphenyl-2,4,4′-triisocyanat, das Triisocyanat aus 3 Mol Hexamethylendiisocyanat und 1 Mol Wasser mit 16 % NCO-Gehalt und weitere, wenigstens zwei NCO-Gruppen pro Molekül enthaltende Verbindungen, vorzugsweise Isophorondiisocyanat, Hexamethylendiisocyanat sowie Tri- und Tetramethylhexamethylendiisocyanat, insbesondere aber 2,4- oder 2,6-Toluylendiisocyanat oder Gemische dieser Verbindungen. Die in den Aminourethanen enthaltenen verkappten Polyisocyanate können gleich oder verschieden sein.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodimidgruppen. Allophonatgruppen, Isocyanatgruppen, Urethangruppen, acylierte Harnstoffgruppen oder Biuretgruppen aufweisen.

Geeignete Polyisocyanate sind schließlich auch die bekannten, endständige Isocyanatgruppen aufweisenden Präpolymere, wie sie insbesondere durch Umsetzung der obengenannten einfachen Polyisocyanate, vor allem Diisocyanate mit überschüssigen Mengen an organischen Verbindung mit mindestens zwei gegenüber Isocyanatgruppen reaktionsfähigen Gruppen zugänglich sind. Bevorzugt werden diese Präpolymeren allerdings als externe Härterkomponente bei den fremdvernetzenden Systemen eingesetzt.

Als Verkappunsgmittel eignen sich aliphatische, cycloaliphatische oder alkylaromatische (einwertige) Alkohole, z.B. niedere aliphatische Alkohole wie Methyl-, Äthyl-, die verschiedenen Propyl-, Butyl- und Hexylalkohole, Heptyl-, Octyl-, Nonyl-, Decylalkohol und ähnliche, ferner ungesättigte Alkohole wie Allylalkohole, cycloaliphatische Alkohole wie Cyclopentanol, Cyclohexanol, alkylaromatische Alkohole wie Benzylalkohol, Methyl- sowie p-Methoxy- und p-Nitro-benzylalkohol und Monoäther von Glykolen wie Äthylenglykolmonoäthyläther, -monobutyläther und ähnliche. Weitere Verkappungsmittel sind Ketoxime mit 3 bis 20 C-Atomen, vorzugsweise 3 bis 10 C-Atomen, wie Methyläthylketonoxim (= Butanonoxim), Acetonoxim, Cyclohexanonoxim, Heptanonoxim und Octanonoxim, CH-acide Verbindungen wie Malonsäurealkylester, Acetessigester sowie Cyanessigester mit jeweils 1 bis 4 C-Atomen in der Estergruppe, NH-acide Verbindungen wie Caprolactam, Aminoalkohole wie Diäthyläthanolamin. Das als Blockierungsmittel bekannte Phenol kann in solchen Fällen eingesetzt werden, bei denen das Umsetzungsprodukt zur Herstellung von lösungsmittelhaltigen Lacken verwendet wird.

Die erfindungsgemäßen Umsetzungsprodukte können nach verschiedenen Verfahrensvarianten hergestellt werden. Beispielsweise kann man ein Aminourethan der Formel (VII), in der für $Q^1$ bzw. $Q^3$ z.B. der Rest aus dem Diglycidyläther des Bisphenols A steht, aus den Komponenten (A)/(B) und (C) erhalten, indem man z.B. die als Vorprodukt benötigte Komponente (C) dadurch herstellt, daß man die Epoxidgruppen des genannten Diglycidyläthers zu Carbonatgruppen umwandelt unter bildung einer Verbindung der Formel (IV), in der $R^{10}$ für einen zweibindigen Bis-(4-hydroxyphenyl)-2,2-propanrest steht. Diese Verbindung der Formel (IV) wird anschließend mit einer oder mehreren Polyaminoverbindungen der Komponente (A) und gegebenenfalls (B) in dem gewünschten stöchiometrischen Mengenverhältnis umgesetzt.

Will man ein selbsthärtendes Produkt erhalten, kann die Verbindung der Formel (IV) zuerst über vorhandene OH-Gruppen mit einem teilverkappten Polyisocyanat unter Urethanbildung umgesetzt werden, worauf die Reaktion mit den genannten Polyaminoverbindungen erfolgt. Ferner kann man teilverkappte Polyisocyanate zuerst mit einem Aminoalkylierungsprodukt, das durchschnittlich mindestens eine NH-Gruppe pro Molekül aufweist und das aus Phenol und/oder einem substituierten Phenol, vorzugsweise Monoalkyl- oder Monoaryl- oder Monoalkylphenol mit einer oder gegebenenfalls zwei phenolischen Hydroxylgruppen, einem primären Alkylamin und/oder primären Alkanolamin und/oder primär-tertiären Alkyldiamin und Formaldehyd oder einer formaldehydabspaltenden Verbindung erhalten worden ist, und dann in einer weiteren Reaktionsstufe mit einem gemischten Epoxid-Carbonat (vgl. die obige Formel (V)), d.h. einer Verbindung, in der neben cyclischen Carbonatgruppen noch Ausgangs-Epoxidgruppen vorhanden sind, umsetzen. So erhält man auch wieder Verbindungen mit zwei cyclischen Carbonatgruppen der Formel (IV).

Andererseits ist es aber auch möglich, den erfindungsgemäßen Aminourethanen einen üblichen Härter zuzusetzen. Hierfür kommen beispielsweise in Frage: verkappte Polyisocyanate, etwa wie sie oben für die

selbsthärtenden Aminourethane beschrieben sind, weiter β-Hydroxyester von mindestens bifunktionellen Polycarbonsäuren, Umsetzungsprodukte von Malonsäuredialkylestern mit Aldehyden und Ketonen, die unter Wasserabspaltung zu ungesättigten Dicarbonsäureestern reagieren (Knoevenagel'sche Synthese), Umesterungs- oder Umamidierungshärter, Michael-Additionsprodukte, beispielsweise wie sie in den DE-Offenlegungsschriften 33 15 469 und 34 17 441 sowie in der DE-Patentanmeldung P 36 02 981 beschrieben sind. Auf diese Literaturstellen einschließlich der bevorzugten Ausführungsformen, wird hiermit Bezug genommen. Weiterhin sind hier auch Aminoplast (Harnstoff, Melamin)- und Phenolplastharze sowie β-Hydroxyalkylcarbamatvernetzer zu nennen.

Als Härterkomponente für die erfindungsgemäßen Aminourethane, vorzugsweise in nicht-wäßrigen Lacken, eignen sich auch epoxidgruppenhaltige Verbindungen, wie z.B. niedermolekulare Polyepoxide, epoxidgruppenhaltige Copolymerisate sowie Di-oder Polyglycidylether von aliphatischen oder aromatischen Alkoholen. Weiterhin sind hier als Härterkomponenten auch oligomere oder polymere Verbindungen zu nennen, welche mindestens zwei 1,3-Dioxolan-2-on-Gruppen oder mindestens eine 1,3-Dioxolan-2-on-Gruppe und eine Epoxidgruppe pro Molekül enthalten; hierzu gehören beispielsweise die Verbindungen (I) und (II).

Die Menge an diesen Vernetzern richtet sich nach Art und Anzahl der miteinander reaktiven Gruppen im Bindemittel und Vernetzer und der angestrebten Vernetzungsdichte. Zumeist wird das Gewichtsverhältnis zwischen Bindemittel und Vernetzer zwischen 1:10 bis 10:1, vorzugsweise 1:5 bis 5:1 und ganz bevorzugt bei 1:1 liegen.

Um der unter Verwendung der erfindungsgemäßen Umsetzungsprodukte erhaltenen Lackschicht die nötige Flexibilisierung zu geben, können die Komponenten (A)/(B) und (C) bereits die nötigen Voraussetzungen mitbringen, andererseits ist es aus möglich, entweder über den eingebauten Härter in Form von teilverkappten Polyisocyanaten oder über den zugemischten Härter benötigte Flexibilisierung in das System einzubringen.

Die erfindungsgemäßen Aminorethane werden beispielsweise außer in Lackzubereitungen nach herkömmlicher Zusammensetzung vorzugsweise auch zur Herstellung von wäßrigen Systemen verwendet, die Überzüge mit sehr guten Eigenschaften ergeben.

Insbesondere sind sie geeignet für die elektrische Abscheidung, obwohl sie auch für andere Überzugsverfahren, wie Streichen, Spritzen, Tauchen, Gießen, Rakeln etc. verwendet werden können. Um wäßrige Zubereitungen zu erhalten, ist es vorteilhaft, die basischen Aminogruppen teilweise oder vollstängdig durch Säurezusatz oder Zusatz von anderen neutralisierend wirkenden Substanzen zu neutralisieren, um damit Überzugsmassen zu erhalten, die aus wäßriger Lösung bei einem Bad-pH zwischen etwa 3 und 9 electrisch abgeschieden werden können.

Die Neutralisation der basischen Gruppen in den erfindungsgemäßen Aminourethanen wird im allgemeinen mit wasserlöslichen Säuren, beispielsweise Ameisensäure, Essigsäure, Milchsäure oder Phosphorsäure vorgenommen. Die Menge der Zugabe der Säure hängt im Einzelfall von den Eigenschaften des verwendeten Harzes ab und wird im allgemeinen nur so weit durchgeführt, daß das Harz solubilisiert oder dispergiert werden kann.

Wäßrige Zubereitungen, die einen besonders niedrigen Gehalt an flüchtigen organischen Lösungsmitteln besitzen, erhält man beispielsweise durch Abdestillation der in den Bindemitteln von der Herstellung oder Lösung her enthaltenen Lösungsmittel, wie z.B. Isopropanol, 1-Methoxypropanol-2, Isopropylmethylketon. Bevorzugt wird dieser Verfahrensschritt unter vermindertem Druck durchgeführt.

Den Lackzubereitungen mit den erfindungsgemäßen Aminourethanen können gegebenenfalls auch verschiedene Zusatzstoffe wie Pigmente, Pigmentpasten, Farbstoffe, Härter, Katalysatoren, Antioxidantien, (UV-)Stabilisatoren, oberflächenaktive Mittel, Korrosionsschutzmittel, Füllstoffe, Lösungsmittel, Verlauf- und Verdickungsmittel, Reaktiv-Verdünner und dergleichen zugesetzt werden. Auch Polymerisate und andere Lackharze können zugegeben werden. Diese Zusatzstoffe sind bekannt und werden üblicherweise in der Lackindustrie eingesetzt. Die elektrische Ablagerung der Lackteilchen aus den wäßrigen Lackformulierungen erfolgt kataphoretisch nach bekannten Verfahren, worauf hier Bezug genommen wird. Die Abscheidung kann auf allen elektrisch leitenden Substraten erfolgen, vorzugsweise z.B. auf Metallen wie Stahl, Kupfer, Aluminium, zinkphosphatiertem Stahl, metallischen Legierungen und metallischen Schichtstoffen.

Als Katalysatoren zur Beschleunigung der Härtung eignen sich beispielsweise Salze oder Komplexe von Metallen, wie beispielsweise Blei, Zink, Eisen, Zinn, Mangan und Wismut. Bevorzugte Metallkatalysatoren sind dabei Bleiverbindungen, wie Bleicarboxylate mit 1 bis 10 C-Atomen, beispielsweise Bleiformiat, Bleiacetat, Bleipropionat, Bleilactat, Bleioctoat, Bleiacetylacetonat, etc. oder Zinnverbindungen Für die Zinnkatalyse eignen sich vorzugsweise Dibutylzinndilaurat und Dibutylzinnoxid bzw. Zinn(IV)-Verbindungen der Formel (VIII)

$[(R^{12})_r Sn)_s(K)_t]_u$ (VIII)

in der bedeuten:

- $R^{12}$ = Alkylrest mit 1 bis 10 C-Atomen, vorzugsweise 2 bis 4 sowie 8 C-Atomen,
- K = ein- oder zweiwertiger Carboxylrest mit 1 bis 12, vorzugsweise 1 bis 8 sowie 12 C-Atomen oder ein- oder zweiwertiger Alkohol- oder (Poly)-Aminrest mit 1 bis 10 C-Atomen, oder ein ein- oder mehrkerniger phenolischer Rest (subst. oder unsubst.), z.B. p-tert-Butylphenol, p-Nonylphenol etc., oder Reste von eine- oder zweiwertigen Thiolen, oder gleich Null;
- r = 2 oder 3;
- s = 1 oder 2;
- t = 1 oder 2;
- u ≧ 1.

Beispiele für Vertreter dieser Formel sind in Wasser relativ schnell hydrolysierende Zinn(IV)-Verbindungen, wie Dialkyl(butyl)zinndiacetat.

Die Katalysatoren werden zumeist in Mengen von 0.1 bis 6 Gew.-%, vorzugsweise 0,2 bis 3 Gew.-% (berechnet auf Metall), bezogen auf härtbare Verbindung (fest) eingesetzt.

Bei Verwendung von Dibutylzinndilaurat als Härtungskatalysator werden diese zweckmäßigerweise zunächst mit dem Bindemittel homogenisiert und diese homogene Mischung dann anschließend der Lackzubereitung zugegeben.

Im Falle von Dibutylzinnoxid wird dieses vorzugsweise zunächst mit dem Pigment sowie gegebenenfalls einem Zumischharz vermischt und dann der Anreibung zugeführt. Angestrebt wird ein Pigment-Bindemittel-Verhältnis (PBV) von ca. 0,2:1 bis 1:1, wobei die Pigmentierung prinzipiell auf zwei Arten erfolgen kann:

1) Das neutralisierte Bindemittel wird mit den Pigmenten versetzt und über eine Perlmühle oder ein anderes geeignetes Mahlaggregat angerieben;

2) Das(die) neutralisierte Bindemittel (Dispersion) wird mittels einer hochpigmentierten (PBV = 6:1 bis 20:1) Pigmentpaste pigmentiert.

Die Pigmentpaste enthält im allgemeinen ein Pastenharz, Pigmente, Füllstoffe, sonstige lackübliche Hilfsstoffe sowie gegebenenfalls die oben genannten Katalysatoren.

In allen Fällen sollte die Vermahlung der Bindemittel-Pigment-Mischung bzw. der Pigmentpaste auf ausreichend kleine Korngrößen geführt werden (z.B. Hegmann 7), vorzugsweise in Gegenwart von $Al_2O_3$ -(Korund)-Perlen oder Keramik- bzw. $ZrO_2$-Perlen (Ø 0.5-3 mm).

Bei Zinnverbindungen gemäß obiger Formel (VIII) wie dem relativ leicht hydrolysierbaren Dibutylzinndiacetat, ist es zweckmäßig, diese zunächst in die wasserhaltige und gegebenenfalls auch ein Zumischharz enthaltende Pigmentpaste einzuarbeiten und dabei auch eine entsprechende Zerkleinerung (z.B. Hegmann 7) vorzunehmen. Diese Pigmentpaste wird dann dem bindemittelhaltigen Lack zugegeben. Alternativ können diese Zinnverbindungen dem bereits pigmenthaltigen Lack direkt zudosiert werden, gegebenenfalls schrittweise, unter intensivem mechanischem Vermischen wie etwa in einer Perlmühle unter Verwendung von Korund(Keramik)-Perlen. In einer Abwandlung ist in den Lack zunächst nur ein (kleinerer) Teil des Gesamtwassers vorhanden, während der (größere) andere Teil erst nach Zudosierung dieser Zinnverbindung dem Lack zugegeben wird. Auch kann die Zinnverbindung hierbei im Gemisch mit einem Zumischharz und/oder einem Teil des Pigments zugegeben werden.

Nach der Abscheidung wird der Überzug bei erhöhten Temperaturen, die imallgemeinen von der Beschaffenheit der Härterkomponente abhängig sind, durch übliche Verfahren gehärtet, wobei Temperaturen von 100 bis 220°, vorzugsweise 130 bis 180°C angewandt werden. Die Verwendung von üblichen Bleikatalysatoren ist bei der Härtung erfindungsgemäßer Aminourethane, überraschenderweise besonders effektiv, wenn diese Lackharze z.B. mit $\beta$-Alkoxy- oder $\beta$-Dialkylamino-alkoholen und/oder mit Ketonoximen verkappte Polyisocyanatreste enthalten, und kann zu kürzeren Härtungszeiten bzw. zu niedrigeren Einbrenntemperaturen bei gleichzeitig sehr gutem Verlauf, sehr guter Film- und Oberflächenbildung und sehr guter Substrathaftung der Lacke und Beschichtungen führen. Dieses Verhalten ist besonders bedeutsam bei der Lackierung von bereits partiell ausgerüsteten und daher thermisch empfindlichen Fahrzeugkarosserien. Die mit erfindungsgemäßen kataphoretisch abgeschiedenen Lacken hergestellten und gehärteten Lackierungen oder Beschichtungen auf Stahlblech, insbesondere auf zinkphosphatiertem Stahlblech, zeigen außerdem ein unerwartet vorteilhaftes Verhalten im Salzsprüh-Korrosionstest.

In den nachfolgenden Beispielen bedeutet GT Gewichtsteile und % Gewichtsprozent. Die Aminzahlen beziehen sich stets auf Festharz.

## Beispiele

I. Aminherstellung

Beispiel 1

Herstellung von technischem 1,3-Bis-(6-aminohexyl)amino-2-propanol. (Polyamingemisch der Formel (I), mit R = $-(CH_2)_6-$ und p = 1 sowie Anteilen mit p = 2 als Nebenprodukt).

In eine Mischung aus 2325 g (20 Mol) Hexamethylendiamin, 2 l Toluol und 410 g (5,1 Mol) 50 %ige wäßrige Natronlauge tropft man unter Stickstoffatmosphäre in einem Rührreaktor bei 37 42 °C 463 g (5 Mol) Epichlorhydrin, was bei Eiswasserkühlung etwa 2 Stunden dauert. Man läßt 1,5 Stunden bei höchstens 45 °C und 20 Minuten bei 55 °C nachrühren. Dann kreist man das Wasser azeotrop aus und filtriert nach Zusatz von 5 g "Celite" bei etwa 95 °C von ausgefallenem Kochsalz ab. Aus dem Filtrat werden Toluol, dann bei 20 Torr bis zu einer Sumpftemperatur von 150 °C das überschüssige Hexamethylendiamin abdestilliert. Der Rückstand, der erst unterhalb 100 °C der Luft ausgesetzt werden sollte, ist eine hellgelbliche Schmelze, die beim Abkühlen auf Raumtemperatur zu einem weißlichen Festkörper erstarrt und das gewünschte obengenannte Polyamingemisch der Formel (I) darstellt.
Ausbeute: 1260 g (= 87 % d. Theorie, bezogen auf Epichlorhydrin).
Schmelzbereich: 50 - 53 °C
Aminzahl: 782 mg KOH/g (berechnet: 779).

**Beispiel 2**

Herstellung einer Polyaminmischverbindung der Formel (I), mit R = $-(CH_2)_6-$ und $-C_6H_9(CH_3)_3-$ , p = 1-2, (Formalbezeichnung: Trimethylhexyl-1,3-bis-(6-aminohexyl)amino-2-propanol).

In der in Beispiel 1 beschriebenen Apparatur werden zu einer Mischung aus 1162 g (10 Mol) Hexamethylendiamin, 1582 g (10 Mol) Trimethylhexamethylendiamin, 1,5 l Toluol und 410 g (5,1 Mol) 50 %ige Natronlauge analog der Vorschrift in Beispiel 1 unter Stickstoff 463 g (5 Mol) Epichlorhydrin getropft. Die Umsetzung wird wie in Beispiel 1 beschrieben durchgeführt, jedoch wird der Aminüberschuß bis zu einer Sumpftemperatur im Reaktionsgemisch von 175 °C bei 20 Torr abdestilliert. Der Rückstand bildet eine bei Raumtemperatur weißliche, trüb werdende und leicht dickflüssige Schmelze mit einer Aminzahl von 680 mg KOH/g. Die Aminzahl entspricht der Theorie für das gewünschte Reaktionsprodukt. Die Ausbeute beträgt 1485 g (= 90 % d. Theorie).

**Beispiel 3**

Herstellung einer Polyaminmischverbindung der Formel (I), mit R = $-(CH_2)_6-$ , $-C_6H_9(CH_3)_3-$ und $-(CH_2)_6NH(CH_2)_6-$ , p = 1-2.

Die Herstellung erfolgt analog Beispiel 2, jedoch unter zusätzlicher Mitverwendung von 6,6′-Iminobishexylamin.

In der Apparatur und nach der Vorschrift von Beispiel 1 wird unter Stickstoff eine Mischung aus 344 g (1,6 Mol) 6,6′-Iminobishexylamin, 92,9 g (0,8 Mol) Hexamethylendiamin und 126,5 g (0,8 Mol) Trimethylhexamethylendiamin in 300 ml Toluol und 66 g (0,82 Mol) 50 %ige Natronlauge mit 74 g (0,8 Mol) Epichlorhydrin umgesetzt. Die Umsetzung wird wie in Beispiel 1 beschrieben durchgeführt und der Aminüberschuß bis 180 °C Sumpftemperatur bei 20 Torr abdestilliert. Es wird eine bei Raumtemperatur zähflüssige Masse als Reaktionsprodukt erhalten, die außer der gewünschten Polyaminmischverbindung noch den nicht umgesetzten Anteil an 6,6′-Iminobishexylamin enthält, der jedoch die erfindungsgemäße Verwendung des Produkts nicht beeinträchtigt.
Ausbeute: 431 g (= 86,5 % d. Theorie)
Aminzahl: 705 mg KOH/g (berechnet: 720).

**Beispiel 4**

Herstellung einer Polyaminmischverbindung der Formel (II), mit R = $-(CH_2)_6-$ , $-C_6H_9(CH_3)_3-$ , L= ($C_{10}$-$C_{15}$)-Acyloxy, verzweigt.

In einer Rührapparatur wie in Beispiel 1 beschrieben tropft man unter Stickstoffatmosphäre zu einer Mischung aus 290 g (2,5 Mol) Hexamethylendiamin, 360 g (2,5 Mol) Trimethylhexamethylendiamin und 600 ml Toluol bei etwa 50 ° C 260 g (1 Mol gemäß Epoxidgehalt) handelsübliches "Cardura" E 10 (= Glycidylester der handelsüblichen Versatic-[hauptsächlich 2,2-Dimethylundecan-]Säure) und rührt das Gemisch unter Fortsetzung der Umsetzung bei max. 70 ° C noch solange nach, bis die Epoxidbestimmung negativ ist. Nach Abdestillieren von Lösungsmittel und Aminüberschuß (Sumpftemperatur bis 175 ° C bei 20 Torr) werden 396 g (= prakt. 100 % der Theorie) des gewünschten Reaktionsproduktes als gelbliches Öl erhalten. Aminzahl: 289 mg KOH/g (berechnet: 283).

**Beispiel 5**

Herstellung eines Polyaminopolyols der Formel (II), mit R= $-(CH_2)_6-$ , $-C_6H_9(CH_3)_3-$ , A = $-(CH_2)_2-$ , j = 1, B = $-C_2H_4OH$.

In einer Rührapparatur unter Stickstoffatmosphäre tropft man zu 420,6 g (4 Mol) Diethanolamin in 240 g Isopropanol bei 33-37 ° C 185,2 g (2 Mol) Epichlorhydrin und hält anschließend das Reaktionsgemisch solange bei dieser Temperatur, bis der Epoxidgehalt auf 0 abgesunken ist. Die Aminzahl darf dabei nicht unter 175 mg KOH/g sinken. Das resultierende Umsetzungsprodukt dient als "Vorprodukt" und wird in einer Rührapparatur unter Stickstoffatmosphäre zu einem Gemisch aus 696 g ( 6 Mol) Hexamethylendiamin und 948 g (6 Mol) Trimethylhexamethylendiamin in 1 l Toluol und 160 g (2 Mol) 50 %ige wäßrige Natronlauge bei 38-42 ° C getropft. Nach beendeter Umsetzung destilliert man Isopropanol/Wasser, dann Isopropanol/Toluol bis zur Siedetemperatur des Toluols aus, filtriert von ausgeschiedenem NaCl ab und entfernt dann das restliche Toluol und den Aminüberschuß durch Destillation bis zu einer Sumpftemperatur von 175 ° C bei 20 Torr. Es verbleiben 977 g (= 82 % der Theorie) des gewünschten Reaktionsproduktes als orangefarbenes Öl.
Aminzahl: 535 mg KOH/g (berechnet: 564).

Beispiel 6

Polyaminopolyol der Formel (II), mit R= $-(CH_2)_6)-$, $-C_6H_9(CH_3)_3-$, B = H, A = verzweigtes $C_4$-Alkyl, j = 3.

121,2 g ( Mol) Trispuffer (= Tris-(hydroxymethyl)-methanamin) werden in 400 g Methanol unter Rückfluß gekocht und dabei innerhalb von 30 Minuten mit 92,5 g (1 Mol) Epichlorhydrin versetzt. Man läßt noch ca. 50 Minuten bei 60 ° C nachrühren, bis die Epoxidbestimmung den Wert 0 ergibt, die Aminzahl aber nicht unter 90 mg KOH/g fällt. Das resultierende Umsetzunsprodukt dient als "Vorprodukt" und wird in einer Rührapparatur unter Stickstoffatmosphäre in eine Mischung aus 348 g (3 Mol) Hexamethylendiamin und 474 g (3 Mol) Trimethylhexamethylendiamin in 40 g (1 Mol) Natriumhydroxid in 300 ml Methanol bei 38-42 ° C getropft. Anschließend destilliert man das Methanol ab, setzt 600 ml Toluol zu und destilliert das Reaktionswasser azeotrop ab. Danach wird von ausgefallenem NaCl abfiltriert und das Toluol und der Aminüberschuß werden destillativ entfernt (Sumpftemperatur bis 175 ° C bei 20 Torr). Es verbleiben 249 g-(= 79 % der Theorie) des gewünschten Reaktionsproduktes als gelbliches Öl.
Aminzahl: 528 mg KOH/g (berechnet: 536).

Die nachfolgend unter Abschnitt II. und Abschnitt III. in den Beispielen 7 bis 14 und 15 bis 19 sowie in dem Vergleichsbeispiel 1 beschriebenen Umsetzungen zur Herstellung von Vorprodukten bzw. von Bindemitteln werden in einem temperaturregulierbaren Reaktor mit Rührer, Rückflußkühler, Innenthermometer und Dosiervorrichtung durchgeführt.

II. Vorprodukteherstellung

**Beispiel 7**

Herstellung von halbverkapptem Polyisocyanat.

Es werden 174 GT Toluylendiisocyanat (= 2 Äquivalente NCO; 80 Gew.-% 2,4- und 20 Gew.-% 2,6-Isomeres) bei 30-70 °C in Gegenwart von 0,3 Gew.-% Benzyltrimethylammoniumhydroxid (= "Triton" B) oder in Gegenwart von 0,1 Gew.-% Zinkacetyl acetonat als Katalysator mit 137 GT 2-Ethylhexanol (= 1,05 Äquivalente OH) vermischt und das Gemisch bis zu einem NCO-Wert von ca. 12,8 Gew.-% umgesetzt.

**Beispiel 8**

Herstellung von vollverkappten Polyisocyanaten durch Umsetzung von halbverkapptem Polyisocyanat mit Hydroxylgruppen enthaltenden Bis-cyclocarbonaten.

Es wurden zu 1759 GT eines 2 Äquivalente OH-Gruppen enthaltenden Bis-cyclocarbonats (= 2 Äquivalente cyclisches Carbonat, 60 gew.-%ig in Diglykoldimethylether [=DMDG]), hergestellt auf der Basis von handelsüblichem Epicote 1001, bei 30-80 °C 615 GT (= 2 Mol) des nach Beispiel 7 hergestellten halbverkappten Polyisocyanats langsam zugegeben und in Gegenwart von 0,3 Gew.-% "Triton" B bis zu einem NCO-Wert von ca. 0 Gew.-% mit den OH-Gruppen des Biscarbonats umgesetzt. Das resultierende Umsetzungsprodukt wird 70 gew.-%ig in DMDG erhalten und hat ein Carbonatäquivalentgewicht von ca. 832, d.h. 832 g Festsubstanz enthalten 1 Äquivalent cyclisches Carbonat.

**Beispiel 9**

Beispiel 8 wird wiederholt, jedoch werden anstelle von 1759 GT des Bis-cyclocarbonats auf Basis von "Epicote" 1001 in analoger Weise 2808 GT flexibilisiertes Bis-cyclocarbonat (= 2 Äquivalente cyclisches Carbonat, 70 gew.-%ig in DMDG), das 2 Äquivalente OH-Gruppen pro Mol Bis-cyclocarbonat enthält und nach Beispiel 13 erhalten worden ist, eingesetzt. Das resultierende Umsetzungsprodukt ist von hochviskoser bis wachsartiger Konsistenz. Es wird 70 gew.-%ig in DMDG erhalten und hat ein Carbonatäquivalentgewicht von ca. 983, d.h. 983 g Festsubstanz enthalten 1 Äquivalent cyclisches Carbonat.

**Beispiel 10**

Beispiel 8 wird wiederholt, jedoch werden anstelle von 1759 GT des Bis-cyclocarbonats auf Basis von "Epicote" 1001 in analoger Weise 3194 GT flexibilisiertes Bis-cyclocarbonat (= 2 Äquivalente cyclisches Carbonat, 70 gew.%ig in DMDG), das 2 Äquivalente OH-Gruppen pro Mol Bis-cyclocarbonat enthält und nach Beispiel 14 erhalten worden ist, eingesetzt. Das resultierende Umsetzungsprodukt ist von hochviskoser bis wachsartiger Konsistenz. Es wird 70 gew.%ig in DMDG erhalten und hat ein Carbonatäquivalentgewicht von ca. 1118, d.h. 1118 g Festsubstanz enthalten 1 Äquivalent cyclisches Carbonat.

**Beispiel 11**

Herstellung von flexibilisierten Dicarbonsäuren aus langkettigen Diolen und Tetrahydrophthalsäureanhydrid.

830 GT (= 2 Äquivalente OH-Gruppen) handelsübliches "Capa" 205 (= Polycaprolactondiol, Molgewicht ca. 830, der Firma Interox, England) werden mit 304 GT (= 2 Mol) Tetrahydrophthalsäureanhydrid vermischt und in Gegenward von ca. 0,3 Gew.-% Triethylamin bei 80-120 °C zur Reaktion gebracht, bis das Umsetzungsprodukt eine Säurezahl von ca. 100 mg KOH/g Festsubstanz aufweist.

**Beispiel 12**

Analog Beispiel 11 werden 1100 GT (= 2 Äquivalente OH-Gruppen) handelsübliches "Pluriol" 3100 (= Polypropylenglykoldiol, Molgewicht ca. 1100, der Firma BASF AG) mit 304 GT (= 2 Mol) Tetrahydrophthalsäureanhydrid vermischt und in Gegenwart von ca. 0,3 Gew.-% Triethylamin bei 80-120 °C zur Reaktion gebracht, bis das Umsetzungsprodukt eine Säurezahl von ca. 80 mg KOH/g Festsubstanz aufweist.

**Beispiel 13**

Herstellung von Hydroxylgruppen enthaltenden flexibilisierten Bis-cyclocarbonaten aus Monoepoxy-monocyclocarbonaten und flexibilisierten Dicarbonsäuren mittels Epoxid-Carbonsäure-Reaktion.

832 GT eines Monoepoxy-monocyclocarbonats (= 2 Äquivalente Epoxid) auf Basis von handelsüblichem "Epicote" 828 (= Diglycidylether von Bisphenol A) werden auf ca. 60-80 °C erwärmt und in Gegenwart von 0,2-0,4 Gew.-% handelsüblichem Chromkatalysator AMC-2 (100 gew.-%ig, Produkt der Firma Cordova Chemicals, USA) zu einem Gemisch aus 1134 GT flexibilisierte Dicarbonsäure (= 2 Äquivalente HOOC-Gruppen), hergestellt nach Beispiel 11, und 220 GT DMDG einlaufen gelassen. Das Umsetzungsgemisch wird bei 80-120 °C bis zu einer Säurezahl von <5 und einer Epoxidzahl <0,1 reagieren gelassen. Das resultierende Umsetzungsprodukt wird ca. 90 gew.-%ig in DMDG erhalten und anschließend durch Zugabe von ca. 620 GT DMDG auf einen Gehalt von 70 Gew.-% Umsetzungsprodukt verdünnt. Die Ausbeute an dem gewünschten flexibilisierten Bis-cyclocarbonat beträgt praktisch 100%.

**Beispiel 14**

Beispiel 13 wird wiederholt, jedoch werden anstelle von 1134 GT flexibilisierte Dicarbonsäure aus Beispiel 11 und 220 GT DMDG in analoger Weise 1404 GT flexibilisierte Dicarbonsäure (= 2 Äquivalente HOOC-Gruppen), hergestellt nach Beispiel 12, und 250 GT DMDG eingesetzt und die Reaktion wie in Beispiel 13 beschrieben zu Ende geführt. Das resultierende Umsetzungsprodukt wird ca. 90 gew.-%ig in DMDG erhalten und anschließend durch Zugabe von ca. 708 GT DMDG auf einen Gehalt von 70 Gew.-% Umsetzungsprodukt verdünnt. Die Ausbeute an dem gewünschten flexibilisierten Bis-cyclocarbonat beträgt praktisch 100 %.

III. Bindemittelherstellung (Aminourethane)

Herstellung von Bindemitteln aus Polyaminen und Bis-cyclocarbonaten.

Beispiel 15

Eine Mischung aus 608 GT eines Mono-cyclocarbonates (= 2 Äquivalente Carbonat) auf Basis von Versaticsäureglycidylester, 4737 GT bis-cyclocarbonat (= 4 Äquivalente Carbonat, 70 gew.-%ig in DMDG), hergestellt nach Beispiel 8, 2489 GT Bis-cyclocarbonat (= 1,32 Äquivalente Carbonat, 70 gew.-%ig in DMDG), hergestellt nach Beispiel 9, und 1395 GT Bis-cyclocarbonat (= 0,68 Äquivalente Carbonat, 70 gew.-%ig in DMDG), hergestellt nach Beispiel 10, wird bei 60-90 °C mit einem Gemisch aus 330 GT Polyamin (= 2 Äquivalente $NH_2$), hergestellt nach Beispiel 2, und 645 GT Bishexamethylentriamin (= 6 Äquivalente $NH_2$), gelöst in 2493 GT Methoxypropanol als Lösungsmittel, zur Reaktion gebracht. Das resultierende Umsetzungsprodukt wird als 60 gew.-%ige hochviskose Bindemittelharzlösung erhalten. Die Aminzahl des Harzes beträgt ca. 37 mg KOH/g Festharz.

**Beispiel 16**

Zu einer Mischung aus 4737 GT Bis-cyclocarbonat (= 4 Äquivalente Carbonat, 70 gew.-%ig in DMDG), hergestellt nach Beispiel 8, 3018 GT Bis-cyclocarbonat (= 1,64 Äquivalente Carbonat, 70 gew.-%ig in DMDG), hergestellt nach Beispiel 9, und 732 GT Bis-cyclocarbonat (= 0,36 Äquivalente Carbonat, 70 gew.-%ig in DMDG), hergestellt nach Beispiel 10, wird ein Gemisch aus 298 GT Polyaminopolyol (= 1 Äquivalent $NH_2$), hergestellt nach Beispiel 5, 397 GT Polyamin (= 1 Äquivalent $NH_2$), hergestellt nach Beispiel 4, und 430 GT 6,6'-Iminobishexylamin (= 4 Äquivalente $NH_2$), gelöst in 2136 GT Methoxypropanol, einlaufen gelassen und das Reaktionsgemisch bei 60-90 °C bis zu einer Aminzahl von ca. 40 mg KOH/g Festharz umgesetzt. Das resultierende Umsetzungsprodukt wird als 60 gew.-%ige hochviskose Bindemittelharzlösung erhalten.

**Beispiel 17**

Zu einer Mischung aus 4737 GT Bis-cyclocarbonat (= 4 Äquivalente Carbonat, 70 gew.-%ig in DMDG), hergestellt nach Beispiel 8, 2576 GT Bis-cyclocarbonat (= 1,4 Äquivalente Carbonat, 70 gew.-%ig in DMDG), hergestellt nach Beispiel 9, und 1231 GT Bis-cyclocarbonat (= 0,6 Äquivalente Carbonat, 70 gew.-

%ig in DMDG), hergestellt nach Beispiel 10, wird ein Gemisch aus 624 GT Polyamin (= 4 Äquivalente $NH_2$), hergestellt nach Beispiel 3, 397 GT Polyamin (= 1 Äquivalent $NH_2$), hergestellt nach Beispiel 4, und 314 GT Polyaminopolyol (= 1 Äquivalent $NH_2$), hergestellt nach Beispiel 6, gelöst in 2286 GT Methoxypropanol, einlaufen gelassen und das Reaktionsgemisch bei 60-90°C bis zu einer Aminzahl von ca. 54 mg KOH/g Festharz umgesetzt. Das resultierende Umsetzungsprodukt wird als 60 gew.-%ige hochviskose Bindemittelharzlösung erhalten.

**Beispiel 18**

Eine Mischung aus 1664 GT eines Monoepoxymonocyclocarbonats (= 4 Äquivalente Epoxid ) auf Basis von "Epicote" 828 (= Diglycidylether von Bisphenol A), 1080 GT Capa 305 (= 6, Äquivalente OH) ("Capa" 305 = Polycaprolactontriol, Molgewicht ca. 540), 830 GT Capa 205 (=2 Äquivalente OH) ("Capa" 205 = Polycaprolactondiol, Molgewicht ca. 830) und 1507 GT DMDG wird bei 70-140°C in Gegenwart von ca. 0,3 Gew.-% $BF_3 \cdot (C_2H_5)_2O$, oder bei 50-100°C in Gegenwart von ca. 0,1 bis 0,3 Gew.-% $BF_3 \cdot CH_3COOH$, zur Reaktion gebracht, bis eine Epoxidzahl von ca. 0 erreicht ist. Zu der resultierenden Lösung werden nach Zusatz von ca. 0,3 Gew.-% Zinkacetylacetonat als Katalysator bei 30-80°C 1866 GT halbverkapptes Polyisocyanat (= 6 Äquivalente NCO), hergestellt nach Beispiel 7, zudosiert und bis zu einem NCO-Wert von ca. 0 reagieren lassen. Der resultierenden Mischung werden anschließend 2620 GT eines vollverkappte Polyisocyanatgruppen enthaltenden Bis-cyclocarbonats (= 4 Äquivalente Carbonat, 80 gew.-%ig in DMDG) auf Basis von Epicote 1001, hergestellt nach Beispiel 8, zugemischt, dann bei 60-90°C 576 GT Polyamin (= 4 Äquivalente $NH_2$), hergestellt nach Beispiel 1, und 352 GT 4,7-Dioxadecan-1,10-diamin (= 4 Äquivalente $NH_2$), gelöst in 1596 GT Methoxypropanol, einlaufen gelassen und das Reaktionsgemisch bei 60-90°C bis zu einer Aminzahl von ca. 26,5 mg KOH/g Festharz umgesetzt. Das resultierende Umsetzungsprodukt wird als 60 gew.-%ige hochviskose Bindemittelharzlösung erhalten.

**Beispiel 19**

Vorstufen:

I) 124 GT (= 1,05 Äquivalente OH) Butylglykol und 1 GT Triethylamin werden während 1 Stunde bei 20 bis 40°C zu 174 GT (= 2 Äquivalente NCO) Toluylendiisocyanat (= 80 Gew.-% 2,4- und 20 Gew.-% 2,6-Isomeres) einlaufen gelassen und anschließend bis zu einem NCO-Wert von ca. 13 bis 14 Gew.-% reagieren lassen, wobei ein halbverkapptes Polyisocyanat erhalten wird.

II) 415 GT (= 1 Äquivalent OH) Capa 205, 550 GT (= 1 Äquivalent OH) "Pluriol" 3100 und 4 GT Triethylamin werden mit 304 GT (= 2 Mol) Tetrahydrophthalsäureanhydrid vermengt und bei 80 bis 120°C bis zu einer Säurezahl von ca. 88 mg KOH/g Festharz umgesetzt. Zu 1269 GT der so erhaltenen flexibilisierten Dicarbonsäure (= 2 Äquivalente COOH) werden 832 GT eines Monoepoxymonocyclocarbonats (= 2 Äquivalente Epoxid) auf Basis von "Epicote" 828 zugegeben, das Gemisch auf ca. 60 bis 80°C erwärmt und nach Zusatz von 0,2 bis 0,4 Gew.-% Chromkatalysator AMC-2 und 3512 GT DMDG bis zu einer Epoxidzahl von ca. 0 und einer Säurezahl 5 reagieren lassen. Zu dieser auf ca. 30°C abgekühlten Mischung werden 1759 GT eines Bis-cyclocarbonats (= 2 Äquivalente Carbonat, 60 gew.-%ig in DMDG) auf Basis von Epicote 1001 langsam zugegeben. Anschließend werden 2384 GT halbverkapptes Polyisocyanat (= 8 Äquivalente NCO), hergestellt gemäß Vorstufe I, zugegeben und in Gegenwart von 0,3 Gew.-% "Triton" B bei 30 bis 80°C bis zu einem NCO-Wert von ca. 0 Gew.-% umgesetzt. Danach werden 608 GT (= 2 Äquivalente Carbonat) eines Mono-cyclocarbonats auf Basis von Versaticsäureglycidylester zugegeben. Die so erhaltene Mischung enthält ca. 60 Gew.-% Festharz und kann direkt weiterverarbeitet werden.

Bindemittel:

Zu 10364 GT Harzmischung aus Vorstufe II (= 8 Äquivalente Carbonat, 60 gew.-%ig in DMDG) wird ein Gemisch aus 660 GT Polyamin (= 4 Äquivalente $NH_2$), hergestellt nach Beispiel 2, und 430 GT Bishexamethylentriamin (= 4 Äquivalente $NH_2$), in 727 GT 1-Methoxypropanol-2 bei 60 bis 110°C langsam zugegeben und die Reaktion bis zu einer Aminzahl von ca. 46 mg KOH/g Festharz geführt. Das resultierende Umsetzungsprodukt wird als 60 gew.-%ige hochviskose Bindemittelharzlösung erhalten.

Vergleichsbeispiel 1

Bindemittel:

Zu 10364 GT Harzmischung aus Vorstufe II in Beispiel 19 (=8 Äquivalente Carbonat, 60 gew.-%ig in DMDG) werden 860 GT Bis-hexamethylentriamin (= 8 Äquivalente $NH_2$) in 573 GT 1-Methoxypropanol-2 bei 60 bis 100 °C langsam zugegeben und die Reaktion bis zu einer Aminzahl von ca. 31,7 mg KOH/g Festharz geführt. Das resultierende Umsetzungsprodukt wird als 60 gew.-%ige hochviskose Bindemittelharzlösung erhalten.

D) Verwendung der Bindemittel

Herstellung von Lackzubereitungen und deren Anwendung, insbesondere zur Elektrotauchlackierung, sowie Prüfung und Charakterisierung von daraus hergestellten Überzügen und Beschichtungen.

**Beispiel 20**

Aus den nach den Beispielen 15 bis 19 sowie nach dem Vergleichsbeispiel 1 erhaltenen Bindemittelharzen werden jeweils Klarlacke nach folgendem Ansatz A hergestellt.

Ansatz A:

334 GT Bindemittelharzlösung (60 gew.-%ig) aus einem der Beispiele 15 bis 19,
X GT 10 gew.-%ige wäßrige Ameisensäure entsprechend der Mengenangabe in Tabelle 1, berechnet auf das Bindemittelharz (= Festharz),
10 GT Dibutylzinndilaurat.

Die Bestandteile gemäß Ansatz A werden intensiv miteinander vermischt und durch nachfolgendes Zumischen von vollentsalztem Wasser unter Bildung einer wäßrigen Dispersion auf einen Festkörpergehalt von ca. 15 Gew.-% eingestellt. Die resultierende Dispersion wird der kataphoretischen Abscheidung in einem offenen Glasgefäß unterworfen. Als Kathode wird zinkphosphatiertes Stahlblech und als Anode, im Abstand von 5 bis 10 cm von der Kathode, blankes Stahlblech verwendet. Die Abscheidedauer beträgt 2 Minuten. Die jeweils angelegten Spannungen, die erzielten Filmdicken und die Eigenschaften der abgeschiedenen und anschließend gehärteten Filme (Einbrennbedingungen: 20 min Objekttemperatur von 160 °C) sind für die Filme aus den Bindemittelharzen der Beispiele 15 bis 19 sowie dem Vergleichsbeispiel 1 in Tabelle 1 in zusammengefaßter Form wiedergegeben.

Tabelle 1

| Ansatz A mit Bindemittelharz aus Beispiel Nr. | 15 | 16 | 17 | 18 | 19 |
|---|---|---|---|---|---|
| GT 10 gew.-%ige Ameisensäure im Ansatz A | 41,4 | 36,8 | 46 | 32,2 | 46 |
| pH-Wert des wäßrigen Kataphoresebades | 7,0 | 6,2 | 5,5 | 6,5 | 6,0 |
| max. Aufbruchspannung (Volt) | 300 | 250 | 250 | 350 | 350 |
| Abscheidespannung[1] (Volt) | 250 | 200 | 200 | 300 | 280 |
| Eigenschaften des gehärteten Films: | | | | | |
| Filmdicke (µm) | 20 | 18 | 18 | 24 | 20 |
| Verlauf[2] | 1-2 | 2-3 | 2-3 | 0-1 | 1 |
| Haftung[2] | 0 | 1-2 | 2-3 | 0 | 1 |
| Vernetzung[3] | >100 | >100 | >100 | >100 | >100 |
| Schlagtiefung[4] | 1,84 (160) | 1,38 (120) | 1,15 (100) | 1,84 (164) | 1,84 (160) |

1) bei 26 - 30°C
2) 0 ...bester Wert
   5 ... schlechtester Wert
3) MEK-Doppelwischungen bei 1 kg Auflage
   Anzahl der Doppelwischungen
4) mkg (inch-pound), gemäß ASTM-Norm D 2794

**Beispiel 21**

Aus dem nach Beispiel 18 hergestellten Bindemittelharz wird ein pigmentierter Lack nach folgenden Ansätzen B und C hergestellt.

Ansatz B (= Pigmentzusammensetzung):

84 GT Titandioxid (= Kronos RN 59 der Firma Kronos-Titangesellschaft, Leverkusen),
1 GT Ruß (= Raven 1170 der Firma Columbian Carbon, Hamburg),

10 GT Aluminiumsilikat (= Lanco ASP 200 der Firma Langer, Ritterhude),
5 GT Bleisilikat (= EP 202 der Firma Chemag, Frankfurt a.M.)

Ansatz C:

750 GT Bindemittelharzlösung (60 gew.-%ig) aus Beispiel 18,
180 GT Pigmentmischung aus Ansatz B,
19 GT Bleioctoat, oder 22,5 GT Dibutylzinndilaurat,
46 GT 10 gew.-%ige Ameisensäure,
9 GT Antikrater-Additiv (= Additol VXW 4922/280 der Firma Hoechst AG),
9 GT Verlaufmittel (= Additol VXL 1339 der Firma Hoechst AG),
18 GT 2,2,4-Trimethylpentandiol-1,3-monoisobutyrat.

Die zu prüfende Bindemittelharzlösung aus Beispiel 18 wird mit der Pigmentmischung aus Ansatz B in dem in Ansatz C angegebenen Mengenverhältnis auf einem Dreiwalzenstuhl bis zu einer Korngröße von <5 µm angerieben. Die resultierende Mischung wird gemäß der Rezeptur des Ansatzes C durch Einmischen der dort angegebenen weiteren Komponenten vervollständigt und die resultierende Mischung des Ansatzes C durch nachfolgendes Zumischen von vollentsalztem Wasser unter Bildung einer wäßrigen Dispersion auf einen Festkörpergehalt von ca. 18 Gew.-% eingestellt. Die erhaltene Dispersion wird der kataphoretischen Abscheidung in einem offenen Glasgefäß unterworfen. Als Kathode wird zinkphosphatiertes Stahlblech und als Anode, im Abstand von 5 bis 10 cm von der Kathode, blankes Stahlblech verwendet.

Die Abscheidedauer beträgt 2 Minuten. Die angelegten Spannungen, die erzielte Filmdicke und die Eigenschaften des abgeschiedenen und anschließend gehärteten Films (Einbrennbedingungen: 20 min Objekttemperatur von 160 °C) sind in der Tabelle 2 in zusammengefaßter Form wiedergegeben.

Tabelle 2

| Dispersion aus Ansatz C mit Bindemittelharz aus Beispiel 18 | Pigmentierungshöhe (Bindemittelharz:Pigment) = 1:0,4 (GT) |
|---|---|
| pH-Wert des Kataphoresebades | 6,6 |
| max. Aufbruchspannung (Volt) | 350 - 400 |
| Abscheidespannung 1) (Volt) | 300 |
| Eigenschaften des gehärteten Films: | |
| Filmdicke (µm) | 22 |
| Verlauf 2) | 0 |
| Haftung 2) | 0 |
| Vernetzung 3) | >100 |
| Schlagtiefung 4) | 1,38-1,61(120 - 140) |
| Erichsen-Tiefung (mm) | 8 - 9 |

1) bis 4) wie in Tabelle 1

**Beispiel 22**

Aus dem nach Beispiel 18 hergestellten Bindemittelharz wird eine pigmentierter Lack nach folgenden Ansätzen D und E hergestellt.

Ansatz D ( = Pigmentzusammensetzung):

56 GT Titandioxid ( = "Kronos" RN 59 der Firma Kronos-Titangesellschaft, Leverkusen),
1 GT Ruß ( = "Raven" 1170 der Firma Columbian Carbon, Hamburg),
10 GT Aluminiumsilikat ( = "Lanco" ASP 200 der Firma Langer, Ritterhude),
5 GT Beisilikat ( = EP 202 der Firma Chemag, Frankfurt),
28 GT Dibutylzinnoxid (Art-Nr. 803539, Fa. Merck, Darmstadt)

Ansatz E:

750 GT Bindemittelharzlösung (60 gew.-%ig) aus Beispiel 18,
180 GT Pigmentmischung aus Ansatz D,
46 GT 10 gew.-%ige Ameisensäure,
9 GT Antikrater-Additiv ( = "Additol" VXW 4922/280 der Firma Hoechst AG),
9 GT Verlaufmittel ( = "Additol" VXL 1339 der Firma Hoechst AG),
18 GT 2,2,4-Trimethylpentandiol-1,3-monoisobutyrat.

Die zu prüfende Bindemittelharzlösung aus Beispiel 18 wird mit der Pigmentmischung aus Ansatz D in dem in Ansatz E angegebenen Mengenverhältnis in einer Perlmühle bis zu einer Korngröße von < 5 µm angerieben. Die resultierende Mischung wird gemäß der Rezeptur des Ansatzes E durch Einmischen der dort angegebenen weiteren Komponenten vervollständigt und die resultierende Mischung des Ansatzes E durch nachfolgendes Zumischen von vollentsalztem Wasser unter Bildung einer wäßrigen Dispersion auf einen Festkörpergehalt von ca. 18 Gew.-% eingestellt. Die erhaltene Dispersion wird der kataphoretischen Abscheidung in einem offenen Glasgefäß unterworfen. Als Kathode wird zinkphosphatiertes Stahlblech und als Anode, im Abstand von 5 bis 10 cm von der Kathode, blankes Stahlblech verwendet.

Die Abscheidedauer beträgt 2 Minuten. Die angelegten Spannungen, die erzielte Filmdicke und die Eigenschaften des abgeschiedenen und anschließend gehärteten Films (Einbrennbedingungen: 20 min Objekttemperatur von 160 °C) sind in der Tabelle 3 in zusammengefaßter Form wiedergegeben.

Tabelle 3

| Dispersion aus Ansatz E mit Bindemittelharz aus Beispiel 18 | Pigmentierungshöhe (Bindemittelharz : Pigment) = 1 : o,4 (GT) |
|---|---|
| pH-Wert des Kataphoresebades | 6,7 |
| max. Aufbruchspannung (Volt) | 35o - 4oo |
| Abscheidespannung 1) (Volt) | 3oo |
| Eigenschaften des gehärteten Films: | |
| Filmdicke (µm) | 2o |
| Verlauf 2) | 0 |
| Haftung 2) | 0 |
| Vernetzung 3) | > 1oo |
| Schlagtiefung 4) | 1,38-1,61 (12o - 14o) |
| Erichsen-Tiefung (mm) | 8 - 9 |
| 1) bis 4) wie in Tabelle 1 | |

**Beispiel 23**

Außer durch direkte Pigmentierung (Beispiele 21 und 22) können die erfindungsgemäßen Bindemittel auch mittels einer Pigmentpaste (Ansatz F) pigmentiert werden.

Ansatz F (Pigmentpaste):

6,71 GT Pastenharz (90%ig;SWE 5219 der Firma Vianova, Graz),
1,46 GT Milchsäure (45%ig),
21,47 GT vollentsalztes Wasser,
4,82 GT Bleisilikatpaste (75%ig; "Heucoflow" der Fima Heubach, Langelsheim),
1,31 GT Ruß (= "Printex" 25 der Firma Degussa, Frankfurt),
11,81 GT Dibutylzinnoxid (Art-Nr. 803539, der Firma Merck, Darmstadt),
52,40 GT Titandioxid ("Kronos" RN 59 der Firma Kronos-Titangesellschaft, Leverkusen).

Pastenharz, Milchsäure und Wasser werden homogenisiert. Zu dieser Mischung werden die restlichen Komponenten der Rezeptur zugegeben. Der Ansatz wird mit einer Perlmühle bis zu einer Korngröße von < 5 µm angerieben.

Ansatz G:

750 GT Bindemittelharzlösung (60 Gew.-%) aus Beispiel 18,
46 GT Ameisensäure (10 Gew.-%)

9 GT Antikrater-Additiv (= "Additol" VXW 4922/280 der Firma Hoechst AG),
9 GT Verlaufsmittel (= "Additol" VXL 1339 der Firma Hoechst AG),
18 GT 2,2,4-Trimethylpentandiol-1,3-monoisobutyrat,
260 GT Pigmentpaste aus Ansatz F,
vollentsalztes Wasser (= VEW).

Aus dem zu prüfenden Bindemittel aus Beispiel 18, der Ameisensäure sowie den Additiven wird mit einer entsprechenden Menge VEW mittels eines Dissolvers ein Klarlack von ca. 55 Gew.-% bereitet. In diesen wird die in Ansatz G angegebene Menge der Pigmentpaste (Ansatz F) eindispergiert. Schließlich wird ein Badfestkörper von 18 Gew.-% mit VEW eingestellt.

Die erhaltene Dispersion wird der kataphoretischen Abscheidung mit einem offenen Glasgefäß unterworfen. Als Kathode wird zinkphosphatiertes Stahlblech und als Anode, im Abstand von 5 bis 10 cm von der Kathode, blankes Stahlblech verwendet.

Die Abscheidedauer beträgt 2 Minuten. Die angelegten Spannungen, die erzielte Filmdicke und die Eigenschaften des abgeschiedenen und anschließend gehärteten Films (Einbrennbedingungen: 20 min Objekttemperatur von 160 °C) sind in der Tabelle 4 in zusammengefaßter Form wiedergegeben.

Tabelle 4

| Dispersion aus Ansatz G mit Bindemittelharz aus Beispiel 18 | Pigmentierungshöhe (Bindemittelharz : Pigment) = 1 : o,4 (GT) |
|---|---|
| pH-Wert des Kataphoresebades | 5,8 |
| max. Aufbruchspannung (Volt) | 37o - 4oo |
| Abscheidespannung 1) (Volt) | 3oo |
| Eigenschaften des gehärteten Films: | |
| Filmdicke (µm) | 22 |
| Verlauf 2) | 0 |
| Haftung 2) | 0 |
| Vernetzung 3) | 1oo |
| Schlagtiefung 4) | 1,61-1,84(14o - 16o) |
| Erichsen-Tiefung (mm) | 8 - 9 |
| 1) bis 4) wie in Tabelle 1 | |

**Beispiel 24**

Bei den durch Deblockierung verkappter Polyisocyanate härtenden Kataphorese-Tauchlackierungen wird nach dem gegenwärtigen Stand der Technik bevorzugt unter Zuhilfenahme von Blei- oder Zinnkatalysatoren (z.B. Bleioctoat, Dibutylzinndilaurat) gehärtet. Bei Systemen mit $\beta$-Alkoxy- oder $\beta$-Dialkylaminoalkoholen (primäre oder sekundär) erweist sich die Verwendung von Bleikatalysatoren als besonders vorteilhaft. Es wurde nun überraschenderweise gefunden, daß die erfindungsgemäßen Polyamine (als solche oder auch als Bestandteil eines Harzes), vergleichsweise zu bekannten Aminen, eine hohe Affinität zu $Pb^{II}$-Ionen haben und demzufolge diese Ionen während der kataphoretischen Harz-Abscheidung mit dem Harz unerwartet stabil und in überraschend großer Menge komplexieren, so daß schließlich ausreichende Mengen an $Pb^{II}$ im abgeschiedenen Film in gleichmäßiger Verteilung vorliegen. Zum Beweis dieses vorteilhaften Verhaltens erfindungsgemäßer Amine werden folgende Versuche an Modellsubstanzen durchgeführt:

a) Eine wäßrige Suspension des schwerlöslichen $PbSO_4$ wird durch Zusatz von erfindungsgemäßen Polyamingemisch der Formel (I) aus Beispiel 1 in eine klare Lösung umgewandelt.
b) Zur Herstellung eines Harzmodells (Aminourethan) wird das erfindungsgemäße Polyamin aus Beispiel 1 mit 2 Äquivalenten Propylencarbonat umgesetzt. Das so erhaltene Aminourethan (Aminzahl = 228) kann in gleicher Weise wie oben unter a) beschrieben dazu benutzt werden, um in Wasser dispergiertes $PbSO_4$ zu lösen.
c) Ein unter Verwendung des erfindungsgemäßen Polyamins aus Beispiel 1 analog dem Beispiel 19 hergestelltes Bindemittelharz wird mit einem analogen Bindemittelharz aus dem Vergleichsbeispiel 1, das jedoch das erfindungsgemäße Polyamin nicht beinhaltet, in folgender Weise verglichen: Aus den Harzen werden jeweils vergleichbare Kataphoreselacke unter Zusatz von Bleioctoat formuliert, die sogleich auf Bonder-Blechen abgeschieden werden. Die abgeschiedenen Lackfilme werden, ohne daß sie gehärtet werden, mit Ethylenglykol/Aceton (1/1) abgelöst. Nach Aufschluß des organischen Materials wird die jeweilige Bleikonzentration polarographisch bestimmt. Der Lackfilm mit erfindungsgemäßem Polyamin enthält im Mittel 65 ppm Pb, während der Lackfilm mit Bis-hexamethylentriamin und ohne erfindungsgemäßes Polyamin im Mittel nur 10 ppm Pb enthält. Dieses Ergebnis ist unerwartet und außerordentlich überraschend.

Bezüglich prinzipieller Aspekte einer stabilen Komplexierung von $Pb^{II}$-Ionen in Lösung kann auf Gmelin 47, Pb [C] 1699ff verwiesen werden.

## Patentansprüche

**Patentansprüche für folgende Vertragsstaaten : AT, BE, CH, DE, FR, GB, GR, IT, LI, NL, SE**

1. Aminourethane, erhalten durch Umsetzung von
(A) Polyaminen der allgemeinen Formeln (I) und/oder (II)

$$H_2N-R-\!\!\left[NH-CH_2-\underset{OH}{CH}-CH_2-NH-R\right]_p\!\!-NH_2 \qquad (I)$$

$$D-CH_2-\underset{OH}{CH}-CH_2-NH-R-NH_2 \qquad (II)$$

in denen bedeuten:
R =

$$-\!\!\left[(CR^1R^2)_n-Z^1-(CR^3R^4)_m-Z^2-(CR^5R^6)_l\right]_k ,$$

| | |
|---|---|
| $Z^1$,$Z^2$ = | O, S, NH, N-Alkyl mit bis zu 8 C-Atomen, N-Phenyl, N-Mono-, -Di- oder -Trialkylphenyl mit 1 bis 4 C-Atomen pro Alkylgruppe, einen zweiwertigen Phenylenrest, der gegebenenfalls substituiert ist, und/oder eine chemische Bindung, |
| $R^1$ bis $R^6$ = | H, $CH_3$, $C_2H_5$, Phenyl oder Mono-, Di- oder Trialkylphenyl mit 1 bis 4 C-Atomen pro Alkylgruppe, |
| n,m,l = | Null bis 12, wobei die Summe aus $n + m + l \geqq 2$ ist, |
| k = | 1 bis 6; |
| p = | 1 bis 5; |
| D = | |

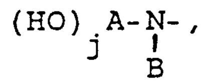

worin A für einen aliphatischen Rest mit 2 bis 5 C-Atomen, j für 1 bis 5 und B für H, ($C_1$-$C_4$)-Alkyl oder $(HO)_jA$-stehen

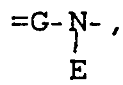

worin G für ($C_1$-$C_{18}$)-Alkyl, ($C_5$-$C_9$)Cycloalkyl, das durch ($C_1$-$C_3$)-Alkylgruppen substituiert sein kann und E für H oder G stehen,

oder D für ($C_2$-$C_8$)-Alkoxy, oder für ($C_5$-$C_{15}$)-Acyloxy steht,

(B) gegebenenfalls von weiteren Polyaminen,

(C) mit Verbindungen, die im Mittel mindestens zwei endständige 2-Oxo-1,3-dioxolan-Gruppen pro Molekül enthalten sowie

(D) gegebenenfalls monofunktionell reagierenden Verbindungen als Kettenstopper.

**2.** Aminourethane gemäß Anspruch 1, dadurch gekennzeichnet, daß in den Formeln (I)/(II) bedeuten:

| | |
|---|---|
| $Z^1$,$Z^2$ = | O, NH, N-($C_1$-$C_6$)Alkyl, oder eine chemische Bindung; |
| $R^1$ bis $R^6$ = | H, $CH_3$ oder $C_2H_5$; |
| n,m,l = | Null bis 6; |
| k = | 1 bis 3; |
| p = | 1 oder 2. |

**3.** Aminourethane gemäß Anspruch 1 und/oder 2, dadurch gekennzeichnet, daß R für einen zweiwertigen Kohlenwasserstoffrest mit 1 bis 18 C-Atomen steht, der durch NH-Gruppen unterbrochen sein kann.

**4.** Aminourethane gemäß mindestens einem der Ansprüche 1 bis 3, dadurch gekennzeichnet, daß R für einen Rest aus einer Verbindung der Gruppe 1,6-Hexandiamin, dessen Methylgruppen gegebenenfalls zusätzlich durch eine oder zwei Methyl- oder Ethylgruppen substituiert sind, Trimethylhexamethylendiamin, 2-Methylpentandiamin, 2-Ethylbutandiamin, 6,6'-Imino-bis-hexylamin, 4,7-Dioxadecan-1,10-diamin, 4,9-Dioxadecan-1,12-diamin, 4,7,10-Trioxatridecan-1,13-diamin oder Polyoxypropylendiamin mit mittlerem Molgewicht von ca. 200 - 400 steht.

**5.** Aminourethane gemäß mindestens einem der Ansprüche 1 bis 4, dadurch gekennzeichnet, daß die Polyamine (B) die Formel (III)

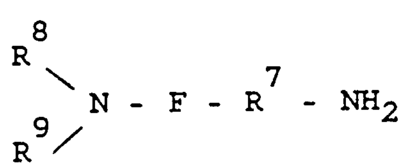

(III)

besitzen, in der bedeuten:

| | |
|---|---|
| $R^7$ = | zweiwertiger Kohlenwasserstoffrest, vorzugsweise ein geradkettiger oder verzweigter Alkylenrest mit 2 bis 18 C-Atomen, der gegebenenfalls inerte Gruppen tragen kann, |
| $R^8$, $R^9$ = | gleich oder verschieden, Wasserstoff, Alkyl mit 1 bis 8 C-Atomen oder Hydroxyalkyl mit 1 bis 8 C-Atomen im Alkylrest, wobei $R^8$ und $R^9$ auch eine cyclische Ringverbindung sein können, |
| F = | chemische Bindung oder $-(R^7-NH)_r-R^7-NH-$ , worin r Null oder eine ganze Zahl von 1 bis 6 ist und $R^7$ die vorstehende Bedeutung hat. |

6. Aminourethane gemäß mindestens einem der Ansprüche 1 bis 5, dadurch gekennzeichnet, daß die Verbindungen (C) die allgemeine Formel (IV) besitzen

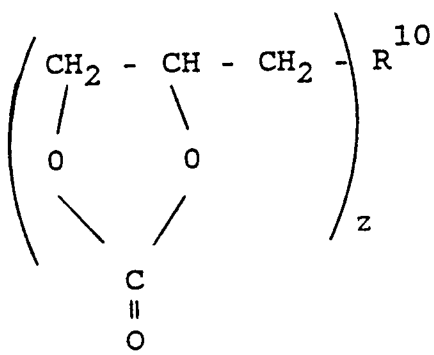

(IV)

in der bedeuten

$R^{10}$ = z-wertiger Rest eines Polyethers, Polyetherpolyols, Polyesters, Polyesterpolyols, der gegebenenfalls auch ($NR^2$)-Gruppen enthalten kann, wobei $R^2$ für Wasserstoff, Alkyl mit 1 bis 8 C-Atomen oder Hydroxyalkyl mit 1 bis 8 C-Atomen steht, oder
einen z-wertigen Kohlenwasserstoffrest, vorzugsweise Alkylenrest mit 2 bis 18 C-Atomen der gegebenenfalls inerte Gruppen tragen kann, oder
einen z-wertigen Poly(sek.)aminrest oder
den z-wertigen Rest eines Umsetzungsproduktes einer Epoxy-Carbonat-Verbindung mit Polyaminen, Polyolen, Polycaprolactonpolyolen, OH-gruppenhaltigen Polyestern, Polyethern, Polyglykolen, hydroxy-, carboxyl- und aminofunktionellen Polymerölen mit mittleren Molekulargewichten von 800 bis 10 000, Polycarbonsäuren, hydroxy- oder aminofunktionellen Polytetrahydrofuranen und Reaktionsprodukten von Polyaminen mit Glycidylestern von $\alpha,\alpha$-Dialkylalkanmonocarbonsäuren der Summenformel $C_{12-14}H_{22-26}O_3$ oder mit ®Versatic-säureglycidylester,

z = 2 bis 5, vorzugsweise 2.

7. Aminourethane gemäß mindestens einem der Ansprüche 1 bis 6, dadurch gekennzeichnet, daß es sich bei den Kettenstoppern (D) um Monocarbonate, Monoepoxide, teilweise blockierte Polyisocyanate oder aminogruppenhaltige Verbindungen, die nur eine primäre Aminogruppe besitzen, handelt.

8. Aminourethane nach Anspruch 7, dadurch gekennzeichnet, daß die Kettenstopper (D) die Formel (VI)

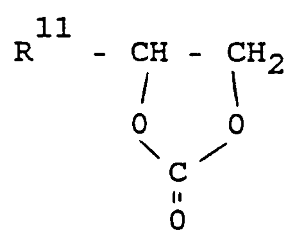

(VI)

besitzen, in der $R^{11}$ Wasserstoff, Alkyl mit 1 bis 18, vorzugsweise 1 bis 10 C-Atomen, oder Reste des ®Versaticsäureglycidylesters, Glycidylester oder Glycidylether darstellt.

9. Aminourethane nach Anspruch 7, dadurch gekennzeichnet, daß die Kettenstopper (D) die Formel (II) besitzen.

10. Aminourethane nach mindestens einem der Ansprüche 1 bis 9, dadurch gekennzeichnet, daß die Menge an (A) 5 bis 60 Mol-%, die von (B) 0 bis 60 Mol-%, die von (C) 25 bis 70 Mol-% und die von (D) 0 bis 70 Mol-% beträgt.

**11.** Aminourethane gemäß mindestens einem der Ansprüche 1 bis 10, dadurch gekennzeichnet, daß sie die Formel (VII)

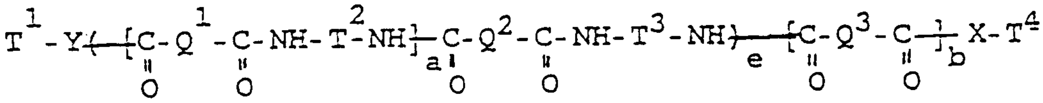 (VII)

besitzen, in der bedeuten:
a, b, e = eine Zahl von Null bis 5, wobei für e = Null gilt, daß b ≧ 1, und für e ≧ 1 gilt, daß Null ≦ a, b ≦ 5,

X = -HN-M-NH- wenn b ≧ 1, oder eine chemische Bindung wenn b = Null,

Y = -HN-M-NH-,

M =

$-(CH_2)_6-NH-(CH_2)_6-$ oder 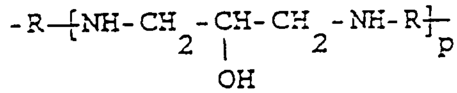

mit p = 1 bis 5,

R = Bedeutung wie in Anspruch 1.

$T^1$,$T^4$ = gleich oder verschieden und gleich

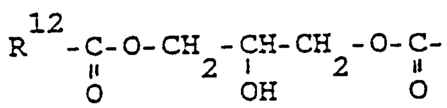,

mit

$R^{12}$ =

$(C_5-C_{15})$-Alkyl,

vorzugsweise verzweigt,

$T^2$,$T^3$ = M oder einen linearen aliphatischen Polyetherrest mit einem mittleren Molgewicht bis zu 400, wobei $T^2$ und $T^3$ gleich oder verschieden sein können,

$Q^1$,$Q^3$ =

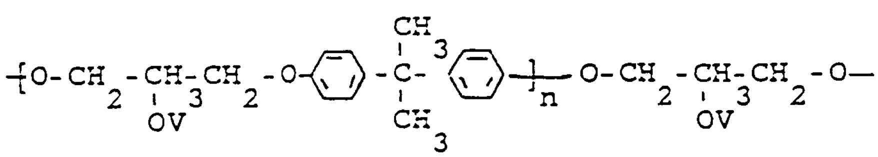

mit n = 1-3, wobei $Q^1$ und $Q^3$ gleich oder verschieden sein können, $V^3$ = Wasserstoff oder eine Gruppe der Formel VIII nach Anspruch 12, und

$Q^2$ =

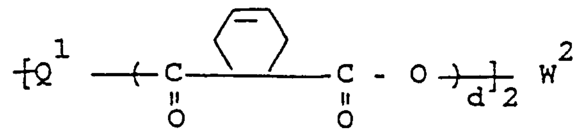

mit d = Null oder 1 und $W^2$ = ein zweibindiger Rest aus der Gruppe lineare aliphatische Polyesteralkohole mit mittleren Molgewichten bis zu 2000, lineare oder verzweigte aliphatische Polyether mit mittleren Molgewichten bis zu 2000.

**12.** Aminourethane gemäß mindestens einen der Ansprüche 1 bis 11, dadurch gekennzeichnet, daß sie die Formel (VII)

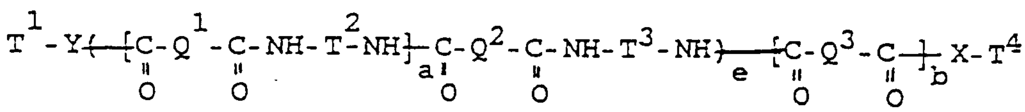 (VII)

besitzen, in der
$T^1$ und $T^4$ gleich oder verschieden sind und eine Gruppe der Formel (VIII)

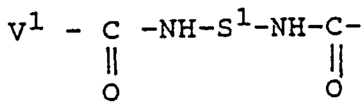 (VIII)

bedeuten,
wobei $V^1$ einen organischen Rest aus einer H-aktiven Verbindung der Formel H-$V^1$ aus der Gruppe der aliphatischen, cycloaliphatischen, alkylaromatischen, oder durch N-Heterocyclen substituierten einwertigen Alkohole, vorzugsweise mit 1-15 C-Atomen, oder durch Aminogruppen, ($C_1$-$C_6$)-Alkoxygruppen, Phenyloxygruppen oder substituierten Phenyloxygruppen substituierter ($C_2$-$C_5$)Alkohole, oder der Oxime aliphatischer ($C_3$-$C_8$)-Ketone, oder heterocyclischer N-H-azider Verbindungen mit bis zu 8 C-Atomen, oder C-H-azider Verbindungen mit bis zu 8 C-Atomen, bedeutet und $S^1$ für einen 2,4- und/oder 2,6-disubstituierten Toluylenrest oder den Methylen-trimethylcyclohexanylrest der Formel

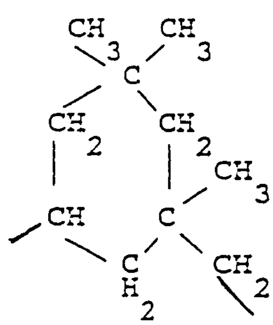

steht,
und die Symbole a, b, e, X, Y, $T^2$, $T^3$, $Q^1$, $Q^2$ und $Q^3$ die in Anspruch 11, angegebenen Bedeutungen haben.

**13.** Aminourethane gemäß mindestens einem der Ansprüche 1 bis 11, dadurch gekennzeichnet, daß sie die Formel (VII)

$$T^1-Y\left(\left[\underset{\overset{\|}{O}}{C}-Q^1-\underset{\overset{\|}{O}}{C}-NH-T^2-NH\right]_a\underset{\overset{\|}{O}}{C}-Q^2-\underset{\overset{\|}{O}}{C}-NH-T^3-NH\right)_e\left[\underset{\overset{\|}{O}}{C}-Q^3-\underset{\overset{\|}{O}}{C}\right]_b X-T^4 \qquad (VII)$$

besitzen, in der $T^1$ und $T^4$ gleich oder verschieden sind und eine Gruppe der Formeln (Ia) oder (IIa) bedeuten

$$H_2N-R\left[NH-CH_2-\underset{OH}{\underset{|}{CH}}-CH_2-NH-R\right]_p NH- \qquad (Ia)$$

$$D-CH_2-\underset{OH}{\underset{|}{CH}}-CH_2-NH-R-NH- \qquad (IIa)$$

worin R, D und p die Bedeutungen wie in Formeln (I), und (II) gemäß Anspruch 1 haben, X und Y eine chemische Bindung bedeuten, b eine Zahl von 1 bis 5 ist und die Symbole a, e, $T^2$, $T^3$, $Q^1$, $Q^2$ und $Q^3$ die in Anspruch 11 angegebenen Bedeutungen haben.

**14.** Aminourethane gemäß mindestens einem der Ansprüche 1 bis 11, dadurch gekennzeichnet, daß sie die Formel (VII)

$$T^1-Y\left(\left[\underset{\overset{\|}{O}}{C}-Q^1-\underset{\overset{\|}{O}}{C}-NH-T^2-NH\right]_a\underset{\overset{\|}{O}}{C}-Q^2-\underset{\overset{\|}{O}}{C}-NH-T^3-NH\right)_e\left[\underset{\overset{\|}{O}}{C}-Q^3-\underset{\overset{\|}{O}}{C}\right]_b X-T^4 \qquad (VII)$$

besitzen in der $T^1$ und $T^4$ gleich oder verschieden sind und eine Gruppe der Formel

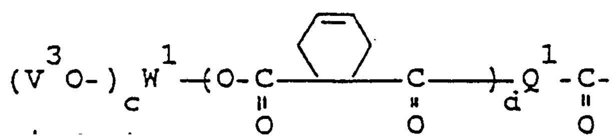

bedeuten, mit c = 1-3; d = Null oder 1, $V^3$ = Wasserstoff oder eine Gruppe der Formel VIII nach Anspruch 12, $W^1$ = ein 2- bis 4-wertiger Rest aus der Gruppe lineare oder verzweigte aliphatische Polyesteralkohole mit mittleren Molgewichten bis zu 1000, Reste aus Trimethylolpropan, Pentaerythrit, Ethylenglykol, Propylenglykol, trihydroxyfunktionelles Polycaprolacton, und die Symbole a, b, e, X, $T^2$, $T^3$, $Q^1$, $Q^2$ und $Q^3$ die in Anspruch 11 angegebenen Bedeutungen haben.

**15.** Aminourethane gemäß mindestens einem der Ansprüche 1 bis 11, dadurch gekennzeichnet, daß sie die Formel (VII)

$$T^1-Y\left(\left[\underset{\overset{\|}{O}}{C}-Q^1-\underset{\overset{\|}{O}}{C}-NH-T^2-NH\right]_a\underset{\overset{\|}{O}}{C}-Q^2-\underset{\overset{\|}{O}}{C}-NH-T^3-NH\right)_e\left[\underset{\overset{\|}{O}}{C}-Q^3-\underset{\overset{\|}{O}}{C}\right]_b X-T^4 \qquad (VII)$$

besitzen, in der $T^1$ Wasserstoff ist, wenn Y = -HN-M-NH- und $T^4$ Wasserstoff ist, wenn b = Null und X für eine

chemische Bindung steht,
und die Symbole a, b, e, X, Y, M, $T^2$, $T^3$, $Q^1$, $Q^2$, und $Q^3$ die in Anspruch 11 angegebenen Bedeutungen haben.

**16.** Aminourethane nach Anspruch 11, dadurch gekennzeichnet, daß in Formel (VII) der Rest R in $T^1$ und/oder $T^4$ ein Rest aus einer Verbindung der Gruppe 1,6-Hexandiamin, dessen Methylgruppen gegebenenfalls zusätzlich durch eine oder zwei Methyl- oder Ethylgruppen substituiert sind, Trimethylhexamethylendiamin, 2-Methylpentandiamin, 2-Ethylbutandiamin, 6,6'-Imino-bis-hexylamin, 4,7-Dioxadecan-1,10-diamin, 4,9-Dioxadecan-1,12-diamin, 4,7,10-Trioxatridecan-1,13-diamin, Polyoxypropylendiamin mit mittlerem Molgewicht von ca. 200 - 400, oder Ethylendiamin, 1,3-Propylendiamin, 1,2-Propylendiamin, 1,4-Butandiamin, 1,5-Pentandiamin, N,N'-Dimethyl-N,N'-bis(aminopropyl)-ethylendiamin, N-Methyldipropylentriamin oder Diethylentriamin, Dipropylentriamin sowie höhere homologe Polyamine wie Pentaethylenhexamin, bedeutet,
ferner in R die Reste $Z^1$, $Z^2$ für Sauerstoff oder einen zweiwertigen Phenylenrest, der gegebenenfalls substituiert ist, $R^1$ bis $R^6$ für H,
$CH_3$, $(C_1\text{-}C_4)$-Alkylphenyl oder Phenyl, n, m, l für 0 bis 6, k für 1 bis 3 stehen,
a, b für 1 bis 3 und $V^3$ für H und/oder zumindest teilweise für einen Rest aus einem teilverkappten Polyisocyanat stehen, und
$Q^1$, $Q^3$ einen Rest aus dem Diglycidyläther von Bisphenol A bedeuten.

**17.** Aminourethane nach mindestens einem der Ansprüche 1 bis 16, dadurch gekennzeichnet, daß ein Teil oder alle der vorhandenen Hydroxyl- und/oder Aminogruppen mit teilverkappten Polyisocyanaten umgesetzt sind.

**18.** Aminourethane nach mindestens einem der Ansprüche 1 bis 17, dadurch gekennzeichnet, daß in den Verbindungen der Formel (VII) die basischen Aminogruppen teilweise oder vollständig durch Säuren oder neutralisierend wirkende Substanzen neutralisiert sind und die Aminourethane in wasserverdünnbarer und elektrisch abscheidbarer Dispersionsform vorliegen.

**19.** Verfahren zur Herstellung der Aminourethane nach mindestens einem der Ansprüche 1 bis 18, dadurch gekennzeichnet, daß man die Verbindungen (A) und (C) sowie gegebenenfalls (B) und (D) nach Maßgabe der Stöchiometrie bei Temperaturen zwischen 20 und 150 °C, gegebenenfalls unter Zusatz von Katalysatoren, umsetzt.

**20.** Verfahren nach Anspruch 19, dadurch gekennzeichnet, daß die Umsetzung in Gegenwart von inerten organischen Lösungsmitteln erfolgt.

**21.** Verfahren nach Anspruch 19 und/oder 20, dadurch gekennzeichnet, daß die Umsetzung solange durchgeführt wird, bis eine konstante Aminzahl des resultierenden Umsetzungsproduktes erreicht ist und der Cyclocarbonatgehalt des Reaktionsgemisches den Wert 0 erreicht hat.

**22.** Verfahren nach mindestens einem der Ansprüche 19 bis 21, dadurch gekennzeichnet, daß man den erhaltenen Aminourethanen, vorzugsweise gelöst in einem inerten wassermischbaren organischen Lösungsmittel, unter teilweiser oder vollständiger Neutralisation der basischen Aminogruppen solchermaßen wasserlösliche Säuren und gegebenenfalls Wasser zusetzt, daß das Produkt in wasserverdünnbarer und elektrisch abscheidbarer Dispersionsform erhalten wird.

**23.** Härtbare Mischungen, gekennzeichnet durch einen Gehalt an Aminourethanen gemäß mindestens einem der Ansprüche 1 bis 18 oder erhalten nach dem Verfahren gemäß mindestens einer der Ansprüche 19 bis 22.

**24.** Verwendung der Aminourethane nach einem oder mehreren der Ansprüche 1 bis 18 oder erhalten nach dem Verfahren gemäß mindestens einem der Ansprüche 19 bis 22 als Bindemittel in härtbaren Mischungen, insbesondere Lackzubereitungen.

**25.** Verwendung nach Anspruch 24, dadurch gekennzeichnet, daß es sich um wäßrige Systeme handelt.

**26.** Verwendung nach Anspruch 24 und/oder 25 als Elektrotauchlacke.

**27.** Verwendung nach Anspruch 26, wobei die basischen Aminogruppen teilweise oder vollständig neutralisiert sind.

**Patentansprüche für folgenden Vertragsstaat : ES**

**1.** Verfahren zur Herstellung von Aminourethanen, dadurch gekennzeichnet, daß man
(A) Polyamine der allgemeinen Formeln (I) und/oder (II)

$$H_2N-R\!\left[NH-CH_2-\underset{\substack{|\\ OH}}{CH}-CH_2-NH-R\right]_p NH_2 \qquad (I)$$

$$D-CH_2-\underset{\substack{|\\ OH}}{CH}-CH_2-NH-R-NH_2 \qquad (II)$$

in denen bedeuten:
R =

$$\left[(CR^1R^2)_n Z^1-(CR^3R^4)_m Z^2-(CR^5R^6)_l\right]_k ,$$

| | |
|---|---|
| $Z^1,Z^2$ = | O, S, NH, N-Alkyl mit bis zu 8 C-Atomen, N-Phenyl, N-Mono-, -Di- oder -Trialkylphenyl mit 1 bis 4 C-Atomen pro Alkylgruppe, einen zweiwertigen Phenylenrest, der gegebenenfalls substituiert ist, und/oder eine chemische Bindung, |
| $R^1$ bis $R^6$ = | H, $CH_3$, $C_2H_5$, Phenyl oder Mono-, Di- oder Trialkylphenyl mit 1 bis 4 C-Atomen pro Alkylgruppe, |
| n,m,l = | Null bis 12, wobei die Summe aus $n + m + l \geqq 2$ ist, |
| k = | 1 bis 6; |
| p = | 1 bis 5; |
| D = | |

$$(HO)_j A-\underset{\substack{|\\ B}}{N}- ,$$

worin A für einen aliphatischen Rest mit 2 bis 5 C-Atomen, j für 1 bis 5 und B für H, $(C_1-C_4)$-Alkyl oder $(HO)_jA$- stehen

$$=G-\underset{\substack{|\\ E}}{N}- ,$$

worin G für $(C_1-C_8)$-Alkyl, $(C_5-C_9)$Cycloalkyl, das durch $(C_1-C_3)$-Alkylgruppen substituiert sein kann und E für H oder G stehen,

oder D für $(C_2-C_8)$-Alkoxy, oder für $(C_5-C_{15})$-Acyloxy steht,
(B) gegebenenfalls weitere Polyamine,
(C) mit Verbindungen, die im Mittel mindestens zwei endständige 2-Oxo-1,3-dioxolan-Gruppen pro Molekül enthalten sowie
(D) gegebenenfalls monofunktionell reagierenden Verbindungen als Kettenstopper,

bei Temperaturen zwischen 20 und 150 °C, gegebenenfalls unter Zusatz von Katalysatoren, umsetzt.

2. Verfahren nach Anspruch 1, dadurch gekennzeichnet, daß die Umsetzung in Gegenwart von inerten organischen Lösungsmitteln erfolgt.

3. Verfahren nach Anspruch 1 und/oder 2, dadurch gekennzeichnet, daß die Umsetzung solange durchgeführt wird bis eine konstante Aminzahl des resultierenden Umsetzungsproduktes erreicht ist und der Cyclocarbonatgehalt des Reaktionsgemisches den Wert Null erreicht hat.

4. Verfahren nach mindestens einem der Ansprüche 1 bis 3, dadurch gekennzeichnet, daß man den erhaltenen Aminourethanen vorzugsweise gelöst in einem inerten, wassermischbaren organischen Lösungsmittel, unter teilweiser oder vollständiger Neutralisation der basischen Aminogruppen solchermaßen wasserlösliche Säuren und gegebenenfalls Wasser zusetzt, daß das Produkt in wasserverdünnbarer und elektrisch abscheidbarer Dispersionsform erhalten wird.

5. Verfahren nach mindestens einem der Ansprüche 1 bis 4, dadurch gekennzeichnet, daß in den Formeln (I)/(III) bedeuten:

$Z^1,Z^2$ = O, NH, N-($C_1$-$C_6$)Alkyl, oder eine chemische Bindung;
$R^1$ bis $R^6$ = H, CH oder $C_2H_5$;
n,m,l = Null bis 6;
k = 1 bis 3;
p = 1 oder 2.

6. Verfahren nach mindestens einem der Ansprüche 1 bis 5, dadurch gekennzeichnet, daß R für einen zweiwertigen Kohlenwasserstoffrest mit 1 bis 18 C-Atomen steht, der durch NH-Gruppen unterbrochen sein kann.

7. Verfahren nach mindestens einem der Ansprüche 1 bis 6, dadurch gekennzeichnet, daß R für einen Rest aus einer Verbindung der Gruppe 1,6-Hexandiamin, dessen Methylgruppen gegebenenfalls zusätzlich durch eine oder zwei Methyl- oder Ethylgruppen substituiert sind, Trimethylhexamethylendiamin, 2-Methylpentandiamin, 2-Ethylbutandiamin, 6,6'-Imino-bis-hexylamin, 4,7-Dioxadecan-1,10-diamin, 4,9-Dioxadecan-1,12-diamin, 4,7,10-Trioxatridecan-1,13-diamin oder Polyoxypropylendiamin mit mittlerem Molgewicht von ca. 200 - 400 steht.

8. Verfahren nach mindestens einem der Ansprüche 1 bis 7, dadurch gekennzeichnet, daß die Polyamine (B) die Formel (III)

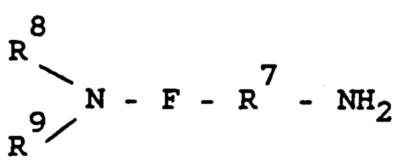

(III)

besitzen, in der bedeuten:

$R^7$ = zweiwertiger Kohlenwasserstoffrest, vorzugsweise ein geradkettiger oder verzweigter Alkylenrest mit 2 bis 18 C-Atomen, der gegebenenfalls inerte Gruppen tragen kann,
$R^8$, $R^9$ = gleich oder verschieden, Wasserstoff, Alkyl mit 1 bis 8 C-Atomen oder Hydroxyalkyl mit 1 bis 8 C-Atomen im Alkylrest, wobei $R^8$ und $R^9$ auch eine cyclische Ringverbindung ergeben können,
F = chemische Bindung oder $-(R^7-NH)_r-R^7-NH-$, worin r Null oder eine ganze Zahl von 1 bis 6 ist und $R^7$ die vorstehende Bedeutung hat.

9. Verfahren nach mindestens einem der Ansprüche 1 bis 8, dadurch gekennzeichnet, daß die Verbindungen (C) die allgemeine Formel (IV) besitzen

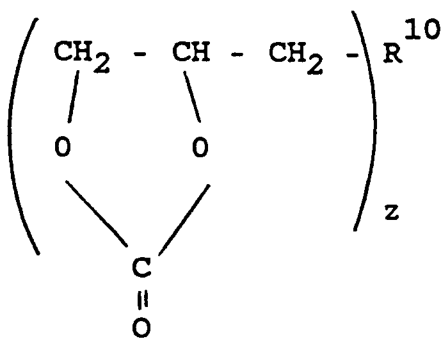

(IV)

in der bedeuten

$R^{10}$ = z-wertiger Rest eines Polyethers, Polyetherpolyols, Polyesters, Polyesterpolyols, der gegebenenfalls auch ($NR^2$)-Gruppen enthalten kann, wobei $R^2$ für Wasserstoff, Alkyl mit 1 bis 8 C-Atomen oder Hydroxyalkyl mit 1 bis 8 C-Atomen steht, oder
einen z-wertigen Kohlenwasserstoffrest, vorzugsweise Alkylenrest mit 2 bis 18 C-Atomen der gegebenenfalls inerte Gruppen tragen kann, oder
einen z-wertigen Poly(sek.)aminrest oder
den z-wertigen Rest eines Umsetzungsproduktes einer Epoxy-Carbonat-Verbindung mit Polyaminen, Polyolen, Polycaprolactonpolyolen, OH-gruppenhaltigen Polyestern, Polyethern, Polyglykolen, hydroxy-, carboxyl- und aminofunktionellen Polymerölen mit mittleren Molekulargewichten von 800 bis 10 000, Polycarbonsäuren, hydroxy- oder aminofunktionellen Polytetrahydrofuranen und Reaktionsprodukten von Polyaminen mit Glycidylestern von $\alpha,\alpha$-Dialkylalkanmonocarbonsäuren der Summenformel $C_{12-14}H_{22-26}O_3$ oder mit ®Versatic-säureglycidylester,

z = 2 bis 5, vorzugsweise 2.

**10.** Verfahren nach mindestens einem der Ansprüche 1 bis 9, dadurch gekennzeichnet, daß es sich bei den Kettenstoppern (D) um Monocarbonate, Monoepoxide, teilweise blockierte Polyisocyanate oder aminogruppenhaltige Verbindungen, die nur eine primäre Aminogruppe besitzen, handelt.

**11.** Verfahren nach Anspruch 10, dadurch gekennzeichnet, daß die Kettenstopper (D) die Formel (VI)

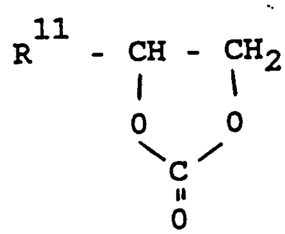

(VI)

besitzen, in der $R^{11}$ Wasserstoff, Alkyl mit 1 bis 18, vorzugsweise 1 bis 10 C-Atomen, oder Rest des ®Versatic-säureglycidylesters, Glycidylester oder Glycidylether darstellt.

**12.** Verfahren nach Anspruch 11, dadurch gekennzeichnet, daß die Kettenstopper (D) die Formel (II) besitzen.

**13.** Verfahren nach mindestens einem der Ansprüche 1 bis 12, dadurch gekennzeichnet, daß die Verbindungen (A) und (C) sowie gegebenenfalls (B) und (D) in solchen Mengen eingesetzt werden, daß die Menge an (A) im Aminourethan 5 bis 60 Mol-%, die von (B) 0 bis 60 Mol-%, die von (C) 25 bis 70 Mol-% und die von (D) 0 bis 70Mol-% beträgt.

**14.** Verfahren gemäß mindestens einem der Ansprüche 1 bis 13, dadurch gekennzeichnet, daß die erhaltenen Aminourethane die Formel (VII)

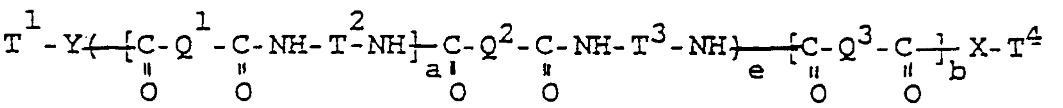 (VII)

besitzen, in der bedeuten;

a, b, e = eine Zahl von Null bis 5, wobei für e = Null gilt, daß b ≧ 1, und für e ≧ 1 gilt, daß Null ≦ a, b ≦ 5,

X = -HN-M-NH- wenn b ≧ 1, oder eine chemische Bindung wenn b = Null,

Y = -HN-M-NH-,

M =

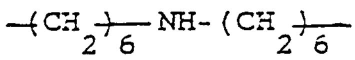 oder 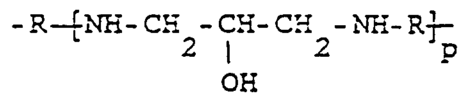

mit p = 1 bis 5,

R = Bedeutung wie in Anspruch 1.

$T^1$,$T^4$ = gleich oder verschieden und gleich

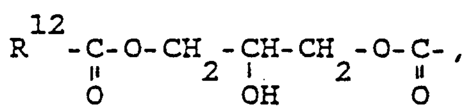

mit

$R^{12}$ = ($C_5$-$C_{15}$)-Alkyl, vorzugsweise verzweigt,

$T^2$,$T^3$ = M oder einen linearen aliphatischen Polyetherrest mit einem mittleren Molgewicht bis zu 400, wobei $T^2$ und $T^3$ gleich oder verschieden sein können,

$Q^1$,$Q^3$ =

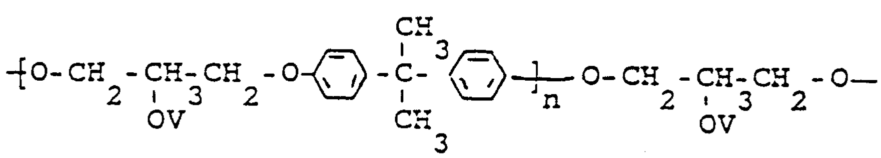

mit n = 1-3, wobei $Q^1$ und $Q^3$ gleich oder verschieden sein können, $V^3$ = Wasserstoff oder eine Gruppe der Formel VIII nach Anspruch 12, und

$Q^2$ =

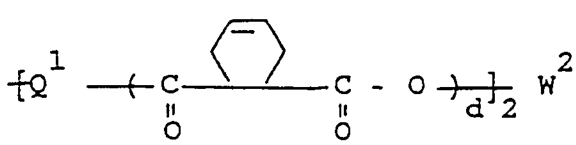

mit d = Null oder 1 und $W^2$ = ein zweibindiger Rest aus der Gruppe lineare aliphatische Polyesteralkohole mit mittleren Molgewichten bis zu 2000, lineare oder verzweigte aliphatische Polyether mit mittleren Molgewichten bis zu 2000.

**15.** Verfahren gemäß mindestens einem der Ansprüche 1 bis 14, dadurch gekennzeichnet, daß die erhaltenen Aminourethane die Formel (VII)

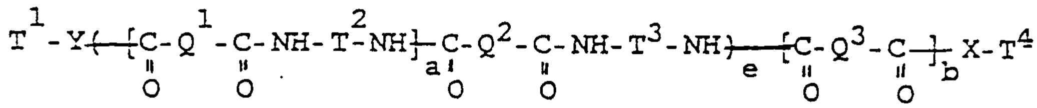 (VII)

besitzen, in der
$T^1$ und $T^4$ gleich oder verschieden sind und eine Gruppe der Formel (VIII)

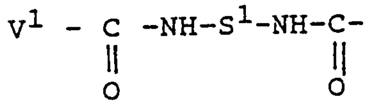 (VIII)

bedeuten,

wobei $V^1$ einen organischen Rest aus einer H- aktiven Verbindung der Formel $H\text{-}V^1$ aus der Gruppe der aliphatischen, cycloaliphatischen, alkylaromatischen, oder durch N-Heterocyclen substituierten einwertigen Alkohole, vorzugsweise mit 1-15 C-Atomen, oder durch Aminogruppen, $(C_1\text{-}C_6)$-Alkoxygruppen, Phenyloxygruppen oder substituierten Phenyloxygruppen substituierter $(C_2\text{-}C_5)$Alkohole, oder der Oxime aliphatischer $(C_3\text{-}C_8)$-Ketone, oder heterocyclischer N-H-azider Verbindungen mit bis zu 8 C-Atomen, oder C-H-azider Verbindungen mit bis zu 8 C-Atomen, bedeutet und $S^1$ für einen 2,4- und/oder 2,6-disubstituierten Toluylenrest oder den Methylen-trimethylcyclohexanylrest der Formel

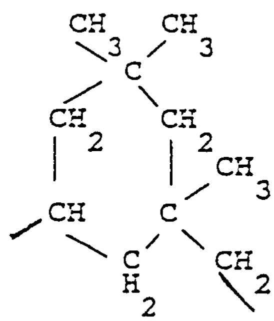

steht,

und die Symbole a, b, e, X, Y, $T^2$, $T^3$, $Q^1$, $Q^2$ und $Q^3$ die in Anspruch 14 angegebenen Bedeutungen haben.

**16.** Verfahren gemäß mindestens einem der Ansprüche 1 bis 14, dadurch gekennzeichnet, daß die erhaltenen Aminourethane die Formel (VII)

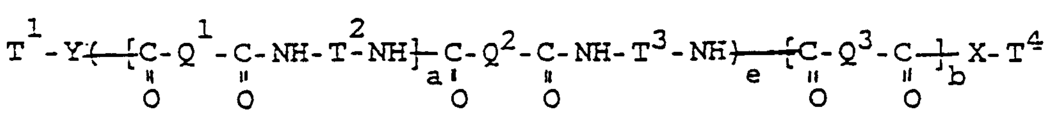 (VII)

besitzen, in der
$T^1$ und $T^4$ gleich oder verschieden sind und eine Gruppe der Formeln (Ia) oder (IIa) bedeuten

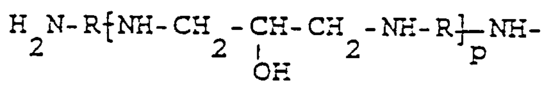 (Ia)

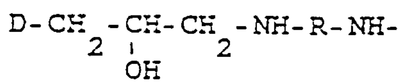 (IIa)

worin R, D und p die Bedeutungen wie in Formeln (I), und (II) gemäß Anspruch 1 haben, X und Y eine chemische Bindung bedeuten, b eine Zahl von 1 bis 5 ist und die Symbole a, e, $T^2$, $T^3$, $Q^1$, $Q^2$ und $Q^3$ die in Anspruch 13 angegebenen Bedeutungen haben.

**17.** Verfahren gemäß mindestens einem der Ansprüche 1 bis 14, dadurch gekennzeichnet, daß die erhaltenen Aminourethane die Formel (VII)

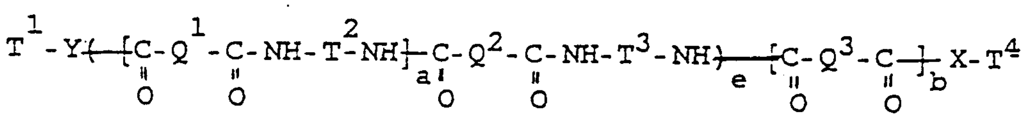 (VII)

besitzen, in der
$T^1$ und $T^4$ gleich oder verschieden sind und eine Gruppe der Formel

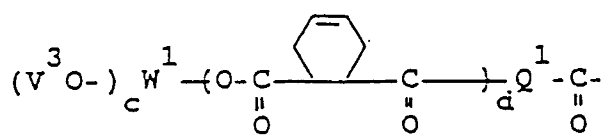

bedeuten,
mit c = 1-3; d = Null oder 1, $V^3$ = Wasserstoff oder eine Gruppe der Formel VIII nach Anspruch 12,
$W^1$ = ein 2- bis 4-wertiger Rest aus der Gruppe lineare oder verzweigte aliphatische Polyesteralkohole mit mittleren Molgewichten bis zu 1000, Reste aus Trimethylolpropan, Pentaerythrit, Ethylenglykol, Propylenglykol, trihydroxyfunktionelles Polycaprolacton,
und die Symbole a, b, e, X, $T^2$, $T^3$, $Q^1$, $Q^2$ und $Q^3$ die in Anspruch 14 angegebenen Bedeutungen haben.

**18.** Verfahren gemäß mindestens einem der Ansprüche 1 bis 14, dadurch gekennzeichnet, daß die erhaltenen Aminourethane die Formel (VII)

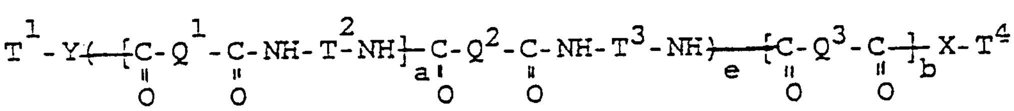 (VII)

besitzen, in der
$T^1$ Wasserstoff ist, wenn Y = -HN-M-NH-, $T^4$ Wasserstoff ist, wenn b = Null und X für eine chemische Bindung steht, und die Symbole a, b, e, X, Y, M, $T^2$, $T^3$, $Q^1$, $Q^2$ und $Q^3$ Bedeutungen haben.

**19.** Verfahren nach mindestens einem der Ansprüche 1 bis 18, dadurch gekennzeichnet, daß ein Teil oder alle der vorhandenen Hydroxyl- und/oder Aminogruppen mit teilverkappten Polyisocyanaten umgesetzt werden.

**20.** Verfahren nach mindestens einem der Ansprüche 1 bis 19, dadurch gekennzeichnet, daß in den Verbindungen der Formel (VII) die basischen Aminogruppen teilweise oder vollständig durch Säuren oder neutralisierend wirkende Substanzen neutralisiert sind und die Aminoethane in wasserverdünnbarer und elektrisch abscheidbarer Dispersionsform vorliegen.

**21.** Härtbare Mischungen, gekennzeichnet, durch einen Gehalt an Aminourethanen, erhalten nach dem Verfahren gemäß mindestens einer der Ansprüche 1 bis 20.

**22.** Verwendung der Aminourethane, erhalten nach den Verfahren gemäß mindestens einem der Ansprüche 1 bis 20 als Bindemittel in härtbaren Mischungen, insbesondere Lackzubereitungen.

**23.** Verwendung nach Anspruch 22, dadurch gekennzeichnet, daß es sich um wäßrige Systeme handelt.

**24.** Verwendung nach Anspruch 22 und/oder 23 als Elektrotauchlacke.

**25.** Verwendung nach Anspruch 24, wobei die basischen Aminogruppen teilweise oder vollständig neutralisiert sind.

**Claims**

**Claims for the following Contracting States : AT, BE, CH, DE, FR, GB, GR, IT, LI, NL, SE**

**1.** An aminourethane obtained by reacting
(A) polyamines of the general formula (I) and/or (II)

$$H_2N-R-[NH-CH_2-\underset{OH}{CH}-CH_2-NH-R]_p-NH_2 \qquad (I)$$

$$D-CH_2-\underset{OH}{CH}-CH_2-NH-R-NH_2 \qquad (II)$$

in which
R =

$$-[(CR^1R^2)_n Z^1-(CR^3R^4)_m Z^2-(CR^5R^6)_l]_k-,$$

| | |
|---|---|
| $Z^1$ and $Z^2$ | denote O, S, NH, N-alkyl having up to 8 carbon atoms, N-phenyl, N-monoalkylphenyl, N-dialkylphenyl or N-trialkylphenyl having 1 to 4 carbon atoms per alkyl group, a divalent phenylene radical which is optionally substituted, and/or a chemical bond, |
| $R^1$ to $R^6$ | denote H, $CH_3$, $C_2H_5$, phenyl or monoalkylphenyl, dialkylphenyl or trialkylphenyl having 1 to 4 carbon atoms per alkyl group, |
| n, m | and 1 denote 0 to 12, the sum of n + m + l being ≧ 2, |
| k | denotes 1 to 6; |
| p | denotes 1 to 5; and |
| D = | |

$$(HO)_j A-\underset{B}{N}-,$$

in which A represents an aliphatic radical having 2 to 5 carbon atoms, j represents 1 to 5, and B represents H, $(C_1-C_4)$-alkyl or $(HO)_jA$-,

$$=G-\underset{E}{N}-,$$

in which G represents $(C_1-C_{18})$-alkyl, or $(C_5-C_9)$-cycloalkyl which can be substituted by $(C_1-C_3)$-alkyl groups and E represents H or G, or

D represents $(C_2-C_8)$-alkoxy, or $(C_5-C_{15})$-acyloxy,

(B) if appropriate, further polyamines,

(C) with compounds containing on average at least two terminal 2-oxo-1,3-dioxolane groups per molecule, and

(D) if appropriate, compounds having a monofunctional reaction, as chain-stoppers.

**2.** An aminourethane as claimed in claim 1, wherein, in the formulae (I)/(II),
$Z^1$ and $Z^2$ denote O, NH, N-($C_1$-$C_6$)-alkyl or a chemical bond;
$R^1$ to $R^6$ denote H, $CH_3$ or $C_2H_5$;
n, m and l denote 0 to 6;
k denotes 1 to 3; and
p denotes 1 or 2.

**3.** An aminourethane as claimed in claim 1 and/or 2, wherein R represents a divalent hydrocarbon radical which has 1 to 18 carbon atoms and which can be interrupted by NH groups.

**4.** An aminourethane as claimed in at least one of claims 1 to 3, wherein R represents a radical from a compound of the group comprising 1,6-hexanediamine in which the methyl groups are optionally substituted, in addition, by one or two methyl or ethyl groups, trimethylhexamethylenediamine, 2-methylpentanediamine, 2-ethylbutanediamine, 6,6'-iminobishexylamine, 4,7-dioxadecane-1,10-diamine, 4,9-dioxadecane-1,12-diamine, 4,7,10-trioxatridecane-1,13-diamine or polyoxypropylenediamine having an average molecular weight of approx. 200-400.

**5.** An aminourethane as claimed in at least one of claims 1 to 4, wherein the polyamines (B) have the formula (III)

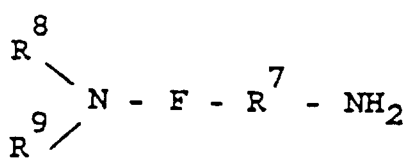

(III)

in which:

| | |
|---|---|
| $R^7$ | denotes a divalent hydrocarbon radical, preferably a linear or branched alkylene radical having 2 to 18 carbon atoms which can optionally carry inert groups, |
| $R^8$ and $R^9$ | are identical or different and denote hydrogen, alkyl having 1 to 8 carbon atoms or hydroxyalkyl having 1 to 8 carbon atoms in the alkyl radical, it being also possible for $R^8$ and $R^9$ to form a cyclic ring compound, and |
| F | denotes a chemical bond or $-(R^7\text{-NH})_r\text{-}R^7\text{-NH-}$ in which r is 0 or an integer from 1 to 6 and $R^7$ has the above meaning. |

**6.** An aminourethane as claimed in at least one of claims 1 to 5, wherein the compounds (C) have the formula (IV)

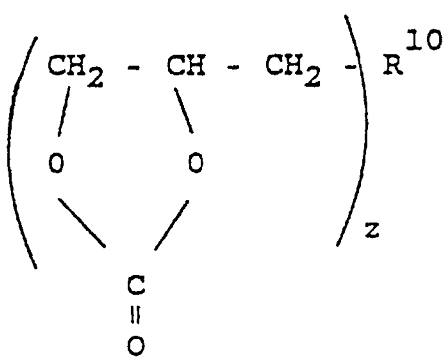

(IV)

in which

$R^{10}$ denotes the z-valent radical of a polyether, polyetherpolyol, polyester or polyesterpolyol which can optionally also contain ($NR^2$) groups, $R^2$ representing hydrogen, alkyl having 1 to 8 carbon atoms or hydroxyalkyl having 1 to 8 carbon atoms, or
denotes a z-valent hydrocarbon radical, preferably an alkylene radical having 2 to 18 carbon atoms, which can optionally carry inert groups, or
denotes a z-valent poly(sec.)amine radical, or
denotes the z-valent radical of a reaction product of an epoxy-carbonate compound with polyamines, polyols, polycaprolactonepolyols, polyesters containing OH groups, polyethers, polyglycols, hydroxy-functional, carboxyl-functional and amino-functional polymer oils having average molecular weights from 800 to 10,000, polycarboxylic acids, hydroxy-functional or amino-functional polytetrahydrofurans and reaction products of polyamines with glycidyl esters of $\alpha,\alpha$-dialkylalkane monocarboxylic acids of the empirical formula $C_{12-14}H_{22-26}O_3$, or with glycidyl esters of ®Versatic acid, and

z denotes 2 to 5, preferably 2.

**7.** An aminourethane as claimed in at least one of claims 1 to 6, wherein the chain-stoppers (D) are monocarbonates, monoepoxides, partially blocked polyisocyanates or compounds which contain amino groups and have only one primary amino group.

**8.** An aminourethane as claimed in claim 7, wherein the chain-stoppers (D) have the formula (VI)

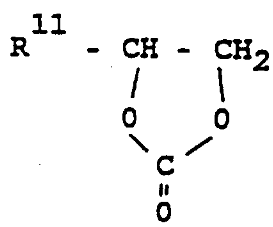

(VI)

in which
$R^{11}$ represents hydrogen, alkyl having 1 to 18, preferably 1 to 10, carbon atoms or radicals of ®Versatic acid glycidyl ester, glycidyl esters or glycidyl ethers.

**9.** An aminourethane as claimed in claim 7, wherein the chain-stoppers (D) have the formula (II).

**10.** An aminourethane as claimed in at least one of claims 1 to 9, wherein the amount of (A) is 5 to 60 mol %, that of (B) is 0 to 60 mol %, that of (C) is 25 to 70 mol % and that of (D) is 0 to 70 mol %.

**11.** An aminourethane as claimed in at least one of claims 1 to 10, which has the formula (VII)

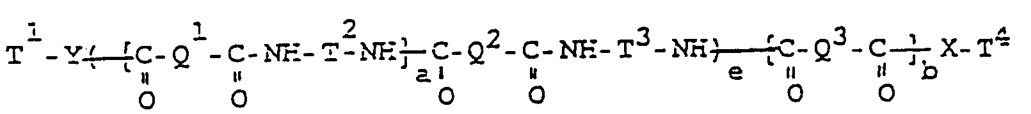

(VII)

in which
a, b and e denote a number from 0 to 5,
b being ≧ 1 if e is 0, and 0 being ≦ a and b ≦ 5 if e is ≧ 1,

X denotes -HN-M-NH-, if b ≧ 1, or denotes a chemical bond if b is 0,
Y denotes -HN-M-NH-,
M =

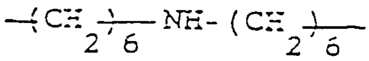

or

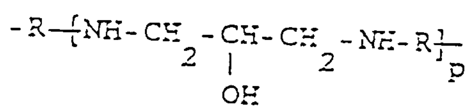

in which p is 1 to 5 and
R has the same meaning as in claim 1,

$T^1$ and $T^4$, which can be identical or different, denote

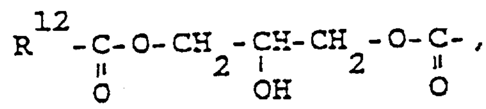

in which

$R^{12}$ is ($C_5$-$C_{15}$)-alkyl, preferably branched,

$T^2$ and $T^3$ are M or a linear aliphatic polyether radical having an average molecular weight of up to 400, it being possible for $T^2$ and $T^3$ to be identical or different,

$Q^1$,$Q^3$ =

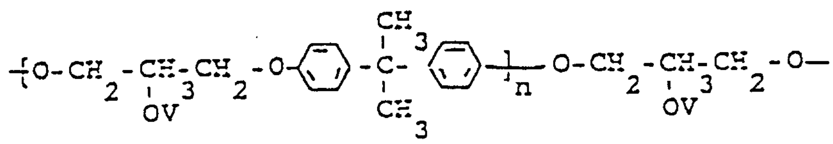

in which n is 1-3, it being possible for $Q^1$ and $Q^3$ to be identical or different, $V^3$ is hydrogen or a group of the formula (VIII) as claimed in claim 12, and

$Q^2$ =

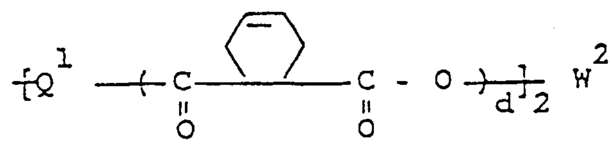

in which d is 0 or 1 and $W^2$ is a divalent radical belonging to the group comprising linear aliphatic polyester-alcohols having average molecular weights of up to 2,000, or linear or branched alipahtic polyethers having average molecular weights of up to 2,000.

**12.** An aminourethane as claimed in at least one of claims 1 to 11, which has the formula (VII)

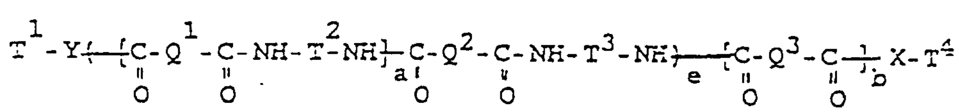 (VII)

in which

$T^1$ and $T^4$ are identical or different and denote a group of the formula (VIII)

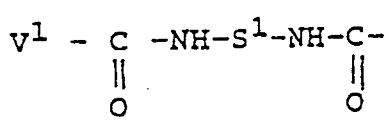 (VIII)

wherein $V^1$ denotes an organic radical of an H-active compound of the formula H-$V^1$ belonging to the group comprising aliphatic, cycloaliphatic, alkyl-aromatic monohydric alcohols or monohydric alcohols substituted by N-heterocyclic structures, the alcohols preferably having 1-15 carbon atoms, or comprising ($C_2$-$C_5$)-alcohols which are substituted by amino groups, ($C_1$-$C_6$)-alkoxy groups, phenoxy groups or substituted phenoxy groups, or comprising the oximes of aliphatic ($C_3$-$C_8$)-ketones, or heterocyclic N-H-acid compounds having up to 8 carbon atoms, or C-H-acid compounds having up to 8 carbon atoms, and $S^1$ represents a 2,4-disubstituted and/or 2,6-disubstituted toluylene radical or the methylenetrimethylcyclohexanyl radical of the formula

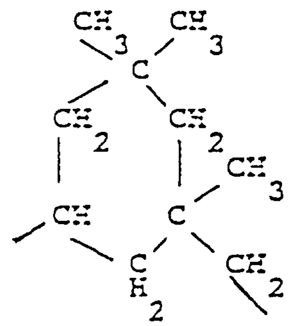

and the symbols a, b, e, X, Y, $T^2$, $T^3$, $Q^1$, $Q^2$ and $Q^3$ are as defined in claim 11.

**13.** An aminourethane as claimed in at least one of claims 1 to 11, which has the formula (VII)

$$T^1-Y\{[\underset{\underset{O}{\|}}{C}-Q^1-\underset{\underset{O}{\|}}{C}-NH-T^2-NH]_a-\underset{\underset{O}{\|}}{C}-Q^2-\underset{\underset{O}{\|}}{C}-NH-T^3-NH\}_e-[\underset{\underset{O}{\|}}{C}-Q^3-\underset{\underset{O}{\|}}{C}]_b-X-T^4 \quad (VII)$$

in which

$T^1$ and $T^4$ are identical or different and denote a group of the formulae (Ia) or (IIa)

$$H_2N-R[NH-CH_2-\underset{OH}{\underset{|}{CH}}-CH_2-NH-R]_p-NH- \quad (Ia)$$

$$D-CH_2-\underset{OH}{\underset{|}{CH}}-CH_2-NH-R-NH- \quad (IIa)$$

in which R, D and p are as defined for formulae (I) and (II) as claimed in claim 1, X and Y denote a chemical bond, b is a number from 1 to 5 and the symbols a, e, $T^2$, $T^3$, $Q^1$, $Q^2$ and $Q^3$ are as defined in claim 11.

**14.** An aminourethane as claimed in at least one of claims 1 to 11, which has the formula (VII)

$$T^1-Y\{[\underset{\underset{O}{\|}}{C}-Q^1-\underset{\underset{O}{\|}}{C}-NH-T^2-NH]_a-\underset{\underset{O}{\|}}{C}-Q^2-\underset{\underset{O}{\|}}{C}-NH-T^3-NH\}_e-[\underset{\underset{O}{\|}}{C}-Q^3-\underset{\underset{O}{\|}}{C}]_b-X-T^4 \quad (VII)$$

in which

$T^1$ and $T^4$ are identical or different and denote a group of the formula

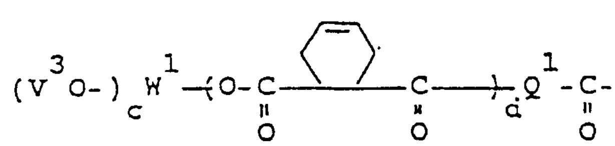

where c is 1-3; d is zero or 1, $V^3$ is hydrogen or a group of the formula VIII as in claim 12,

$W^1$ is a divalent to tetravalent radical from the group comprising linear or branched aliphatic polyester-alcohols having average molecular weights of up to 1000, or radicals of trimethylolpropane, pentaerythritol, ethylene glycol, propylene glycol or trihydroxy-functional polycaprolactone,
and the symbols a, b, e, X, $T^2$, $T^3$, $Q^1$, $Q^2$ and $Q^3$ are as defined in claim 11.

**15.** An aminourethane as claimed in at least one of claims 1 to 11, which has the formula (VII)

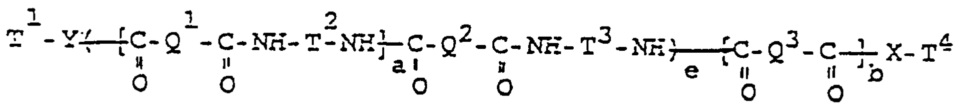

(VII)

in which
$T^1$ is hydrogen if Y is -HN-M-NH-, and $T^4$ is hydrogen if b is zero and X represents a chemical bond,
and the symbols a, b, e, X, Y, M, $T^2$, $T^3$, $Q^1$, $Q^2$ and $Q^3$ are as defined in claim 11.

**16.** An aminourethane as claimed in claim 11, wherein in formula (VII), the radical R in $T^1$ and/or $T^4$ denotes a radical from a compound of the group comprising 1,6-hexanediamine in which the methyl groups are optionally substituted, in addition, by one or two methyl or ethyl groups, trimethylhexamethylenediamine, 2-methylpentanediamine, 2-ethylbutanediamine, 6,6'-iminobishexylamine, 4,7-dioxadecane-1,10-diamine, 4,9-dioxadecane-1,12-diamine, 4,7,10-trioxatridecane-1,13-diamine, polyoxypropylenediamine having an average molecular weight of approx. 200-400, or ethylenediamine, 1,3-propylenediamine, 1,2-propylenediamine, 1,4-butanediamine, 1,5-pentanediamine, N,N'-dimethyl-N,N'-bis-(aminopropyl)-ethylenediamine,N-methyldipropylenetriamine or diethylenetriamine, dipropylenetriamine and higher homologous polyamines, such as pentaethylenehexamine,
and also, in R, the radicals $Z^1$ and $Z^2$ represent oxygen or a divalent phenylene radical which is optionally substituted, $R^1$ to $R^6$ represent H,
$CH_3$, $(C_1\text{-}C_4)$-alkylphenyl or phenyl, n, m, and l represent 0 to 6 and k represents 1 to 3,
a and b represent 1 to 3 and $V^3$ represents H and/or at least in part a radical from a partially masked polyisocyanate, and
$Q^1$ and $Q^3$ denote a radical from the diglycidyl ether of bisphenol A.

**17.** An aminourethane as claimed in at least one of claims 1 to 16, wherein some or all of the hydroxyl and/or amino groups present have been reacted with partially masked polyisocyanates.

**18.** An aminourethane as claimed in at least one of claims 1 to 17, wherein, in the compounds of the formula (VII), the basic amino groups have been partially or completely neutralized by acids or substances having a neutralizing action, and the aminourethanes are present in a dispersed form which can be diluted with water and deposited by electrophoresis.

**19.** A process for the preparation of the aminourethanes as claimed in at least one of claims 1 to 18, which comprises reacting the compounds (A) and (C) and, if appropriate, (B) and (D) in accordance with stoichiometry at temperatures between 20 and 150 °C, if appropriate with the addition of catalysts.

**20.** The process as claimed in claim 19, wherein the reaction is carried out in the presence of inert organic solvents.

**21.** The process as claimed in claim 19 and/or 20, wherein the reaction is carried out until a constant amine number has been reached in the resulting reaction product and the cyclocarbonate content of the reaction mixture has reached the value 0.

**22.** The process as claimed in at least one of claims 19 to 21, wherein water-soluble acids and, if appropriate, water are added to the resulting aminourethanes, preferably dissolved in an inert, water-miscible organic solvent, with partial or complete neutralization of the basic amino groups, to such an extent that the product is obtained in a dispersed form in which it can be diluted in water and deposited

by electrophoresis.

**23.** A curable mixture which contains aminourethanes as claimed in at least one of claims 1 to 18, or which has been obtained by the process as claimed in at least one of claims 19 to 22.

**24.** The use of the aminourethanes as claimed in one or more of claims 1 to 18, or obtained by the process as claimed in at least one of claims 19 to 22, as binders in curable mixtures, in particular paint formulations.

**25.** Use as claimed in claim 24, wherein aqueous systems are concerned.

**26.** Use as claimed in claim 24 and/or 25, as electro-deposition paints.

**27.** Use as claimed in claim 26, wherein the basic amino groups have been partially or completely neutralized.

**Claims for the following Contracting State : ES**

**1.** A process for the preparation of an aminourethane, which comprises reacting
(A) polyamines of the formula (I) and/or (II)

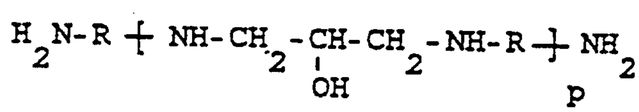 (I)

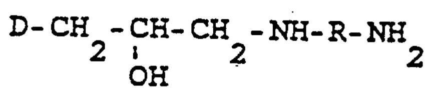 (II)

in which
R =

$$-[(CR^1R^2)_n Z^1-(CR^3R^4)_m Z^2-(CR^5R^6)_l]_k ,$$

| | |
|---|---|
| $Z^1$ and $Z^2$ | denote O, S, NH, N-alkyl having up to 8 carbon atoms, N-phenyl, N-monoalkylphenyl, N-dialkylphenyl or N-trialkylphenyl having 1 to 4 carbon atoms per alkyl group, a divalent phenylene radical which is optionally substituted, and/or a chemical bond, |
| $R^1$ to $R^6$ | denote H, $CH_3$, $C_2H_5$, phenyl or monoalkylphenyl, dialkylphenyl or trialkylphenyl having 1 to 4 carbon atoms per alkyl group, |
| n, m and l | denote 0 to 12, the sum of n + m + l being ≧ 2, |
| k | denotes 1 to 6; |
| p | denotes 1 to 5; and |
| D = | |

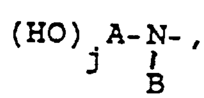

in which A represents an aliphatic radical having 2 to 5 carbon atoms, j represents 1 to 5, and B represents H, $(C_1-C_4)$-alkyl or $(HO)_jA$-,

in which G represents ($C_1$-$C_{18}$)-alkyl, or ($C_5$-$C_9$)-cycloalkyl which can be substituted by ($C_1$-$C_3$)-alkyl groups and E represents H or G, or

D represents ($C_2$-$C_8$)-alkoxy, or ($C_5$-$C_{15}$)-acyloxy,

(B) if appropriate, further polyamines,

(C) with compounds containing on average at least two terminal 2-oxo-1,3-dioxolane groups per molecule, and

(D) if appropriate, compounds having a mono-functional reaction, as chain stoppers,

at temperatures between 20 and 150 °C, if appropriate with the addition of catalysts.

**2.** A process as claimed in claim 1, wherein the reaction is carried out in the presence of inert organic solvents.

**3.** A process as claimed in claim 1 and/or 2, wherein the reaction is carried out until a constant amine number of the resulting reaction product has been reached and the cyclocarbonate content of the reaction mixed has reached the value nil.

**4.** A process as claimed in at least one of claims 1 to 3, wherein water-soluble acids and, if appropriate, water are added to the resulting aminourethanes, preferably dissolved in an inert, water-miscible organic solvent, with partial or complete neutralization of the basic amino groups, to such an extent that the product is obtained in a dispersed form which can be diluted with water and deposited by electrophoresis.

**5.** A process as claimed in at least one of claims 1 to 4, wherein, in the formulae (I)/(III),
$Z^1$ and $Z^2$ denote O, NH, N-($C_1$-$C_6$)-alkyl or a chemical bond;
$R^1$ to $R^6$ denote H, $CH_3$ or $C_2H_5$;
n, m and l denote 0 to 6;
k denotes 1 to 3; and
p denotes 1 or 2.

**6.** A process as claimed in at least one of claims 1 to 5, wherein R represents a divalent hydrocarbon radical which has 1 to 18 carbon atoms and which can be interrupted by NH groups.

**7.** A process as claimed in at least one of claims 1 to 6, wherein R represents a radical from a compound of the group comprising 1,6-hexanediamine in which the methyl groups are optionally substituted, in addition, by one or two methyl or ethyl groups, trimethylhexamethylenediamine, 2-methylpentanediamine, 2-ethylbutanediamine, 6,6'-iminobishexylamine, 4,7-dioxadecane-1,10-diamine, 4,9-dioxadecane-1,12-diamine, 4,7,10-trioxatridecane-1,13-diamine or polyoxypropylenediamine having an average molecular weight of approx. 200-400.

**8.** A process as claimed in at least one of claims 1 to 7, wherein the polyamines (B) have the formula (III)

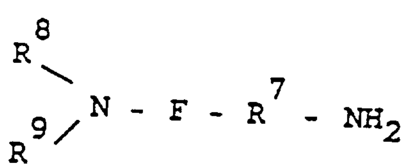

(III)

in which:

$R^7$ denotes a divalent hydrocarbon radical, preferably a linear or branched alkylene radical having 2 to 18 carbon atoms which can optionally carry inert groups,

$R^8$ and $R^9$ are identical or different and denote hydrogen, alkyl having 1 to 8 carbon atoms or hydroxyalkyl having 1 to 8 carbon atoms in the alkyl radical, it being also possible for $R^8$ and $R^9$ to form a cyclic ring compound, and

F denotes a chemical bond or $-(R^7\text{-NH})_r\text{-}R^7\text{-NH-}$ in which r is 0 or an integer from 1 to 6 and $R^7$ has the above meaning.

9. A process as claimed in at least one of claims 1 to 8, wherein the compounds (C) have the formula (IV)

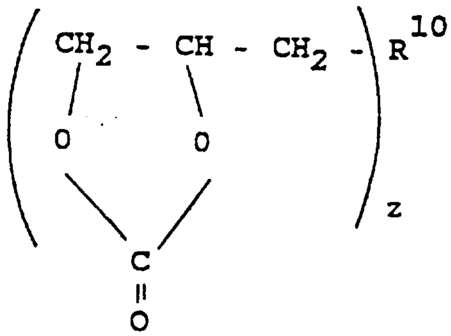

(IV)

in which

$R^{10}$ denotes the z-valent radical of a polyether, polyetherpolyol, polyester or polyesterpolyol which can optionally also contain ($NR^2$) groups, $R^2$ representing hydrogen, alkyl having 1 to 8 carbon atoms or hydroxyalkyl having 1 to 8 carbon atoms, or
denotes a z-valent hydrocarbon radical, preferably an alkylene radical having 2 to 18 carbon atoms, which can optionally carry inert groups, or
denotes a z-valent poly(sec.)amine radical, or
denotes the z-valent radical of a reaction product of an epoxy-carbonate compound with polyamines, polyols, polycaprolactonepolyols, polyesters containing OH groups, polyethers, polyglycols, hydroxy-functional, carboxyl-functional and amino-functional polymer oils having average molecular weights from 800 to 10,000, polycarboxylic acids, hydroxy-functional or amino-functional polytetrahydrofurans and reaction products of polyamines with glycidyl esters of α,α-dialkylalkane monocarboxylic acids of the empirical formula $C_{12-14}H_{22-26}O_3$, or with glycidyl esters of ®Versatic acid, and

z denotes 2 to 5, preferably 2.

10. A process as claimed in at least one of claims 1 to 9, wherein the chain-stoppers (D) are monocarbonates, monoepoxides, partially blocked polyisocyanates or compounds which contain amino groups and have only one primary amino group.

11. A process as claimed in claim 10, wherein the chain-stoppers (D) have the formula (VI)

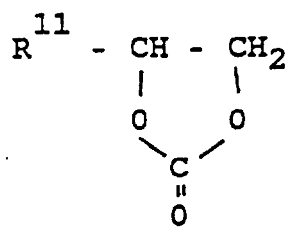

(VI)

in which $R^{11}$ represents hydrogen, alkyl having 1 to 18, preferably 1 to 10, carbon atoms or radicals of ®Versatic acid, glycidyl ester, glycidyl esters or glycidyl ethers.

12. A process as claimed in claim 11, wherein the chain-stoppers (D) have the formula (II).

13. A process as claimed in at least one of claims 1 to 12, wherein the compounds (A) and (C) and, if appropriate, (B) and (D) are employed in amounts such that the amount of (A) in the aminourethane is 5 to 60 mol %, that of (B) is 0 to 60 mol %, that of (C) is 25 to 70 mol % and that of (D) is 0 to 70 mol %.

**14.** A process as claimed in one of claims 1 to 13, wherein the resulting aminourethanes have the formula (VII)

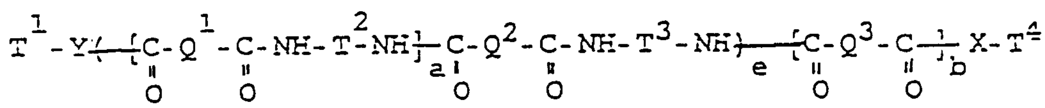 (VII)

in which
a, b and e denote a number from 0 to 5,
b being ≧ 1 if e is 0, and 0 being ≦ a and b ≦ 5 if e is ≧ 1,

X denotes -HN-M-NH-, if b ≧ 1, or denotes a chemical bond if b is 0,

Y denotes -HN-M-NH-,

M =

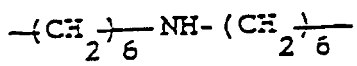 or 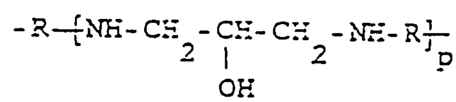

in which p is 1 to 5 and
R has the same meaning as in claim 1,

$T^1$ and $T^4$, which can be identical or different, denote

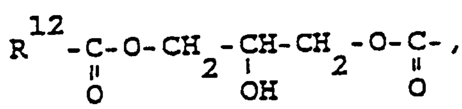

in which

$R^{12}$ is ($C_5$-$C_{15}$)-alkyl, preferably branched,

$T^2$ and $T^3$ are M or a linear aliphatic polyether radical having an average molecular weight of up to 400, it being possible for $T^2$ and $T^3$ to be identical or different,

$Q^1$,$Q^3$ =

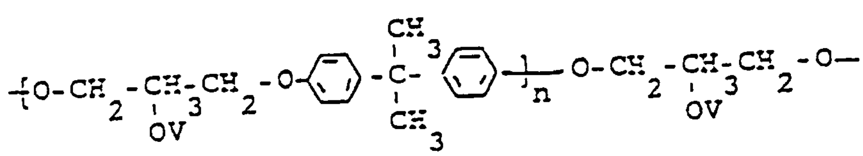

in which n is 1-3, it being possible for $Q^1$ and $Q^3$ to be identical or different, $V^3$ is hydrogen or a group of the formula VIII as claimed in claim 12, and

$Q^2$ =

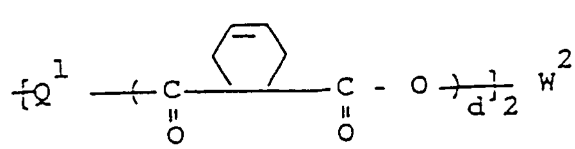

in which d is 0 or 1 and $W^2$ is a divalent radical belonging to the group comprising linear aliphatic polyester-alcohols having average molecular weights of up to 2000, or linear or branched aliphatic polyethers having average molecular weights of up to 2000.

**15.** The process as claimed in at least one of claims 1 to 14, wherein the aminourethanes obtained have the formula (VII)

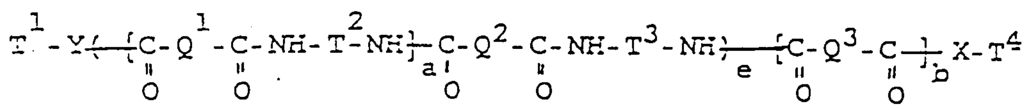 (VII)

in which

$T^1$ and $T^4$ are identical or different and denote a group of the formula (VIII)

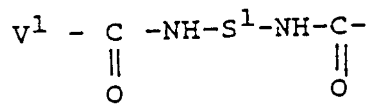 (VIII)

wherein $V^1$ denotes an organic radical of an H-active compound of the formula H-$V^1$ belonging to the group comprising aliphatic, cycloaliphatic, alkyl-aromatic monohydric alcohols or monohydric alcohols substituted by N-heterocyclic structures, the alcohols preferably having 1-15 carbon atoms, or comprising ($C_2$-$C_5$)-alcohols which are substituted by amino groups, ($C_1$-$C_6$)-alkoxy groups, phenoxy groups or substituted phenoxy groups, or comprising the oximes of aliphatic ($C_3$-$C_8$)-ketones, or heterocyclic N-H-acid compounds having up to 8 carbon atoms, or C-H-acid compounds having up to 8 carbon atoms, and $S^1$ represents a 2,4-disubstituted and/or 2,6-disubstituted toluylene radical or the methylenetrimethylcyclohexanyl radical of the formula

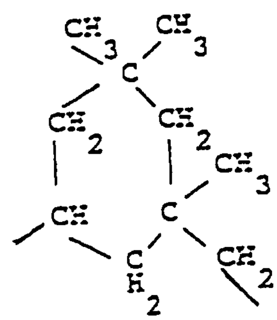

and the symbols a, b, e, X, Y, $T^2$, $T^3$, $Q^1$, $Q^2$ and $Q^3$ are as defined in claim 14.

**16.** The process as claimed in at least one of claims 1 to 14, wherein the aminourethanes obtained have the formula (VII)

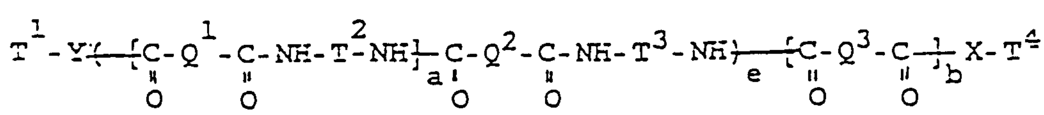 (VII)

in which

$T^1$ and $T^4$ are identical or different and denote a group of the formulae (Ia) or (IIa)

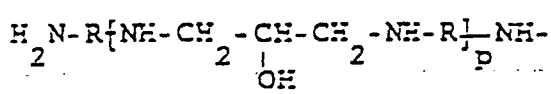 (Ia)

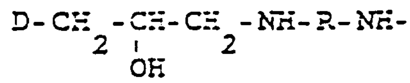 (IIa)

in which R, D and p are as defined for formulae (I) and (II) as claimed in claim 1, X and Y denote a chemical bond, b is a number from 1 to 5 and the symbols a, e, $T^2$, $T^3$, $Q^1$, $Q^2$ and $Q^3$ are as defined in claim 13.

**17.** The process as claimed in at least one of claims 1 to 14, wherein the aminourethanes obtained have the formula (VII)

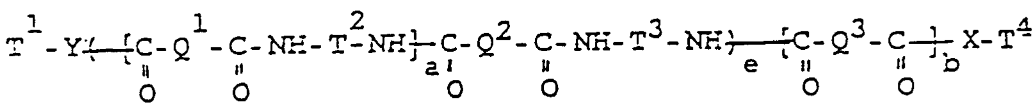 (VII)

in which

$T^1$ and $T^4$ are identical or different and denote a group of the formula

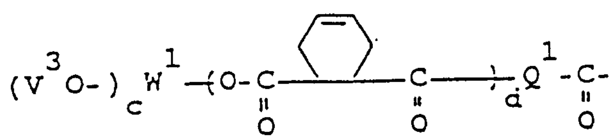

where c is 1-3; d is zero or 1, $V^3$ is hydrogen or a group of the formula VIII as in claim 12,

$W^1$ is a divalent to tetravalent radical from the group comprising linear or branched aliphatic polyester-alcohols having average molecular weights of up to 1000, or radicals of trimethylolpropane, pentaerythritol, ethylene glycol, propylene glycol or trihydroxy-functional polycaprolactone,

and the symbols a, b, e, X, $T^2$, $T^3$, $Q^1$, $Q^2$ and $Q^3$ are as defined in claim 14.

**18.** The process as claimed in at least one of claims 1 to 14, wherein the aminourethanes obtained have the formula (VII)

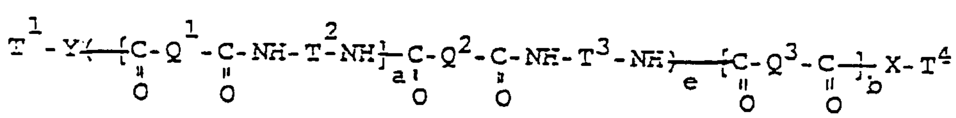 (VII)

in which

$T^1$ is hydrogen if Y is -HN-M-NH-, and $T^4$ is hydrogen if b is zero and X represents a chemical bond,

and the symbols a, b, e, X, Y, M, $T^2$, $T^3$, $Q^1$, $Q^2$ and $Q^3$ are as defined in claim 14.

**19.** A process as claimed in at least one of claims 1 to 18, wherein some or all of the hydroxyl and/or amino groups present are reacted with partially masked polyisocyanates.

**20.** A process as claimed in at least one of claims 1 to 19, wherein, in the compounds of the formula (VII), the basic amino groups have been partially or completely neutralized by acids or substances having a neutralizing action, and the aminourethanes are present in a dispersed form which can be diluted with water and deposited by electrophoresis.

**21.** A curable mixture which contains aminourethanes, obtained by the process as claimed in at least one of claims 1 to 20.

22. The use of aminourethanes obtained by the processes as claimed in at least one of claims 1 to 20, as binders in curable mixtures, in particular paint formulations.

23. Use as claimed in claim 22, wherein aqueous systems are concerned.

24. Use as claimed in claim 22 and/or 23, as electrodeposition paints.

25. Use as claimed in claim 24, wherein the basic amino groups have been partially or completely neutralized.

**Revendications**
**Revendications pour les Etats contractants suivants : AT, BE, CH, DE, FR, GB, GR, IT, LI, NL, SE**

1. Aminouréthannes, obtenues par réaction
(A) depolyamines de formule générale (I) et/ou (II)

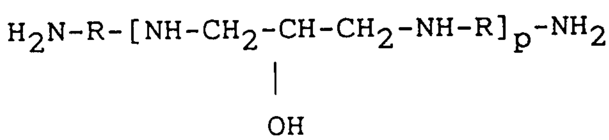
(I)

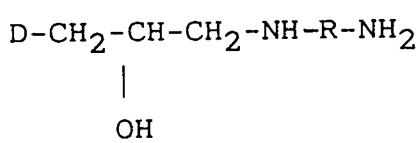
(II)

dans lesquelles :

R = $-[(CR^1R^2)_nZ^1-(CR^3R^4)_mZ^2-(CR^5R^6)_l]_k$,

$Z^1$ et $Z^2$ sont chacun O, S, NH, ou un radical N-alkyle ayant jusqu'à 8 atomes de carbone, N-phényle, N-mono-, -di- ou trialkylphényle ayant de 1 à 4 atomes de carbone par groupe alkyle, un radical phénylène divalent, éventuellement substitué, et/ou une liaison chimique,
$R^1$ à $R^6$ sont chacun H, $CH_3$, $C_2H_5$ ou un radical phényle ou mono-, di-ou trialkylphényle ayant de 1 à 4 atomes de carbone par groupe alkyle,
n, m et 1 valent chacun de 0 à 12, avec $n + m + l \geq 2$,
k vaut de 1 à 6 ;
p vaut de 1 à 5 ;
D est

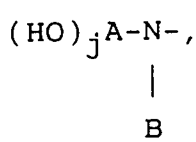

où A est un radical aliphatique ayant de 2 à 5 atomes de carbone, j vaut de 1 à 5 et B est H ou un radical alkyle en $C_1$-$C_4$ ou $(HO)_jA$-,

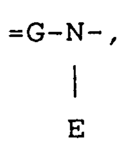

où G est un radical alkyle en $C_1$-$C_{18}$, cycloalkyle en $C_5$-$C_9$ pouvant être substitué par des groupes alkyle en $C_1$-$C_3$, et E est H ou G,

ou encore D est un radical alcoxy en $C_2$-$C_8$ ou acyloxy en $C_5$-$C_{15}$,

(B) éventuellement d'autres polyamines,

(C) de composés contenant en moyenne au moins deux groupes 2-oxo-1,3-dioxolanne terminaux par molécule et

(D) éventuellement, en tant que rupteurs de chaîne, de composés à réaction monofonctionnelle.

**2.** Aminouréthannes selon la revendication 1, caractérisés en ce que, dans les formules (I)/(II) :

$Z^1$, $Z^2$ sont chacun O, NH ou un radical N-alkyle en $C_1$-$C_6$ ou une liaison chimique ;

$R^1$ à $R^6$ sont chacun H, $CH_3$ ou $C_2H_5$ ;

n, m, l valent chacun de 0 à 6 ;

k vaut de 1 à 3 ;

p vaut 1 ou 2.

**3.** Aminouréthannes selon les revendications 1 et/ou 2, caractérisés en ce que R est un radical hydrocarboné divalent ayant de 1 à 18 atomes de carbone, pouvant être interrompu par des groupes NH.

**4.** Aminouréthannes selon au moins l'une des revendications 1 à 3, caractérisés en ce que R est un radical d'un composé choisi parmi l'ensemble comprenant la 1,6-hexanediamine, dont les groupes méthyle sont éventuellement en outre substitués par un ou deux groupes méthyle ou éthyle, triméthylhexaméthylènediamine, 2-méthylpentanediamine, 2-éthylbutanediamine, 6,6'-imino-bishexylamine,4,7-dioxadécane-1,10-diamine, 4,9-dioxadécane-1,12-diamine, 4,7,10-trioxatridécane-1,13-diamine ou polyoxypropylènediamine ayant une masse moléculaire moyenne d'environ 200 à 400.

**5.** Aminouréthannes selon au moins l'une des revendications 1 à 4, caracterisés en ce que les polyamines (B) ont la formule (III)

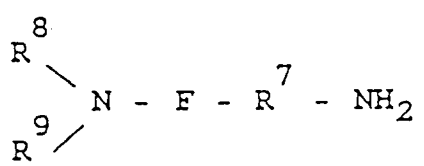

(III)

dans laquelle

$R^7$ est un radical hydrocarboné divalent, de préférence un radical alkylène à chaîne droite ou ramifiée ayant de 2 à 18 atomes de carbone et pouvant éventuellement porter des groupes inertes,

$R^8$ et $R^9$, qui sont identiques ou différents, représentent chacun un hydrogène ou un radical alkyle ayant de 1 à 8 atomes de carbone ou hydroxyalkyle ayant de 1 à 8 atomes de carbone dans le fragment alkyle, $R^8$ et $R^9$ pouvant aussi représenter un composé cyclique,

F est une liaison chimique ou encore $-(R^7-NH)_r-R^7-NH-$, où r vaut 0 ou est un nombre entier de 1 à 6, et $R^7$ a les significations ci-dessus.

**6.** Aminouréthannes selon au moins l'une des revendications 1 à 5, caractérisés en ce que les composés (C) ont la formule générale (IV)

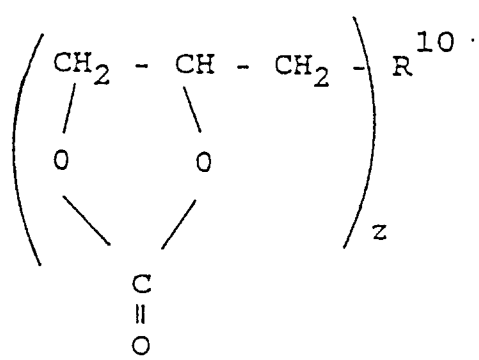

(IV)

dans laquelle

$R^{10}$ est un résidu z-valent d'un polyéther, d'un polyétherpolyol, d'un polyester, d'un polyesterpolyol, pouvant éventuellement contenir aussi des groupes ($NR^2$), ou $R^2$ est un hydrogène ou un radical alkyle ayant de 1 à 8 atomes de carbone ou hydroxyalkyle ayant de 1 à 8 atomes de carbone, ou bien

un résidu hydrocarboné z-valent, de préférence un résidu alkylène ayant de 2 à 18 atomes de carbone et pouvant éventuellement porter des groupes inertes, ou bien

un résidu poly(sec-amine) z-valent, ou bien

le résidu z-valent d'un produit de la réaction d'un composé époxycarbonate avec des polyamines, des polyols, des polycaprolactonepolyols, des polyesters hydroxylés, des polyéthers, des polyglycols, des huiles polymères hydroxylées, carboxylées et aminées ayant une masse moléculaire moyenne de 800 à 10 000, des acides polycarboxyliques, des polytétrahydrofurannes hydroxylés ou aminés, et les produits de la réaction de polyamines et d'esters glycidyliques d'acides $\alpha,\alpha$-dialkylalcanemonocarboxyliques de formule brute $C_{12-14}H_{22-26}O_3$, ou encore avec des esters glycidyliques de l'acide Versatic(R)

z vaut de 2 à 5 et de préférence 2.

7. Aminouréthannes selon au moins l'une des revendications 1 à 6, caractérisés en ce que, pour ce qui est des rupteurs de chaîne (D), il s'agit de monocarbonates, de monoépoxydes, de polyisocyanates partiellement bloqués en bout ou de composés aminés ne comportant qu'un groupe amino primaire.

8. Aminouréthannes selon la revendication 7, caractérisés en ce que les rupteurs de chaîne (D) ont la formule (VI)

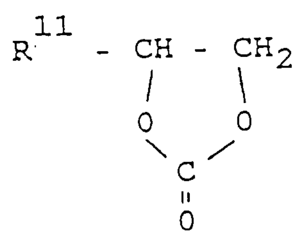

(VI)

dans laquelle $R^{11}$ est un hydrogène ou un radical alkyle ayant de 1 à 18 et de préférence de 1 à 10 atomes de carbone, ou encore un résidu d'un ester glycidylique d'un acide Versatic(R), un ester glycidylique ou un oxyde de glycidyle.

9. Aminouréthannes selon la revendication 7, caractérisés en ce que les rupteurs de chaîne (D) ont la formule (II).

10. Aminouréthannes selon au moins l'une des revendications 1 à 9, caractérisés en ce que la quantité de (A) est de 5 à 60 % en moles, celle de (B) est de 0 à 60 % en moles, celle de (C) est de 25 à 70 % en moles et celle de (D) est de 0 à 70 % en moles.

11. Aminouréthannes selon au moins l'une des revendications 1 à 10, caractérisés en ce qu'ils ont la formule (VII)

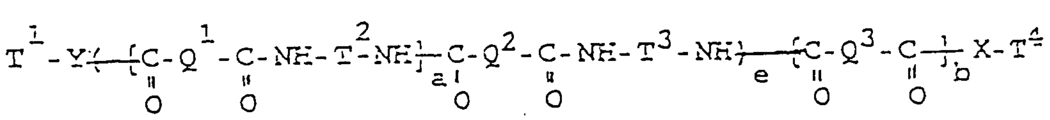

(VII)

dans laquelle

a, b et e représentent chacun un nombre de 0 à 5, avec $b \geqq 1$ quand $e = 0$ et $0 \leqq a$ et $b \leqq 5$ quand $e \geqq 1$,

X est -HN-M-NH- quand $b \geqq 1$, ou encore est une liaison chimique quand $b = 0$,

Y est -HN-M-NH-,

M =

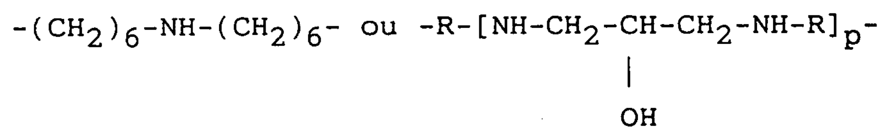

avec p = 1 à 5, et R a les significations données dans la revendication 1,

$T^1$ et $T^4$ sont identiques ou différents et sont chacun

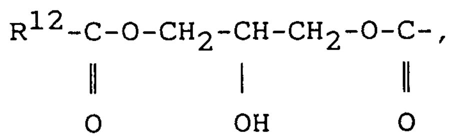

dans laquelle $R^{12}$ est un radical alkyle en $C_5$ à $C_{15}$, de préférence ramifié,

$T^2$ et $T^3$ sont chacun M ou un résidu polyéther aliphatique linéaire ayant une masse moléculaire moyenne allant jusqu'à 400, $T^2$ et $T^3$ pouvant être identiques ou différents,

$Q^1$,$Q^3$ =

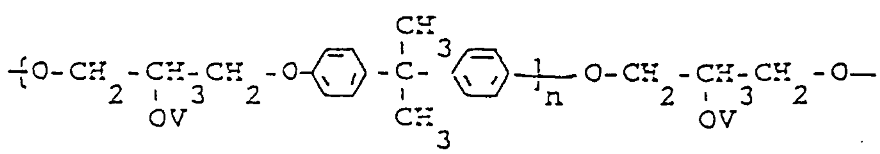

où n vaut 1-3, $Q^1$ et $Q^3$ pouvant être identiques ou différents, et $V^3$ est un hydrogène ou un groupe de formule VIII selon la revendication 12, et

$Q^2$ =

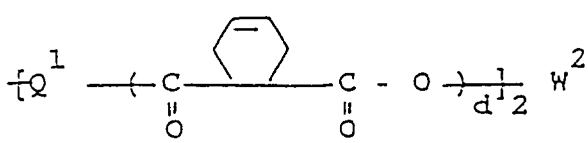

dans laquelle d = 0 ou 1 et $W^2$ est un radical à double liaison choisi parmi l'ensemble comprenant les polyesteralcools aliphatiques linéaires ayant une masse moléculaire moyenne allant jusqu'à 2000, les polyéthers aliphatiques à chaîne droite ou ramifiée ayant une masse moléculaire allant jusqu'à 2000.

**12.** Aminouréthannes selon au moins l'une des revendications 1 à 11, caractérisés en ce qu'ils ont la formule (VII)

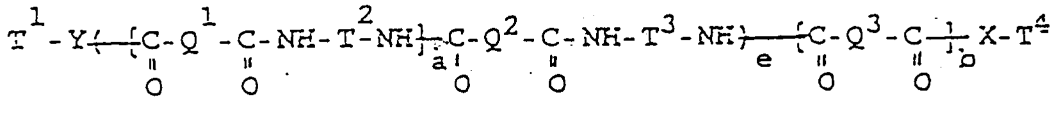 (VII)

dans laquelle

$T^1$ et $T^4$ sont identiques ou différents et représentent chacun un groupe de formule (VIII)

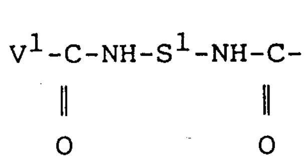 (VIII)

dans laquelle $V^1$ est un résidu organique d'un composé à hydrogène actif de formule H-$V^1$ choisi parmi l'ensemble comprenant les monoalcools ayant de préférence de 1 à 15 atomes de carbone, aliphatiques, cycloaliphatiques, alkylaromatiques ou substitués par des N-hétérocycles, ou encore des alcools en $C_2$ à $C_5$ substitués par des groupes amino, des groupes alcoxy en $C_1$-$C_6$, des groupes phényloxy ou des groupes phényloxy substitués, ou encore les oximes de cétones aliphatiques en $C_3$-$C_8$, ou encore les composés N-H-azides hétérocycliques ayant jusqu'à 8 atomes de carbone, ou encore les composés C-H-azides ayant jusqu'à 8 atomes de carbone, et $S^1$ est un radical toluylène 2,4- et/ou 2,6-disubstitué, ou encore le radical méthylènetriméthylcyclohexanyle de formule

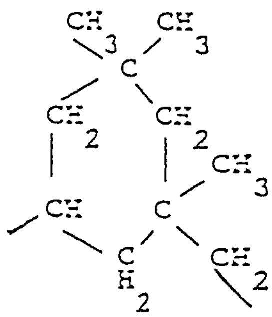

et les symboles a, b, e, X, Y, $T^2$, $T^3$, $Q^1$, $Q^2$ et $Q^3$ ont les significations données dans la revendication 11.

**13.** Aminouréthannes selon au moins l'une des revendications 1 à 11, caractérisés en ce qu'ils ont la formule (VII)

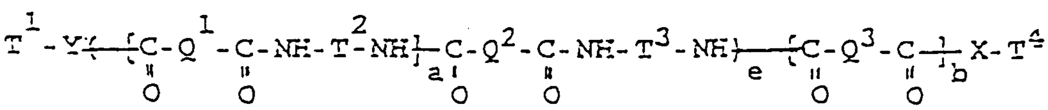 (VII)

dans laquelle

$T^1$ et $T^4$ sont identiques ou différents et représentent chacun un groupe de formules (Ia) ou (IIa)

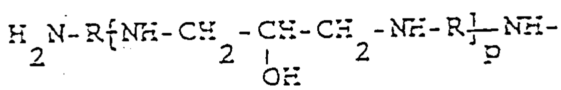 (Ia)

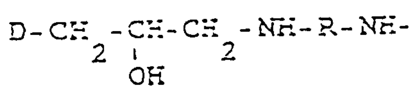 (IIa)

dans lesquelles R, D et p ont les significations données dans les formules (I) et (II) selon la revendication 1, X et Y représentent chacun une liaison chimique, b est un nombre de 1 à 5 et les symboles a, e, $T^2$, $T^3$, $Q^1$, $Q^2$ et $Q^3$ ont les significations données dans la revendication 11.

**14.** Aminouréthannes selon au moins l'une des revendications 1 à 11, caractérisés en ce qu'ils ont la formule (VII)

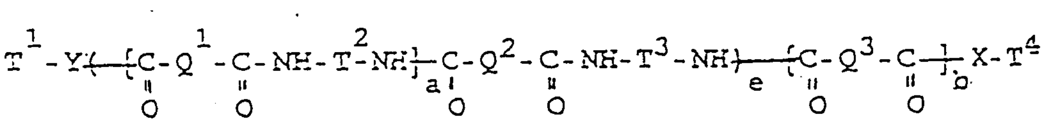 (VII)

dans laquelle

$T^1$ et $T^4$, qui sont identiques ou différents, représentent chacun un groupe de formule

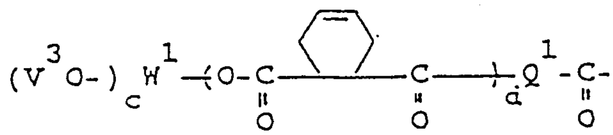

dans laquelle c vaut de 1-3, d vaut 0 ou 1, $V^3$ est un hydrogène ou un groupe de formule VIII selon la revendication 12, $W^1$ est un résidu divalent à tétravalent choisi parmi l'ensemble comprenant les polyesteralcools aliphatiques à chaîne droite ou ramifiée ayant une masse moléculaire moyenne allant jusqu'à 1000, les résidus du triméthylolpropane, du pentaérythritol, de l'éthylèneglycol, du propylèneglycol, de la polycaprolactone trihydroxyfonctionnelle, et les symboles a, b, e, X, $T^2$, $T^3$, $Q^1$, $Q^2$ et $Q^3$ ont les significations données dans la revendication 11.

**15.** Aminouréthannes selon au moins l'une des revendications 1 à 11, caractérisés en ce qu'ils ont la formule (VII)

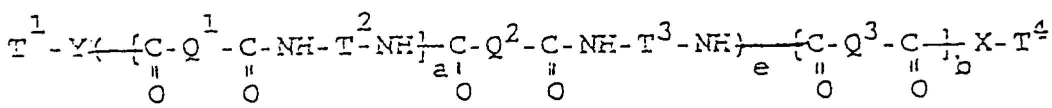 (VII)

dans laquelle $T^1$ est un hydrogène quand Y est -HN-M-NH-, et $T^4$ est un hydrogène quand b vaut 0 et X est une liaison chimique,

et les symboles a, b, e, X, Y, M, $T^2$, $T^3$, $Q^1$, $Q^2$ et $Q^3$ ont les significations données dans la revendication 11.

**16.** Aminouréthannes selon la revendication 11, caractérisés en ce que, dans la formule (VII), le radical R de $T^1$ et/ou $T^4$ est un résidu d'un composé choisi parmi l'ensemble comprenant la 1,6-hexanediamine, dont les groupes méthyle sont éventuellement substitués en outre par un ou deux groupes méthyle ou éthyle, la triméthylhexaméthylènediamine, la 2-méthylpentanediamine, la 2-éthylbutanediamine, la 6,6'-imino-bis-hexylamine, la 4,7-dioxadécane-1,10-diamine, la 4,9-dioxadécane-1,12-diamine, la 4,7,10-trioxatridécane-1,13-diamine, la polyoxypropylènediamine ayant une masse moléculaire moyenne d'environ 200 à 400, ou l'éthylènediamine, la 1,3-propylènediamine, la 1,2-propylènediamine, la 1,4-butanediamine, la 1,5-pentanediamine, la N,N'-diméthylN,N'-bis(aminopropyl)-éthylènediamine, la N-méthyldipropylènetriamine ou la diéthylènetriamine, la dipropylènetriamine ainsi que les polyamines homologues supérieurs telles que la pentaéthylènehexamine,

de plus, dans R, les radicaux $Z^1$ et $Z^2$ sont chacun un oxygène ou un radical phénylène divalent éventuellement substitué, $R^1$ à $R^6$ sont chacun H, $CH_3$ ou un radical (alkyle en $C_1$-$C_4$)phényle ou phényle, n, m et l valent chacun de 0 à 6, k vaut de 1 à 3, a et b valent chacun de 1 à 3 et $V^3$ et H et/ou au moins partiellement un résidu d'un polyisocyanate partiellement coiffé en bout, et

$Q^1$ et $Q^3$ sont chacun un résidu de l'éther diglycidylique du bisphénol A.

**17.** Aminouréthannes selon au moins l'une des revendications 1 à 16, caractérisés en ce que tout ou partie des groupes hydroxyle et/ou amino présents ont réagi avec des polyisocyanates partiellement coiffés en bout.

**18.** Aminouréthannes selon au moins l'une des revendications 1 à 17, caractérisés en ce que, dans les composés de formule (VII), les groupes amino basiques sont en totalité ou en partie neutralisés par des acides ou des substances à effet neutralisant, et les aminouréthannes se présentent sous la forme d'une dispersion diluable à l'eau et pouvant être déposée par voie électrique.

**19.** Procédé pour préparer les aminouréthannes selon au moins l'une des revendications 1 à 18, caractérisé en ce qu'on fait réagir les composés (A) et (C) et éventuellement (B) et (D), selon les conditions stoechiométriques, à des températures de 20 à 150 °C et éventuellement en ajoutant des catalyseurs.

**20.** Procédé selon la revendication 19, caractérisé en ce que la réaction a lieu en présence de solvants organiques inertes.

**21.** Procédé selon les revendications 19 et/ou 20, caractérisé en ce que la réaction est mise en oeuvre jusqu'à ce que l'on ait pour le produit de réaction tel qu'obtenu un indice d'amine constant, et que la teneur du mélange réactionnel en cyclocarbonates soit égale à 0.

**22.** Procédé selon au moins l'une des revendications 19 à 21, caractérisé en ce qu'on ajoute aux aminouréthannes obtenus, de préférence dissous dans un solvant organique inerte miscible à l'eau, et tout en procédant à une neutralisation totale ou partielle des groupes amino basiques, des acides solubles dans l'eau et éventuellement de l'eau, de façon à obtenir un produit sous la forme d'une dispersion diluable à l'eau et pouvant être déposée par voie électrique.

**23.** Mélanges durcissables, caractérisés en ce qu'ils contiennent des aminouréthannes selon au moins l'une des revendications 1 à 18 ou qu'ils sont obtenus par le procédé selon au moins l'une des revendications 19 à 22.

**24.** Utilisation des aminouréthannes selon au moins l'une des revendications 1 à 18, ou obtenus par le procédé selon au moins l'une des revendications 19 à 22, en tant que liants dans des mélanges durcissables, en particulier des préparations de peinture.

**25.** Utilisation selon la revendication 24, caractérisée en ce qu'il s'agit de systèmes aqueux.

**26.** Utilisation selon la revendication 24 et/ou 25, en tant que peintures pour électrodéposition.

**27.** Utilisation selon la revendication 26, dans laquelle les groupes amino basiques sont neutralisés en totalité ou en partie.

**Revendications pour l'Etat contractant suivant : ES**

**1.** Procédé pour préparer des aminouréthannes, caractérisé en ce qu'on fait réagir à des températures de 20 à 150 °C, éventuellement en ajoutant des catalyseurs,
(A) des polyamines de formules générales (I) et/ou

(II)

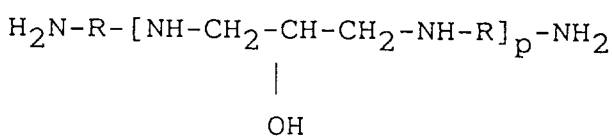

(I)

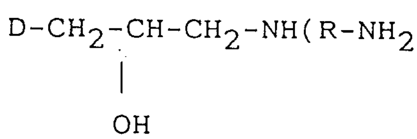

(II)

dans lesquelles :

R = $-[(CR^1R^2)_nZ^1-(CR^3R^4)_mZ^2-(CR^5R^6)_l]_k$,

$Z^1$ et $Z^2$ sont chacun O, S, NH, ou un radical N-alkyle ayant jusqu'à 8 atomes de carbone, N-phényle, N-mono-, -di- ou -trialkylphényle ayant de 1 à 4 atomes de carbone par groupe alkyle, un radical phénylène divalent, éventuellement substitué, et/ou une liaison chimique,

$R^1$ à $R^6$ sont chacun H, $CH_3$, $C_2H_5$ ou un radical phényle ou mono-, di- ou trialkylphényle ayant de 1 à 4 atomes de carbone par groupe alkyle,

n, m et l valent chacun de 0 à 12, avec $n + m + l \geqq 2$,

k vaut de 1 à 6 ;

p vaut de 1 à 5 ;

D est

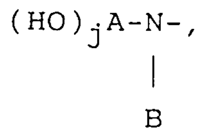

où A est un radical aliphatique ayant de 2 à 5 atomes de carbone, j vaut de 1 à 5 et B est H ou un radical alkyle en $C_1$-$C_4$ ou $(HO)_jA$-,

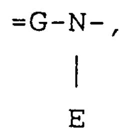

où G est un radical alkyle en $C_1$-$C_{18}$, cycloalkyle en $C_5$-$C_9$ pouvant être substitué par des groupes alkyle en $C_1$-$C_3$, et E est H ou G,

ou encore D est un radical alcoxy en $C_2$-$C_8$ ou acyloxy en $C_5$-$C_{15}$,

(B) éventuellement d'autres polyamines,

(C) avec de composés contenant en moyenne au moins deux groupes 2-oxo-1,3-dioxolanne terminaux par molécule et

(D) éventuellement, en tant que rupteurs de chaîne, des composés à réaction monofonctionnelle.

**2.** Procédé selon la revendication 1, caractérisé en ce que la réaction a lieu en présence de solvants organiques inertes.

**3.** Procédé selon les revendications 1 et/ou 2, caractérisé en ce que la réaction est mise en oeuvre jusqu'à ce que l'on ait pour le produit de réaction tel qu'obtenu un indice d'amine constant, et que la teneur du mélange réactionnel en cyclocarbonates soit égale à 0.

**4.** Procédé selon au moins l'une des revendications 1 à 3, caractérisé en ce qu'on ajoute aux aminouréthanne obtenus, de préférence dissous dans un solvant organique inerte miscible à l'eau, et tout en procédant à une neutralisation totale ou partielle des groupes amino basiques, des acides solubles dans l'eau et éventuellement de l'eau, de façon à obtenir un produit sous la forme d'une dispersion diluable à l'eau et pouvant être déposée par voie électrique.

**5.** Procédé selon au moins l'une des revendications 1 à 4, caractérisé en ce que, dans les formules (I)/(II):

$Z^1$, $Z^2$ sont chacun O, NH ou un radical N-alkyle en $C_1$-$C_6$ ou une liaison chimique ;

$R^1$ à $R^6$ sont chacun H, $CH_3$ ou $C_2H_5$ ;

n, m, l valent chacun de 0 à 6 ;

k vaut de 1 à 3 ;

p vaut 1 ou 2.

**6.** Procédé selon au moins l'une des revendications 1 à 5, caractérisé en ce que R est un radical hydrocarboné divalent ayant de 1 à 18 atomes de carbone, pouvant être interrompu par des groupes NH.

**7.** Procédé selon au moins l'une des revendications 1 à 6, caractérisé en ce que R est un radical d'un composé choisi parmi l'ensemble comprenant la 1,6-hexanediamine, dont les groupes méthyle sont éventuellement en outre substitués par un ou deux groupes méthyle ou éthyle, triméthylhexaméthylènediamine, 2-méthylpentanediamine, 2-éthylbutanediamine, 6,6'-imino-bis-hexylamine, 4,7-dioxadécane-1,10-diamine, 4,9-dioxadécane-1,12-diamine, 4,7,10-trioxatridécane-1,13-diamine ou polyoxypropylènediamine ayant une masse moléculaire moyenne d'environ 200 à 400.

**8.** Procédé selon au moins l'une des revendications 1 à 7, caractérisé en ce que les polyamines (B) ont la formule (III)

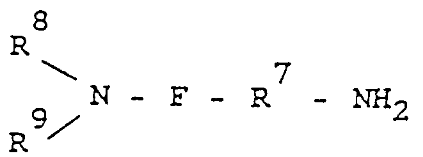

(III)

dans laquelle

$R^7$ est un radical hydrocarboné divalent, de préférence un radical alkylène à chaîne droite ou ramifiée ayant de 2 à 18 atomes de carbone et pouvant éventuellement porter des groupes inertes,

$R^8$ et $R^9$, qui sont identiques ou différents, représentent chacun un hydrogène ou un radical alkyle ayant de 1 à 8 atomes de carbone ou hydroxyalkyle ayant de 1 à 8 atomes de carbone dans le fragment alkyle, $R^8$ et $R^9$ pouvant aussi représenter un composé cyclique,

F est une liaison chimique ou encore $-(R^7-NH)_r-R^7-NH-$, où r vaut 0 ou est un nombre entier de 1 à 6, et $R^7$ a les significations ci-dessus.

**9.** Procédé selon au moins l'une des revendications 1 à 8, caractérisé en ce que les composés (C) ont la formule générale (IV)

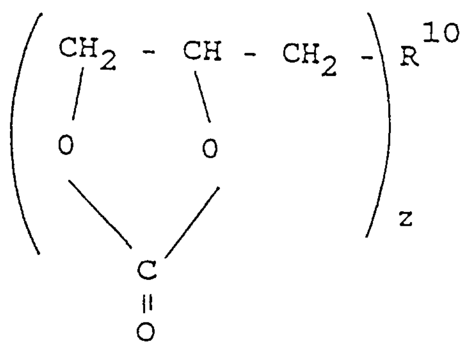

(IV)

dans laquelle

$R^{10}$ est un résidu z-valent d'un polyéther, d'un polyétherpolyol, d'un polyester, d'un polyester polyol, pouvant éventuellement contenir aussi des groupes ($NR^2$), ou $R^2$ est un hydrogène ou un radical alkyle ayant de 1 à 8 atomes de carbone ou hydroxyalkyle ayant de 1 à 8 atomes de carbone, ou bien

un résidu hydrocarboné z-valent, de préférence un résidu alkylène ayant de 2 à 18 atomes de carbone et pouvant éventuellement porter des groupes inertes, ou bien

un résidu poly(sec-amine) z-valent, ou bien

le résidu z-valent d'un produit de la réaction d'un composé époxycarbonate avec des polyamines, des polyols, des polycaprolactonepolyols, des polyesters hydroxylés, des polyéthers, des polyglycols, des huiles polymères hydroxylées, carboxylées et aminées ayant une masse moléculaire moyenne de 800 à 10 000, des acides polycarboxyliques, des polytétrahydrofurannes hydroxylés ou aminés, et les produits de la réaction de polyamines et d'esters glycidyliques d'acides $\alpha,\alpha$-dialkylalcanemonocarboxyliques de formule brute $C_{12-14}H_{22-26}O_3$, ou encore avec des esters glycidyliques de l'acide Versatic$^{(R)}$

z vaut de 2 à 5 et de préférence 2.

**10.** Procédé selon au moins l'une des revendications 1 à 9, caractérisé en ce que, pour ce qui est des rupteurs de chaîne (D), il s'agit de monocarbonates, de monoépoxydes, de polyisocyanates partiellement bloqués en bout ou de composés aminés ne comportant qu'un groupe amino primaire.

**11.** Procédé selon la revendication 10, caractérisé en ce que les rupteurs de chaîne (D) ont la formule (VI)

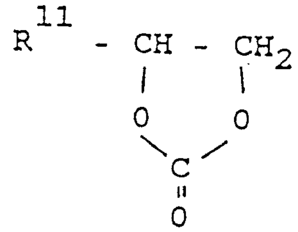

(VI)

dans laquelle $R^{11}$ est un hydrogène ou un radical alkyle ayant de 1 à 18 et de préférence de 1 à 10 atomes de carbone, ou encore un résidu d'un ester glycidylique d'un acide Versatic$^{(R)}$, un ester glycidylique ou un oxyde de glycidyle.

**12.** Procédé selon la revendication 11, caractérisé ence que les rupteurs de chaîne (D) ont la formule (II).

**13.** Procédé selon au moins l'une des revendications 1 à 12, caractérisé en ce que les composé (A) et (C) et éventuellement (B) et (D) sont utilisés en des quantités telles que la quantité de (A) dans l'aminouréthanne est de 5 à 60 % en moles, celle de (B) est de 0 à 60 % en moles, celle de (C) est de 25 à 70 % en moles et celle de (D) est de 0 à 70 % en moles.

**14.** Procédé selon au moins l'une des revendications 1 à 13, caractérisé en ce que les aminouréthannes obtenus ont la formule (VII)

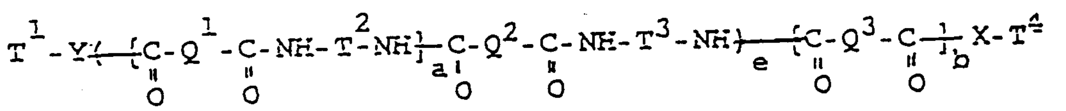

(VII)

dans laquelle

a, b et e représentent chacun un nombre de 0 à 5, avec $b \geqq 1$ quand $e = 0$ et $0 \leqq a$ et $b \leqq 5$ quand $\geqq 1$,

X est -HN-M-NH- quand $b \geqq 1$, ou encore est une liaison chimique quand $b = 0$,

Y est -HN-M-NH-,

M = $-(CH_2)_6-NH-(CH_2)_6-$ ou

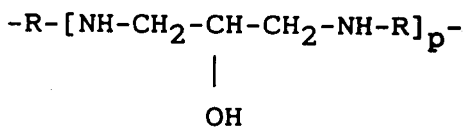

avec p = 1 à 5, et R a les significations données dans la revendication 1,

$T^1$ et $T^4$ sont identiques ou différents et sont chacun

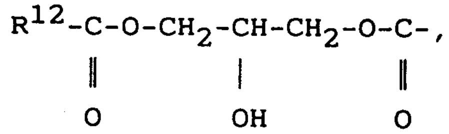

dans laquelle $R^{12}$ est un radical alkyle en $C_5$ à $C_{15}$, de préférence ramifié,

$T^2$ et $T^3$ sont chacun M ou un résidu polyéther aliphatique linéaire ayant une masse moléculaire moyenne allant jusqu'à 400, $T^2$ et $T^3$ pouvant être identiques ou différents,

$Q^1$,$Q^3$ =

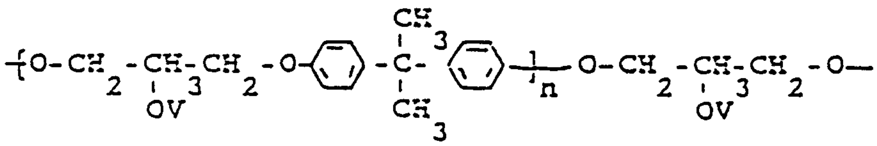

où n vaut 1-3, $Q^1$ et $Q^3$ pouvant être identiques ou différents, et $V^3$ est un hydrogène ou un groupe de formule VIII selon la revendication 12, et

$Q^2$ =

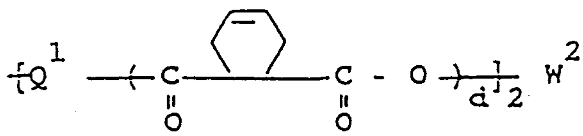

dans laquelle d = 0 ou 1 et $W^2$ est un radical à double liaison choisi parmi l'ensemble comprenant les polyesters alcools aliphatiques linéaires ayant une masse moléculaire moyenne allant jusqu'à 2000, les polyéthers aliphatiques à chaîne droite ou ramifiée ayant une masse moléculaire allant jusqu'à 2000.

**15.** Procédé selon au moins l'une des revendications 1 à 14, caractérisé en ce que les aminouréthannes obtenus ont la formule (VII)

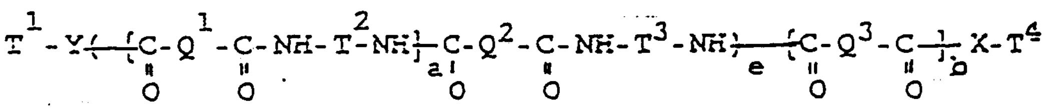 (VII)

dans laquelle

$T^1$ et $T^4$ sont identiques ou différents et représentent chacun un groupe de formule (VIII)

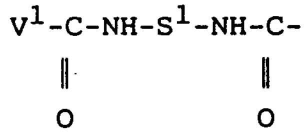 (VIII)

dans laquelle $V^1$ est un résidu organique d'un composé à hydrogène actif de formule $H\text{-}V^1$ choisi parmi l'ensemble comprenant les monoalcools ayant de préférence de 1 à 15 atomes de carbone, aliphatiques, cycloaliphatiques, alkylaromatiques ou substitués par des N-hétérocycles, ou encore des alcools en $C_2$ à $C_5$ substitué par des groupes amino, des groupes alcoxy en $C_1$-$C_6$, des groupes phényloxy ou des groupes phényloxy substitués, ou encore les oximes de cétones aliphatiques en $C_3$-$C_8$, ou encore les composés N-H-azides hétérocycliques ayant jusqu'a 8 atomes de carbone, ou encore les composés C-H-azides ayant jusqu'à 8 atomes de carbone, et $S^1$ est un radical toluylène 2,4- et/ou 2,6-disubstitué, ou encore le radical méthylènetriméthylcyclohexanyle de formule

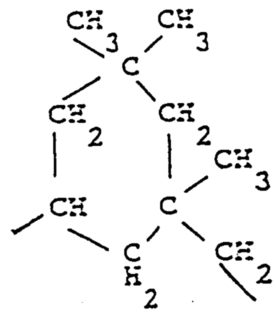

et les symboles a, b, e, X, Y, $T^2$, $T^3$, $Q^1$, $Q^2$ et $Q^3$ ont les significations données dans la revendication 14.

**16.** Procédé selon au moins l'une des revendications 1 à 14, caractérisé en ce que les aminouréthannes obtenus ont la formule (VII)

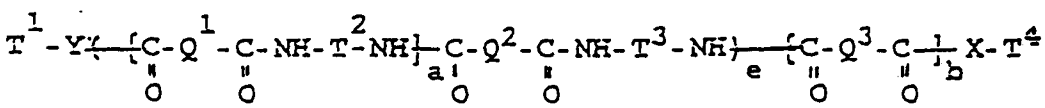 (VII)

dans laquelle
$T^1$ et $T^4$ sont identiques ou différents et représentent chacun un groupe de formules (Ia) ou (IIa)

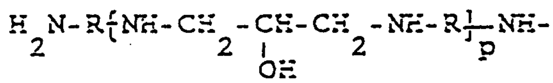 (Ia)

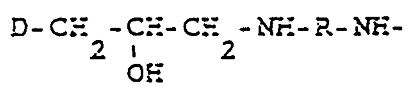 (IIa)

dans laquelle R, D et p ont les significations données dans les formules (I) et (II) selon la revendication 1, X et Y représentent chacun une liaison chimique, b est un nombre de 1 à 5 et les symboles a, e, $T^2$, $T^3$, $Q^1$, $Q^2$ et $Q^3$ ont les significations données dans la revendication 13.

**17.** Procédé selon au moins l'une des revendications 1 à 14, caractérisé en ce que les aminouréthannes obtenus ont la formule (VII)

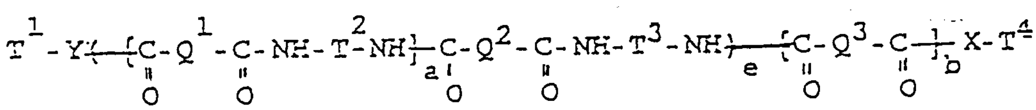 (VII)

dans laquelle
$T^1$ et $T^4$, qui sont identiques ou différents, représentent chacun un groupe de formule

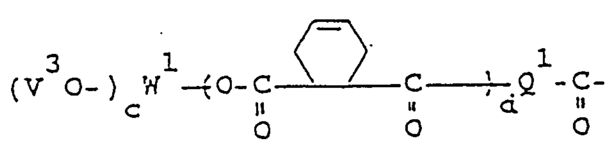

dans laquelle c vaut de 1-3, d vaut 0 ou 1, $V^3$ est un hydrogène ou un groupe de formule VIII selon la

revendication 12, $W^1$ est un résidu divalent à tétravalent choisi parmi l'ensemble comprenant les polyesteralcools aliphatiques à chaîne droite ou ramifiée ayant une masse moléculaire moyenne allant jusqu'à 1000, les résidus du triméthylolpropane, du pentaérythritol, de l'éthylèneglycol, du propylèneglycol, de la polycaprolactone trihydroxyfonctionnelle, et les symboles a, b, e, X, $T^2$, $T^3$, $Q^1$, $Q^2$ et $Q^3$ ont les significations données dans la revendication 14.

**18.** Procédé selon au moins l'une des revendications 1 à 14, caractérisé en ce que les aminouréthannes obtenus ont la formule (VII)

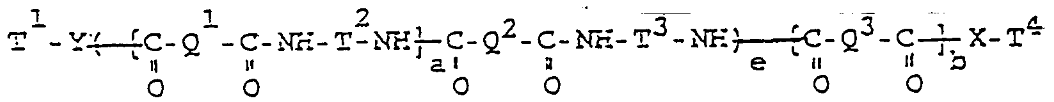
(VII)

dans laquelle $T^1$ est un hydrogène quand Y est -HN-M-NH-, et $T^4$ est un hydrogène quand b vaut 0 et X est une liaison chimique,

et les symboles a, b, e, X, Y, M, $T^2$, $T^3$, $Q^1$, $Q^2$ et $Q^3$ ont les significations données dans la revendication 14.

**19.** Procédé selon au moins l'une des revendications 1 à 18, caractérisé en ce que tout ou partie des groupes hydroxyle et/ou amino présents ont réagi avec des polyisocyanates partiellement coiffés en bout.

**20.** Procédé selon au moins l'une des revendications 1 à 19, caractérisé en ce que, dans les composés de formule (VII), les groupes amino basiques sont en totalité ou en partie neutralisés par des acides ou des substances à effet neutralisant, et les aminouréthannes se présentent sous la forme d'une dispersion diluable à l'eau et pouvant être déposée par voie électrique.

**21.** Mélanges durcissables, caractérisés en ce qu'ils contiennent des aminouréthannes obtenus par le procédé selon au moins l'une des revendications 1 à 20.

**22.** Utilisation des aminouréthannes obtenus par les procédés selon au moins l'une des revendications 1 à 20, comme liant dans des mélanges durcissables, notamment des préparations de peinture.

**23.** Utilisation selon la revendication 22, caractérisée en ce qu'il s'agit de systèmes aqueux.

**24.** Utilisation selon la revendication 22 et/ou 23, en tant que peintures pour électrodéposition.

**25.** Utilisation selon la revendication 24, dans laquelle les groupes amino basiques sont neutralisés en totalité ou en partie.